# EUROPÄISCHE PATENTSCHRIFT

(11) **EP 2 836 562 B1**
(45) Veröffentlichungstag und Bekanntmachung des Hinweises auf die Patenterteilung: **02.11.2016**
(21) Anmeldenummer: 13714666.8
(22) Anmeldetag: 09.04.2013
(51) Int. Cl.: C09D 181/00

(54) **GRUND- UND DICHTMASSEN AUF BASIS SCHWEFEL-HALTIGER POLYMERE MIT EINEM PHOTO-INITIATOR, VERFAHREN ZUM AUSHÄRTEN UND ZUM BESCHICHTEN SOWIE IHRE VERWENDUNG**
MATRICES AND SEALANTS WHICH ARE BASED ON SULFUR-CONTAINING POLYMERS AND WHICH COMPRISE A PHOTOINITIATOR, CURING AND COATING METHODS, AND USE OF SAID MATRICES AND SEALANTS
MATIÈRES DE BASE ET MATIÈRES D'ÉTANCHÉITÉ À BASE DE POLYMÈRES SOUFRÉ DOTÉS D'UN PHOTOINITIATEUR, PROCÉDÉ DE DURCISSEMENT ET DE REVÊTEMENT, ET UTILISATION DESDITES MATIÈRES

(30) Priorität: 12.04.2012 DE 102012205951
(43) Veröffentlichungstag der Anmeldung: 18.02.2015
(73) Patentinhaber: Chemetall GmbH, 60487 Frankfurt am Main (DE)
(72) Erfinder: KRALEV, Miroslav, 60489 Frankfurt am Main (DE); SIEVERS, Björn, 60487 Frankfurt am Main (DE); BONS, Peter, 61203 Reichelsheim (DE); DIEZ, Francisco, 64546 Mörfelden-Walldorf (DE)
(74) Vertreter: Hübner, Günter
(86) Internationale Anmeldenummer: PCT/EP2013/057353
(87) Internationale Veröffentlichungsnummer: WO 2013/153047

(56) Entgegenhaltungen:
- WO-A1-2008/111995
- WO-A1-2009/010423
- US-A1- 2009 135 462

## Beschreibung

Die Erfindung betrifft Verfahren zum Aushärten und Verfahren zum Beschichten eines Substrats mit einer ungehärteten Mischung B bzw. Dichtmasse sowie zum Herstellen einer ausgehärteten Dichtmasse. Hierbei können Insbesondere metallische Substrate oder beschichtete metallische Substrate, aber auch Substrate aus anderen Werkstoffgruppen beschichtet werden. Als Elemente werden hierbei insbesondere Konstruktionselemente verstanden. Grundmassen mit einem Zusatz eines Härters und Dichtmassen dienen hierbei auch zum Beschichten von Substraten, zum Verbinden oder/und Verkleben von Elementen sowie zum Abdichten oder/und zum Verfüllen von Hohl- oder/und Zwischenräumen von Elementen.

Im Folgenden wird der Begriff "Dichtmasse" im Sinne dieser Erfindung so eingesetzt, dass er neben der ausgehärteten Dichtmasse auch den Begriff der in Aushärtung begriffenen Grundmasse umfasst. Die Begriffe "Grundmasse" und "(ungehärtete) Grundmasse A" bezeichnen ein Gemisch, das noch nicht mit einem Härter angemischt ist. Der Begriff "Mischung B" bezeichnet ein Gemisch aus einer ungehärteten Grundmasse A und einem Härter, das nach dem Anmischen mit einem Härter als ungehärtete Grundmasse oder als schon in Härtung begriffene Dichtmasse zum Einsatz - d.h. insbesondere für das Beschichten eines Substrats - vorbereitet ist und ab dem Beginn des Aushärtens und nach dem Aushärten mit dem Härter als Dichtmasse bezeichnet wird. Im Folgenden wird bei allgemein geltenden Aussagen vereinfacht nur von Grund- und Dichtmassen statt differenziert von Grundmassen, von Mischungen mit dem Härter und von Dichtmassen gesprochen.

Die Mischungen B und Dichtmassen werden für die unterschiedlichsten Zwecke eingesetzt. Sie sind vor allem für die Luft- und Raumfahrt von Interesse, aber auch überall dort, wo aufgrund einer größeren Menge an Grund- bzw. Dichtmasse auf eine schnelle Aushärtung auf Befehl besonders geachtet werden muss wie z.B. auch bei Land- und Luftfahrzeugen. Sie dienen insbesondere zum Abdichten von Konstruktionselementen, zum Verbinden z.B. von Blechen mit vorhandenen Strukturen wie z.B. Segmenten eines Flugzeugs oder/und zum Korrosionsschutz an Stellen, wo z.B. im Bereich von Bohrungen die Korrosionsschutzschichten der metallischen Elemente verletzt oder entfernt werden. Sie können vorübergehend auch eine tragende Funktion z.B. während des Transports von im Aufbau befindlichen Strukturen übernehmen, die nachträglich noch mit dauerhaften tragenden Verbindungselementen ausgestattet werden.

Besondere Anforderungen werden an Grund- und Dichtmassen für die Herstellung und Instandhaltung von Luft- und Raumfahrzeugen gestellt: Dabei stehen Abdichtung z.B. der Kraftstofftanks, Korrosionsschutz, aerodynamische Glättung und Abdichtung des Druckrumpfes, die Elastizität über einen weiten Temperaturbereich, die Beständigkeit gegen verschiedene Medien wie z.B. Treibstoff, Hydraulikflüssigkeit, Kondenswasser und Enteisungsflüssigkeit sowie eine gute Dicht- und Haftwirkung auf verschiedensten Substraten im Vordergrund.

Bisher ist die Herstellung und Instandhaltung von Luft- und Raumfahrzeugen mit einer großen Zahl an Verbindungsstellen mit Dichtmassen außerordentlich aufwändig, da die bisher eingesetzten Dichtmassen, insbesondere solche mit einer langen Verarbeitungszeit, eine sehr lange Zeit für die vollständige Aushärtung erfordern.

Der Nachteil bei den bekannten Dichtmassen und Verfahren für ihre Verarbeitung und Aushärtung liegt darin, dass bei einer gegebenen einzuhaltenden Verarbeitungszeit zu wenig Katalysator in die Dichtmasse eingebracht werden kann, um die Aushärtung im gewünschten Maße zu beschleunigen. Dies führt insbesondere bei langen Verarbeitungszeiten dazu, dass die Dichtmassen aufgrund ihrer damit verbundenen langen Aushärtungszeiten Arbeitsprozesse stark verzögern. Eine schnelle Durchhärtung ist aber auch bei Dichtmassen mit langer Verarbeitungszeit erforderlich.

Die heute eingesetzten am schnellsten härtenden Dichtmassen, die mercaptotorminierte Basispolymere enthalten, erlauben eine Verarbeitungszeit von nur etwa 10 oder 15 Minuten, wenn sie bei der Aushärtung innerhalb von 60 Minuten eine Shore A-Härte von 30 erreichen sollen. Diese Vorgabe wird nur mit großer Mühe und bei besonderen Dichtmassenzusammensetzungen erreicht.

Dabei besteht auch das Problem, dass bei den zweikomponentigen und vorzugsweise raumtemperaturhärtenden Dichtmassen die Zeit zum Erreichen der klebfreien Zeit und die Durchhärtezeit erheblich länger als die Verarbeitungszeit sind - siehe Tabelle 1. Die konventionellen Beschichtungsverfahren sind daher oft mit außerordentlich langen Taktzeiten in der Produktion verbunden - siehe Tabelle 2.

Als Kriterium für einen gewissen Grad der Aushärtung kann die Zeit bis zum Erreichen einer Shore A-Hätte von 30 definiert nach ISO 7619 verwendet werden. Außerdem ist die klebfreie Zeit als Maß für die an der Dichtmassenoberfläche beginnende Härtung der Dichtmasse von großer Bedeutung. Daher soll die Verarbeitungszeit möglichst lang und sollen die klebfreie Zeit und die Durchhärtezeit möglichst kurz sein. Bei diesen Parametern wird meist von der Verarbeitungszeit ausgegangen, während die klebfreie Zeit und die Durchhärtezeit mit dem Dichtmassentyp im Wesentlichen festgelegt werden. Tabelle 1 definiert die bei der Aushärtung von Dichtmassen wichtigen Zeitparameter. Tabelle 2 gibt eine Übersicht über typische Zeiten bei der Aushärtung von Dichtmassen mit mercaptoterminiertem Basispolymer nach dem Stand der Technik und im Vergleich zur Erfindung.

**Tabelle 1: Begriffserläuterung der für die Dichtmassen relevanten Verarbeitungszeiten nach DIN 65262-1**

| Begriff | Definition |
|---|---|
| Verarbeitungszeit | Zeitspanne ab dem Anmischen von Grundmasse und Härter bzw. Aushärtungsbeginn bis die Dichtmasse aufgrund des Viskositätsanstiegs nicht mehr applizierbar ist. |
| Klebfreie Zeit | Zeitspanne ab dem Anmischen von Grundmasse und Härter bzw. Aushärtungsbeginn bis zum Erreichen einer klebfreien Oberfläche der Dichtmasse. |
| Durchhärtezeit | Zeitspanne ab dem Anmischen von Grundmasse und Härter bzw. Aushärtungsbeginn bis zum Erreichen einer Anfangshärte Shore A 30. |

**Tabelle 2: Übersicht über Trends und ausgewählte typische Zeiten bei der Aushärtung von Dichtmassen nach dem Stand der Technik und nach der Erfindung für mercaptoterminiertes Basispolymer**

| Begriff | konventionelle Dichtmassen | | | Dichtmassen gemäß Erfindung | | | |
|---|---|---|---|---|---|---|---|
| Verarbeitungszeit [min] | 10-15 | 240 | 3.600 | 15 | 60 | 240 | 720-1440 |
| Klebfreie Zeit [min] | 30-120 | 360-1600 | ca. 60.000 | 0,2-2 | 0,2-2 | 0,2-2 | 0,2-2 |
| Durchhärtezeit [min] | 60-240 | 1.44.0-2.880 | 86.400-100.800 | 15-30 | 48-96 | 150-300 | 360-720 |

Bisher ist die Anwendung von Dichtmassen bei der Herstellung oder der Instandhaltung von Luftfahrzeugen ein sehr aufwändiger Prozess. Grund dafür sind die zahlreichen Verbindungsstellen mit Dichtmassen, bei denen Dichtmassen mit oft sehr langer Verarbeitungszeit von etwa 12 bis etwa 60 Stunden verwendet werden müssen, die dann aber bisher proportional zur Länge der Verarbeitungszeit eine sehr lange Zeit für die vollständige Aushärtung und eine recht lange klebfreie Zeit bedingen. Zum Beispiel benötigt eine Zwischenlagendichtmasse der Klasse C für den Luftfahrtbereich bei einer Verarbeitungszeit von 60 Stunden typischerweise 60 bis 70 Tage zum Erreichen der Shore A-Härte von 30. Außerdem benötigen die konventionellen Dichtmassen der Typen A und B, die üblicherweise flächig oder in Form einer Raupe zum Beschichten von Bolzen, Nieten oder anderen Konstruktionselementen verwendet werden, bei einer Verarbeitungszeit von 30 Minuten typischerweise 2 bis 5 Stunden, um klebfrei zu werden, und typischerweise 5 bis 8 Stunden bis zum Erreichen der Shore A-Härte von 30.

Mit der vorliegenden Erfindung kann der Zeitaufwand erheblich reduziert werden durch die viel kürzere Klebfreizeit und durch die viel kürzere Durchhärtezeit bei gleichzeitig ausreichend langer Verarbeitungszeit. Hierdurch kann der Zeittakt für die weitere Verwendung der mit Dichtmasse beschichteten Komponenten deutlich verkürzt werden.

Die Problematik der konventionellen hochwertigen zweikomponentigen Dichtmassen auf Basis von mercaptoterminiertem Basispolymer besteht darin, dass ein vergleichsweise hoher Gehalt an freiem Katalysators benötigt wird, um eine schnelle Durchhärtung und eine schnelle klebfreie Zeit zu erzielen. Dabei verringert sich die Verarbeitungszeit der Dichtmasse proportional zur Verringerung der klebfreien Zelt sehr.

Konventionelle schnell härtende Polysulfid- oder Polythioether-basierte Dichtmassen werden bei einer Verarbeitungszeit von z.B. nur 15 min erst nach etwa 50 bls 120 min klebfrei und erreichen eine Shore A-Härte von 30 typischerweise erst nach etwa 90 bis 240 Minuten (Vergleichsbeispiel VB2). Dabei Ist es schwierig, bei einer Verkürzung dieser Zeiten durch Erhöhung der Vernetzungsgeschwindigkeit auch gute physikalische Eigenschaften wie Zugfestigkeit und Bruchdehnung beizubehalten.

Als Kriterium für die mechanische Belastbarkelt einer In der Aushärtung befindlichen, langsamer aushärtenden Dichtmasse wird häufig neben oder anstatt der Zugscherfestigkeit eine Shore A-Härte von mindestens 35 oder sogar nur von 30 herangezogen, bei der sich die Dichtmasse nicht mehr plastisch verformen lässt und nicht mehr z.B. beim Transport verschmiert wird. Eine typische Shore A-Härte für eine vollständig ausgehärtete Dichtmasse liegt häufig bei 45 +/-10.

DE 101 08 136 A1 beschreibt schnell härtende Dichtmassen mit einer langen Verarbeitungszeit. Es werden dort Temperatur, IR-Strahlung oder mechanische Kräfte als Auslöser für die schnelle Härtung sowie verkapselte oder deaktivierte Katalysatoren verwendet, um die Verarbeitungszeit möglichst lang zu halten.

US 3,645,816 beschreibt ein Verfahren für die Abdichtung von Lecks in Flüssigkeitstanks z.B. unter Verwendung von Polysulfiddichtmasse, wobei zur Beschleunigung der Aushärtung die Erwärmung der Dichtmasse auf eine Temperatur von 60 bis 65 °C empfohlen wird, um eine besonders schnelle klebfreie Zeit und Aushärtung zu erzielen, die jedoch nur bei bestimmten Dichtmassen genutzt werden können. Ein Erwärmen von großen oder schwer zugänglichen Substraten ist jedoch sehr schwierig.

Es sind UV-härtbare ein- oder zweikomponentige raumtemperaturhärtende Beschichtungen bekannt, die keine Schwefel-haltigen Polymere aufweisen und die nicht die besonders hochwertigen Eigenschaften von Flugzeugdichfimassen wie z.B. hohe Beständigkeit gegen verschiedene Medien wie Treibstoff, Hydraulikflüssigkeit, Kondenswasser und Enteisungsflüssigkeit zeigen, Sie basieren meistens auf UV-härtbaren Gemischen mit Acrylat-Prepolymeren mit Doppelbindungen, die in Anwesenheit eines Photoinitiators als Radikalerzeuger radikalisch polymerisieren und aushärten können. Ohne UV-Strahlung wird bei diesen Dichtmassen jedoch keine vollständige Aushärtung erzielt.

Außerdem gibt es auf dem Markt der Dichtmassen kaum Isocyanat-härtende mercaptoterminierte Polymer-Systeme, weil diese oft viel zu schnell oder/und unkontrollierbar härten und weil die Aushärtung unkontrollierbar erfolgt.

Ein seit Jahrzehnten und bisher vergeblich gehegter Wunsch bei der Entwicklung von Grund- und Dichtmassen ist es, eine Grund- und Dichtmasse vorzuschlagen, die bel Raumtemperatur oder nur geringfügig höheren Temperaturen als Raumtemperatur eine Verarbeitungszeit von z.B. mindestens 0,5 Stunden, mindestens 4 Stunden oder sogar etwa 10 Stunden ermöglicht, ohne hierbei zum Aushärten ein Vielfaches dieser Zeit als Durchhärtezeit zu benötigen. Ein ebenso sehr lange und vergeblich gehegter Wunsch ist es, eine Grund- und Dichtmasse vorzuschlagen, die auf Befehl auszuhärten beginnt.

Es bestand die Aufgabe, eine Grund- und Dichtmasse sowie ein Verfahren zum Beschichten von Substraten mit dieser Dichtmasse mit mercaptoterminierten Polymeren vorzuschlagen, bei denen unter Beibehaltung von langen Verarbeitungszeiten möglichst kurze Aushärtungszeiten erreicht werden. Für den Einsatz im Bereich der Luft- und Raumfahrt soll die Dichtmasse nach Möglichkeit die gleichen hochwertigen Eigenschaften erzielen können wie die dafür verwendeten konventionellen Dichtmassen. Zu diesen Eigenschaften gehören die hohe Beständigkeit gegen verschiedene Medien wie z.B. Treibstoffbeständigkeit bei Raumtemperatur, bei 60 °C und bei 100 °C, Hydraulikflüssigkeit, Kondenswasser und Enteisungsflüssigkeit, die hohe Temperaturbeständigkeit, die hohe Kälteflexibilität, die hohe Witterungsbeständigkeit, der hohe Schälwiderstand auf unterschiedlichen Substraten, die hohe Bruchdehnung und die hohe Zugfestigkeit.

Außerdem bestand die Aufgabe, eine Grund-und Dichtmasse insbesondere für die Luftfahrtindustrie vorzuschlagen, deren Härtung möglichst "auf Befehl" einsetzt. Im Falle eines fehlenden Befehls ist es gegebenenfalls auch vorteilhaft, wenn die Dichtmasse dennoch vollständig, wenn auch verlangsamt, aushärtet.

Es wurde jetzt gefunden, dass es möglich ist, Grundmassen und Dichtmassen herzustellen, die auf Befehl gehärtet werden können. Es wurde jetzt auch gefunden, dass es möglich. ist, Grundmassen und Dichtmassen herzustellen, die nach einer Bestrahlung mit energiereicher aktinischer Strahlung eine sehr kurze klebfreie Zeit haben und die eine Durchhärtezeit aufweisen können, die etwa in der Größenordnung der Verarbeitungszeit liegt- siehe Tabelle 2. Es wurde jetzt ferner gefunden, dass diese Grund- und Dichtmassen etwa die gleichen hochwertigen Eigenschaften aufweisen wie die konventionellen Grund- und Dichtmassen für die Luft- und Raumfahrtindustrie,

Die Aufgabe wird gelöst durch ein Verfahren zum Aushärten einer Mischung aus Grundmasse und Härter auf Basis Schwefel-haltiger Polymere, das dadurch gekennzeichnet Ist, dass die Aushärtung auf Befehl erfolgt und dass sie so schnell erfolgt, dass eine klebfreie Oberfläche der Dichtmasse ab Aushärtungsbeginn in einer klebfreien Zeit von 0,05 bis 5 Minuten erreicht wird. Der Aushärtungsbeginn einer Mischung B fällt in einer bevorzugten Ausführungsform mit dem Beginn der energiereichen aktinischen Bestrahlung zusammen. Vorzugsweise beträgt die klebfreie Zeit 0,1 bis 4, 0,2 bis 3 oder 0,3 bis 2 Minuten.

Daher kann bei den Grund- und Dichtmassen der vorliegenden Erfindung von einem **neuen Typ von Dichtmassen** gesprochen werden, der insbesondere für Flugzeuge geeignet ist, der eine relativ lange Verarbeitungszeit aufweist und der erst auf Befehl stärker zu härten beginnt, dann aber stark beschleunigt aushärtet. Denn diese Massen sind besonders schnell klebfrei.

Die Aufgabe wird auch gelöst durch ein Verfahren zum Beschichten eines Substrats mit einer Mischung B oder mit der hieraus gebildeten aushärtenden Dichtmasse, wobei die Mischung B und die Dichtmasse Schwefel-haltige Polymere enthält, das dadurch gekennzeichnet ist,
dass die Mischung B eine ungehärtete Mischung ist aus einer Grundmasse A und einem Härter mit einem Gehalt an Isocyanat,
dass die Grundmasse A ungehärtet ist und ein mercaptoterminiertes Basispolymer auf Basis von Polyether, Polythioether, Polysulfid, deren Copolymeren oder/und deren Mischungen enthält,
dass die ungehärtete Grundmasse A, der Härter oder beide mindestens einen Photoinitiator auf Basis von sterisch gehindertem tertiären Amin enthalten,
dass das als Härter verwendete Isocyanat der Mischung B eine durchschnittliche Funktionalität im Bereich von 1,5 bis 3,2 aufweist,
dass das mercaptoterminierte Basispolymer in der Grundmasse A einen Mercaptangehalt bezogen auf die reaktiven SH-Gruppen zum gesamten Basispolymer im Bereich von 0,8 bits 8 Gew.-% aufweist,
dass mindestens ein Photoinitiator beim Einwirken von energiereicher aktinischer Strahlung mindestens ein Radikal pro Molekül auf Basis von tertiärem Amin abspaltet, aus dem insbesondere durch H-Aufnahme ein aktiver Katalysator gebildet wird, der als Katalysator für die Härtung der Dichtmasse wirkt, und
dass die Mischung B ab dem Einwirken von energiereicher aktinischer Strahlung im Temperaturbereich von -10 bis +70 °C aushärtet, wobei sie ab Aushärtungsbeginn als Dichtmasse bezeichnet wird.

Hierbei kann es sich auch um ein Verfahren zum Verbinden von Elementen, zum Abdichten oder/und zum Verfüllen von Hohl- oder/und Zwischenräumen von Elementen mit einer ungehärteten Mischung B sowie zum Herstellen einer ausgehärteten Dichtmasse handeln.

Es wird keine erhöhte Temperatur benötigt, um den erfindungsgemäßen Photoinitiator zu aktivieren oder den hieraus gebildeten Katalysator als Katalysator zum Einsatz zu bringen, sondern nur eine energiereiche aktinische Strahlung wie z.B. UV-Licht. Auch das Ist einer der Vorteile der vorliegenden Erfindung, dass bei Raumtemperatur oder bei nur geringfügig höherer Temperatur als Raumtemperatur wie z.B. bei Temperaturen im Bereich von 10 bis 50 oder von 30 bis 40 °C gehärtet werden kann.

Belm Einwirken von energiereicher aktinischer Strahlung kann mindestens ein erfindungsgemäß verwendeter Photoinitiator mindestens ein Radikal pro Molekül auf Basis von tertiärem Amin abspalten, das insbesondere durch H-Aufnahme aktiviert wird und insbesondere als Katalysator für die Härtung wirkt. Hierbei ist es bevorzugt, dass der Photoinitiator beim Einwirken von energiereicher aktinischer Strahlung ein Amin freisetzt oder/und bildet und dass das freigesetzte oder/und gebildete Amin die Reaktion zwischen mercaptoterminiertem Basispolymer mit Isocyanat-basiertem Härter katalysiert. Besonders bevorzugt ist, dass der Photoinitiator die Reaktion von lsocyanat mit Mercaptan auslöst oder/und beschleunigt, wenn die Mischung B einer energiereichen aktinischen Strahlung ausgesetzt wird oder/und dass der Photoinitiator die Reaktion von Isocyanat mit Mercaptan auslöst oder/und beschleunigt, wenn die Mischung B einer energiereichen aktinischen Strahlung ausgesetzt wird.

Es wurde jetzt ebenfalls gefunden, dass schnell und auf Befehl härtende Dichtmassen mit hochwertigen Eigenschaften aus mercaptoterminierten Basispolymeren und geeigneten Additiven hergestellt werden können, wenn eine Isocyanathärtung gewählt wird und wenn Photoinitiatoren vorzugsweise in einer Menge zugesetzt werden, die bei energiereicher aktinischer Bestrahlung mindestens ein Radikal auf Basis von tertiärem Amin pro Molekül freisetzen und hierbei vorzugsweise einen Anteil im Bereich von 0,05 bis 5 Gew.-% oder im Bereich von 0,1 bis 4 Gew.-% an tertiärer Amin-Verbindung in Bezug auf die gesamte Zusammensetzung der erfindungsgemäßen Dichtmasse bilden. Dieser Anteil an tertiärem Amin ist offenbar ausreichend, um als Katalysator selbst bis zu etwa 7 mm dicke Schichten, Raupen oder Wülste von Dichtmassen aushärten zu lassen.

Beim Einwirken von energiereicher aktinischer Strahlung auf die Mischung B oder /und auf die bereits aushärtende Dichtmasse wird von mindestens einem Photoinitiator bei seiner Aufspaltung mindestens ein Radikal pro Molekül auf Basis von tertiärem Amin freigesetzt. Hierbei wird der Photoinitiator nicht wie sonst für eine radikalische Härtung wie z.B. von Acrylaten und Methacrylaten genutzt, sondern um eine chemische Reaktion von Isocyanat mit den mercaptoterminierten "Basispolymeren" ausgewählt aus Polymeren oder/und Copolymeren, die keine oder gegebenenfalls auch 0,001 bis 20 oder 0,5 bis 6 Gew.-% an Monomeren oder/und Oligomeren enthalten können, in Form einer Polyaddition auszulösen. Denn Acrylate und Methacrylate und andere organische Polymersysteme des Standes der Technik haben eine Vielzahl von Doppelbindungen, die bei den mercaptoterminierten Basispolymeren der vorliegenden Anmeldung üblicherweise fehlen. Außerdem wird bei der radikalischen Härtung von (Meth)acrylat vorwiegend oder nur das Benzoyl-Radikal benötigt, während bei der Härtung der mercaptoterminierten Basispolymere das aus dem α-Aminoalkyl-Radikal gebildete tertiäre Amin benötigt wird, während das Benzoyl-Radikal bei dem erfindungsgemäßen Verfahren nicht benötigt wird.

Die mercaptoterminierten Basispolymere lassen sich bei den Verfahren nach dem Stand der Technik nach Kenntnis des Anmelders nicht ohne Anteile von Verbindungen oder Gruppen mit Doppelbindungen wie z.B. auf Basis von (Meth)acrylat mit einem Photoinitiator radikalisch polymerisieren. Üblicherweise werden jedoch solche Anteile mit Doppelbindungen der erfindungsgemäßen Grund- bzw. Dichtmasse nicht zugegeben, so dass dann entsprechend der Kenntnis des Anmelders keine radikalische Härtung stattfinden kann.

Die chemische Zusammensetzung von vielen UV-härtbaren Beschichtungen des Standes der Technik basiert auf Acrylaten, deren Vernetzung durch Einstrahlung von UV-Licht ausgelöst wird, insbesondere bei Anwesenheit von Photoinitiatoren. Bei größeren Schichtdicken kann das UV-Licht jedoch nur teilweise in solche Beschichtungen eindringen, so dass ein Aushärten von Schichtdicken z.B. größer als 200 µm in der Praxis nicht praktikabel ist.

Die vorliegende Erfindung hingegen basiert auf der Ausnutzung der chemischen Reaktion von Isocyanatgruppen mit Mercaptogruppen in Anwesenheit von tertiärem Amin, das offenbar als Katalysator dieser Reaktion wirkt. Dabei ist es möglich, auch weit größere Schichtdicken der Dichtmasse als 200 µm durchzureagieren und insbesondere bis zu etwa 7 mm Schichtdicke auszuhärten, weil sich das vom Photoinitiator freigesetzte und dann zum katalytisch aktiven Amin umgebildete Amin offenbar über eine größere Entfernung durch die Dichtmasse verteilen kann.

Bei der vorliegenden Erfindung handelt es sich um eine chemische Härtung, wobei der erfindungsgemäße Photolnitiator zweckentfremdet wird und üblicherweise nur für das Freisetzen des Amin-Radikals und für das Bilden eines Katalysators auf Basis von tertiärem Amin verwendet wird, aber nicht als Photoinitiator im sonst genutzten eigentlichen Sinn.

Überraschenderweise wurde auch festgestellt, dass das erfindungsgemäße Verfahren sogar bei Aushärtungstemperaturen unter 0 °C gut funktioniert. Vorzugsweise wird dem chemischen System keine oder nahezu keine Wärme von außen zugeführt, sondern die Mischung B bzw. die Dichtmasse härtet ab dem Einwirken von energiereicher aktinischer Strahlung vorwiegend oder gänzlich im Temperaturbereich von -10 bis +60 °C oder von +5 bis +60 °C aus. Eine Temperatur oberhalb von 60 °C wird in dem erfindungsgemäßen Verfahren nur selten bereitgestellt oder erzeugt. Ein Vorteil des erfindungsgemäßen Verfahrens ist, dass keine erhöhten Temperaturen erforderlich sind. Außerdem könnten Temperaturen über 80 °C gegebenenfalls aufgrund der thermischen Ausdehnung Spannungen im Bauteil auftreten und die Qualität der benachbarten Komponenten wie Aluminiumlegierungen und Faserverbundwerkstoffe beeinträchtigen. Eine Erwärmung auf mehr als 40 °C oder sogar auf mehr als 60 °C auf wird meistens - wenn überhaupt-nur aufgrund der aktinischen Bestrahlung und der gegebenenfalls exothermen chemischen Reaktionen üblicherweise nur für eine Zeit im Bereich von etwa 1 bis 15 Minuten erreicht. Die Aushärtung erfolgt vorzugsweise bei Temperaturen im Bereich von 1 bis 60 °C, von 5 bis 50 °C, von 10 bis 40 °C, wobei in einzelnen Fällen auch über eine Zeit von nur 0,1 bis 15 Minuten eine Temperatur über 60 °C und bis 70 °C genutzt wird. Besonders bevorzugt wird die ganze Zeit im Bereich von 1 bis 40 °C ausgehärtet. Hierbei erfolgt die Aushärtung besonders bevorzugt die meiste Zeit oder gänzlich bei Temperaturen unter 40 °C.

Die erfindungsgemäße Grund- bzw. Dichtmasse weist bevorzugt mindestens einen **Photoinitiator** auf, der eine Verbindung auf Basis von mindestens einer tertiären Aminogruppen ist, die sterisch gehindert Ist. Die erfindungsgemäßen Photoinitiatoren können unterschiedliche Strukturen aufweisen. Eine wichtige Gruppe der erfindungsgemäß eingesetzten Photoinitiatoren sind α-Amlnoketone. Vorzugsweise ist oder wird der Photoinitiator ausgewählt aus solchen auf Basis von sterisch gehindertem Amin, der beim Einwirken von energiereicher aktinischer Strahlung ein tertiäres Amin freisetzt oder/und bildet. Bevorzugt sind Photoinitiatoren, die bei energiereicher aktinischer Bestrahlung 1, 2 oder 3 tertiäre Amin-Radikale abspalten oder/und mindestens eine Verbindung mit 1, 2 oder 3 tertiären Aminogruppen pro Molekül bilden.

Der erfindungsgemäße Photoinitiator ist gegebenenfalls ein latenter Katalysator, bei dem der aktive Katalysator erst freigesetzt bzw. gebildet wird. Aber solche Photoinitiatoren können gegebenenfalls auch vor einer energiereichen aktinischen Bestrahlung eine sehr geringe katalytische Wirkung aufweisen.

Der erfindungsgemäße Photoinitiator gehört vorzugsweise zur Klasse der α-Aminoketone. Denn der chemische Aufbau dieser Photoinitiatoren erlaubt das Freisetzen eines Amin-Radikals und das Bilden eines tertiären Amins nach energiereicher aktinischer Bestrahlung, das die Reaktion zwischen dem mercaptoterminierten Polymer and dem Isocyanat-basierten Härter startet oder/und beschleunigt. Auf diese Weise ist eine Verarbeitungszeit der erfindungsgemäßen Mischung B nach dem Anmischen der beiden Komponenten für eine Zeit oft im Bereich von 15 Minuten bis 48 Stunden gewährleistet, vorzugsweise von 20 Minuten bis 20 Stunden oder von 30 Minuten bis 4 Stunden - solange keine Bestrahlung mit energiereicher aktinischer Strahlung erfolgt. Die Mischung B ist insoweit eine ungehärtete Mischung, dass keine starke Härtung über die Zeit der Herstellung und Lagerung der Mischung B und seiner Ausgangsmassen eingesetzt hat.

Wenn die Grundmasse bzw. Dichtmasse einer energiereichen aktinischen Bestrahlung ausgesetzt wird, führt dies zu einer Härtung "auf Befehl", zu einer besonders schnellen Oberflächenhärtung, die durch die klebfreie Zeit angegeben wird, und zu einer schnellen Durchhärtung. Hierbei wird zuerst außen eine klebfreie Schicht gebildet, der eine schnelle Härtung in die Tiefe folgt. Hierbei werden oft Zeiten im Bereich von 0,01 bis 10 Minuten bei der klebfreien Zeit und 1 bis 1.000 Minuten bei der Durchhärtung je nach Schichtdicke erzielt. Hierbei werden oft Zeiten für Dichtmassen mit einer zu durchstrahlenden Dicke von 1 mm im Bereich von 0,01 bis 4 Minuten bei der klebfreien Zeit und 1 bis 200 Minuten bei der Durchhärtung je nach Schichtdicke erzielt. Hierbei werden oft Zeiten für Dichtmassen mit einer zu durchstrahlenden Dicke von 4 mm im Bereich von 0,01 bis 4 Minuten bei der klebfreien Zeit und 5 bis 800 Minuten bei der Durchhärtung je nach Schichtdicke erzielt. Hierbei werden oft Zeiten für Dichtmassen mit einer zu durchstrahlenden Dicke von 7 mm im Bereich von 0,01 bis 4 Minuten bei der klebfreien Zeit und 10 bis 1.000 Minuten bei der Durchhärtung je nach Schichtdicke erzielt.

Der Photoinitiator kann als Bestandteil der Grundmasse A oder/und des Härters enthalten sein. Der Photoinitiator ist daher auch Bestandteil der Mischung B, die für den Einsatz vorbereitet ist. Der Photoinitiator dient vorzugsweise als latenter Katalysator, der das tertiäre Amin bereitstellt, das als Katalysator wirkt.

Im Vergleich hierzu reagieren primäre oder/und sekundäre Amine mit Isocyanat auch ohne Aktivierung wie z.B. Erwärmung oder Bestrahlung. Sie sind im Rahmen dieser Erfindung jedoch ohne Bedeutung, da sie nicht oder nahezu nicht als Katalysatoren, sondern als Reaktionspartner wirken und bei der Reaktion Harnstoffderivate bilden, die ebenfalls nicht oder nahezu nicht als Katalysatoren dienen. Bei der Reaktion werden die katalytisch aktiven primären oder/und sekundären Amine verbraucht und zu nicht-katalytisch wirkenden Substanzen umgesetzt. Diese Substanzen stören aber in der Dichtmasse üblicherweise in kleinen Mengen nicht, sind aber auch nicht von Nutzen.

Mindestens ein Photoinitiator ist vorzugsweise eine Verbindung auf Basis von sterisch gehindertem tertiärem Amin entsprechend der allgemeinen Formel [1] 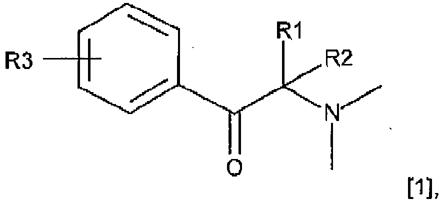 wobei ein, zwei oder drei tertiäre Aminogruppen pro Molekül anwesend sein können und wobei R1 unabhängig voneinander H, OH, CH₃, CH₃CH₂, tertiäres Amin N-(R4)₂, Cyclohexan, Toluol, Ethylbenzol oder Ethylmethylbenzol ist, wobei R2 unabhängig voneinander H, OH, CH₃, CH₃CH₂, N-(R4)₂, Cyclohexan, Toluol, Ethylbenzol oder Ethylmethylbenzol ist, wobei R3 unabhängig voneinander H, OH, CH₃, CH₃O, S-CH₃ oder Morpholin ist und wobei R4 unabhängig voneinander CH₃ oder CH₃CH₂ ist.

Entsprechend der vorliegenden Erfindung wird mindestens ein Photoinitiator auf Basis von sterisch gehindertem tertiärem Amin aufgrund der aktinischen Bestrahlung insbesondere entsprechend Gleichung (1) in mindestens zwei verschiedene Radikale aufgespalten. Hierbei entstehen mindestens ein Benzoyl-Radikal und mindestens ein α-Aminoalkyl-Radikal pro Molekül des Photoinitiators. Danach werden diese Radikale vorzugsweise zu Verbindungen entsprechend den Gleichungen (2) und (3) umgesetzt. Hierbei entstehen Benzaldehyde und Tertiäralkylamine.

### Gleichung (1):

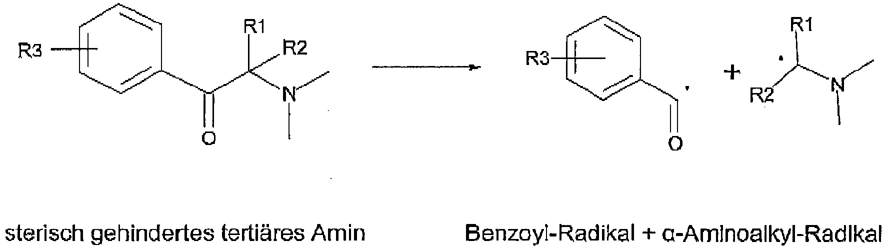

### Gleichungen (2) und (3):

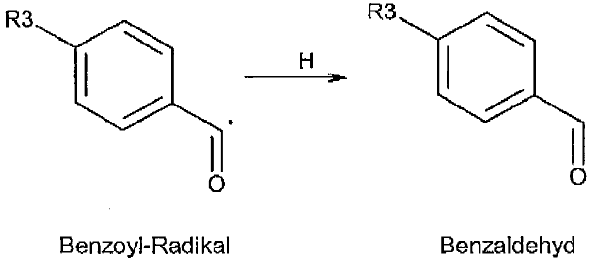

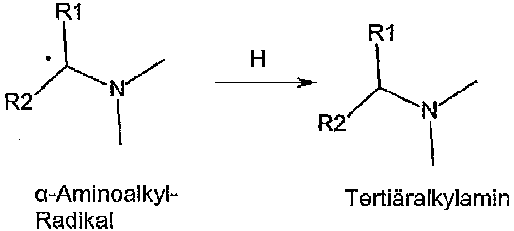

Die Tertiäralkylamine dienen hierbei als Katalysator, während die Benzaldehyde bei den mercaptoterminierten Polymersystemen üblicherweise nicht stören, aber auch keine positive Wirkung entfalten.

Bevorzugt ist, dass der Photoinitiator der erfindungsgemäßen Grundmasse bzw. Dichtmasse ein α-Aminoketon ist. Insbesondere ist es bevorzugt, dass mindestens ein Photoinitiator ein α-Aminoketon mit ein, zwei oder drei tertiären Aminogruppen und insbesondere mit einer Zahl an C-Atomen im Bereich von 10 bis 60 und mit einem Molekulargewicht im Bereich von 190 bis 750 g/mol ist. In bevorzugten Ausführungsformen wird hierbei der Photoinitiator in zwei verschiedene Radikale aufgespalten. Hierbei entstehen a) mindestens ein Benzoyl-Radikal mit einer Zahl an C-Atomen pro Radikal im Bereich von 8 bis 25, von 8 bis 20 oder von 8 bis 12 und mit einem Molekulargewicht im Bereich von 106 bis 270 g/mol, von 120 bis 240 g/mol oder von 176 bis 200 g/mol und b) mindestens ein α-Aminoalkyl-Radikal mit einer Zahl an C-Atomen pro Radikal im Bereich von 3 bis 30, von 8 bis 25 oder von 13 bis 20 und mit einem Molekulargewicht von 87 bis 400 g/mol, von 150 bis 300 g/mol oder von 192 bis 250 g/mol. Dann wird aus dem Radikal auf Basis von α-Aminoalkyl ein tertiäres Alkylamin durch H-Abstraktion gebildet mit einer Zahl an C-Atomen pro Molekül Im Bereich von 3 bis 30, von 8 bis 25 oder von 13 bis 20 und mit einem Molekulargewicht im Bereich von 87 bis 400 g/mol, von 150 bis 300 g/mol oder von 192 bis 250 g/mol. Das tertiäre Alkylamin weist eine höhere Basizität als der entsprechende Photoinitiator auf und wirkt offenbar als Katalysators.

Besonders bevorzugt sind Photoinitiatoren, die zur Gruppe der α-Aminoketone gehören und mindestens eine sterisch gehinderte Aminogruppe in der alpha-Position aufweisen, wie z.B. die Photoinitiatoren 2-Dimethylamino-2-(4-methyl-benzyl)-1-(4-morpholin-4-yl-phenyl)-butan-1-one, 2-Benzyl-2-dimethylamino-1-(4-morpholinophenyl)-butanone-1 oder/und 2-Methyl-1 [4-(methylthio)phenyl]-2-morpholinopropan-1-one.

In besonders bevorzugten Ausführungsformen werden die Photoinitiatoren wie z.B. 2-Dimethylamino-2-(4-methyl-benzyl)-1-(4-morpholin-4yl-phenyl)-butan-1-one oder/und 2-Benzyl-2-dimethylamino-1-(4-morpholinophenyl)-butanone-1 aufgrund der UV-Bestrahlung in das 4-Morpholinbenzoyl-Radikal und in Benzofethanamin,α-Ethyl-N,N,4-trimethyl-Radikal bzw. in das 4-Morpholinbenzoyl-Radikal und in Benzolethanamin,α-Ethyl,N,N,dimethyl-Radikal aufgespalten. Das Benzolethanamin,α-Ethyl-N,N,4-trimethyl-Radikal und das Benzolethanamin,α-Ethyl-N,N,dimethyl-Radikal haben üblicherweise noch keine katalytische Wirkung für die Härtungsreaktion. Danach kann aus einem Radikal wie z.B. aus Benzolethanamin,α-Ethyl-N,N,4-trimethyl-Radikal ein tertiäres Alkylamin wie z.B. Benzolethanamin,α-Ethyl-N,N,4.-trirnethyl durch H-Abstraktion gebildet werden. Die Aufnahme von Wasserstoff in das Radikal kann beispielsweise aus den Wasserstoffgruppen der anwesenden Polymere oder/und anderer anwesender organischer Verbindungen erfolgen. Die gebildeten tertiären Alkylamine weisen üblicherweise eine höhere Basizität als der Photoinitiator auf und wirken offenbar als Katalysator. Die höhere Basizität des neu gebildeten tertiären Amins im Vergleich zur Basizität des Photoinitiators ist grundsätzlich über den pKₛ-Wert messbar. Die höhere Basizität hat den Vorteil oder/und die Wirkung, dass die Reaktion zwischen Thiol und Isocyanat beschleunigt wird und dass die Dichtmasse besonders schnell aushärtet.

Die zuletzt genannten Photoinitiatoren werden nach dem Stand der Technik in Acrylat basierten UV-härtbaren Beschichtungen eingesetzt. Sie lösen dabei in der vorliegenden Erfindung auch überraschenderweise die Reaktion von Isocyanat mit Mercaptan aus oder/und beschleunigen sie, wenn die Mischung B einer energiereichen aktinischen Strahlung wie z*.*B. UV-Licht ausgesetzt wird. Es war überraschend, dass ein Photoinitiator, der vergleichsweise geringe Mengen an tertiärem Amin-Radikal freisetzt, ausreichende Mengen an tertiärer Amin-Verbindung mit katalytischer Aktivität für die Aushärtung von Grundmassen bereitstellt.

Außerdem können auch **Photosensibilisatoren** eingesetzt werden. Grundsätzlich kann hierbei jeder Photosensibilisator eingesetzt werden, der das Absorptionsspektrum in den gewünschten Wellenlängenbereich der zu nutzenden Strahlung und insbesondere in den UV-A Bereich verschiebt. Denn der UV-A-Bereich ist für größere Schichtdicken besonders geeignet, und UV-A-Strahlung verursacht keine Ozon-Bildung. Im Vergleich zu Photoinitiatoren verschieben die Photosensibilisatoren das Absorptionsspektrum beispielsweise vom kurzwelligen UV-Bereich von UV-C 200-280 nm oder/und UV-B 280-315 nm zum langwelligen UV-Bereich von UV-A 315-380 nm.

Daher können auch Mischungen von Photosensibilisatoren und Photoinitiatoren in vorteilhafter Weise verwendet werden, um die Absorptionswellenlänge(n) der Grundmasse bzw. Dichtmasse mit Hilfe von mindestens einem Photosensibilisator spezifisch einzustellen. Die verwendeten Photosensibilisatoren sind bevorzugt Photoinitiatoren, die kein tertiäres Amin freisetzen, aber die Absorptionswellenlängen in für die jeweilige Anwendung geeigneter Weise einstellen helfen. Beispiele hierfür sind Gemische z.B. ausgewählt aus mindestens einem Photosensibilisator ausgewählt aus Benzophenon und Isopropylthioxanthon ITX mit mindestens einem Photoinitiator auf Basis von sterisch gehindertem Amin wie z.B. 2-Dimethylamino-2-(4-methyl-benzyl)-1-(4-morpholin-4-yl-phenyl)-butan-1-one, 2-Benzyl-2-dimethylamino-1-(4-morpholinophenyl)-butanone-1 oder/und 2-Methyl-1[4-(methylthio)phenyl]-2-morpholinopropan-1-one.

Das **Härten** erfolgt durch chemische Reaktion der Mercaptogruppen mit den Isocyanatgruppen, wobei mindestens ein Thiourethan gebildet wird. Aufgrund der Abspaltung des Radikals vom Photoinitiator entfällt die sterische Hinderung. Erst durch die H-Aufnahme bildet sich aus dem Radikal der wirksame Katalysator, der eine erhöhte Basizität besitzt und nicht mehr sterisch gehindert ist.

Bei dem erfindungsgemäßen Verfahren wird mit dem Photoinitiator nicht oder nur untergeordnet das Freisetzen von Radikalen wie sonst bei einer radikalischen Vernetzung wie z.B. der UV-Härtung genutzt, sondern nur oder vorwiegend das Freisetzen eines Radikals und das Bilden eines Amins als Katalysator. Der Photoinitiator scheint dabei wie ein latenter Katalysator zu wirken. Nach der Abspaltung des Amin-Radikals vom Photoinitiator, nach der Bildung einer Amin-Verbindung und auch nach der Katalyse des Härtungsprozesses liegt das Amin weiterhin frei vor und wirkt auch nach dem Ende der energiereichen aktinischen Bestrahlung katalytisch weiter, so dass üblicherweise sogar eine katalytische Nachhärtung erfolgt Bei der katalytischen Nachhärtung setzt sich das Härten der Dichtmasse auch nach dem Ende der energiereichen Einstrahlung fort. Das ist im Vergleich zum Härten mit Acrylat-basierten Zusammensetzungen offenbar etwas Besonderes.

Durch das Einwirken von energiereicher aktinischer Strahlung wird die chemische Reaktion zwischen Basispolymer und Härter ausgelöst oder/und beschleunigt. So ist ein Beginn des **Härtens auf Befehl** ("on demand") möglich. Der Befehl erfolgt durch die energiereiche aktinische Bestrahlung wie z.B. mit einer UV-Strahlung. Somit ist es möglich, den Zeitpunkt des Beginns der Aushärtung vorgeben zu können und den Beginn der Aushärtung auslösen zu können. Ab dem Beginn des Aushärtens wird die Mischung B als Dichtmasse bezeichnet.

Die Reaktion von Isocyanatgruppen mit Mercaptogruppen ist die Hauptreaktion beim Härten der Dichtmasse. Daneben kann auch beispielsweise eine Reaktion von Isocyanat mit mindestens einem Alkohol auftreten. Als Reaktionspartner können hierbei Alkohole dienen, die unabhängig voneinander insbesondere 2 bis 12 C-Atome und eine, zwei oder drei OH-Gruppen aufweisen. Die Reaktion von mindestens einem solchen Alkohol mit Isocyanatgruppen führt zu Polyurethan-Verbindungen. Dadurch können die mechanischen Eigenschaften positiv beeinflusst werden. Daher ist es in manchen Ausführungsformen vorteilhaft, einen Gehalt im Bereich von 0,1 bis 10 Gew.-% an mindestens einem solchen Alkohol zuzusetzen. Allerdings ist es vorteilhaft, dass die Reaktion zwischen Isocyanatgruppen und Mercaptogruppen dominiert und nur bis zu 10 % der Reaktionen von Isocyanatgruppen mit mindestens einem Alkohol sind. Daher wird bevorzugt, dass die Gesamtmenge an Isocyanatgruppen mindestens in einem stöchiometrischen Verhältnis von etwa 1 : 1 oder mindestens von 1:1, vorzugsweise In einem Überschuss, zu dem Gesamtgehalt an Mercaptogruppen und an Hydroxygruppen in der Mischung B und der Dichtmasse vorliegt.

Bei dem erfindungsgemäßen Verfahren wird der Photoinitiator beim Einwirken von energiereicher aktinischer Strahlung aktiviert, aber der Photoinitiator wird nicht wie sonst bei radikalisch härtenden Beschichtungen eingesetzt, sondern vor allem nur zum Freisetzen eines tertiären Amin-Radikals. Das tertiäre Amin-Radikal setzt sich üblicherweise gleich zu einer tertiären Amin-Verbindung um, ohne dass es besonderer Maßnahmen bedarf. Das freigesetzte tertiäre Amin-Radikal bildet insbesondere mit Wasserstoff hieraus ein Amin, das hierbei zum katalytischen Auslösen oder/und zur katalytischen Beschleunigung der chemischen Reaktion zwischen Isocyanatgruppen und Mercaptogruppen bei der chemischen Härtung dient. Das gebildete tertiäre Amin ermöglicht oder/und beschleunigt offenbar als Katalysator die Aushärtungsreaktion(en). Das gebildete tertiäre Amin löst die Reaktionen zwischen den Komponenten der Grundmasse und des Härters aus oder/und beschleunigt sie. Es kann offenbar grundsätzlich bei niedrigen und bei höheren Temperaturen als Katalysator für die Härtung mit Isocyanat wirken.

Eine aktinische Bestrahlung wie eine UV-Bestrahlung kann grundsätzlich über 1 Sekunde bis 6 Stunden erfolgen. Sie erfolgt vorzugsweise je nach Schichtdicke oder/und je nach Strahlungsquelle über einen Zeitraum von 1 Sekunde bis 15 Minuten, wobei grundsätzlich auch längere Bestrahlungszeiten genutzt werden können. Hierbei kann aber oft nach 5 min keine wesentliche Verbesserung mehr erzielt werden. Üblicherweise reicht eine aktinische Bestrahlung im Zeitraum von 5 Sekunden bis 2 Minuten, wenn eine UV-Strahlungsdosis von mindestens 80 mJ/cm² genutzt wird. Daher genügt üblicherweise eine UV-Strahlungsdasis von 100 ± 20 mJ/cm². In vielen Ausführungsformen erfolgt nach der Bestrahlung, aber auch ohne vorherige Bestrahlung mit einer energiereichen aktinischen Strahlung eine katalytische Nachhärtung, die oft über mehrere Stunden oder mehrere Tage andauert. Diese katalytische Nachhärtung sichert daher unabhängig davon, ob, wo und wieviel an aktivem Katalysators gebildet wird, dass die Dichtmasse im Einsatz, insbesondere an schwer oder nicht für die Strahlung zugänglichen Stellen, immer eine hohe Quantität erreicht.

Als energiereiche aktinische **Strahlung** kann insbesondere eine UV-Strahlung verwendet werden, aber auch alternativ oder zusätzlich hierzu eine Elektronenstrahlung, Diese Strahlungsarten haben sich bewährt, weil sie den Energiebereich umfassen, der zum Aktivieren des Photoinitiators benötigt wird, insbesondere UV-Licht mit UVC-, UVB-, UVA- oder/und UVVIS-Strahlung. Hierzu kann mindestens ein UV-Strahler wie z.B. mindestens ein leistungsfähiger UV-Strahler vorzugsweise mit einer Leistung größer 400 W, mindestens ein leistungsarmer UV-Strahler mit Leistungen kleiner 120 W oder/und mindestens eine UV-LED, mindestens ein Fluoreszenzstrahler für UV-Strahlung oder/und mindestens ein Elektronenstrahler verwendet werden. Wenn im UV-A Bereich gearbeitet wird, entsteht kein Ozon, und außerdem ist auch das Härten größerer Schichtdicken wie z.B. etwa von 2 bis 7 mm möglich.

Der Einfachheit wird im Folgenden oft nur von UV-Licht bzw. UV-Strahlung gesprochen, ohne diese auf solche Wellenlängen einzuschränken. In der Praxis wird jedoch UV-Licht am ehesten eingesetzt werden.

Im Vergleich zu konventionellen Dichtmassen ohne energiereiche aktinische Bestrahlung und ohne diese katalysierte Reaktion wird die erfindungsgemäße Reaktion erheblich beschleunigt. Das Auslösen der Reaktion durch energiereiche Strahlung ist durch die sehr schnelle, u.U. sekundenschnelle, Oberflächenhärtung erkennbar. Die Beschleunigung der Reaktion ist an der beschleunigten Durchhärtung erkennbar.

Bei dem erfindungsgemäßen Verfahren kann die Dichtmasse eine Shore A-Härte von mindestens 10, gemessen 5 bis 600 Minuten nach Beginn der energiereichen aktinischen Bestrahlung oder/und eine Shore A-Härte im Bereich von 30 bis 60, gemessen 2 Wochen nach Beginn der energiereichen aktinischen Bestrahlung, aufweisen. Die deutliche Zunahme der Härte erfolgt auch aufgrund der Nachhärtung bis zur vollständigen Durchhärtung. Je nach Gehalt an Photoinitiator und an tertiärem Amin kann hierbei die Schnelligkeit gesteuert werden: Je höher diese Gehalte sind, desto schneller kann das Härten erfolgen. Wenn es schneller erfolgt, dann ergeben sich auch kürzere Verarbeitungszeiten.

Die zuletzt genannten Photoinitiatoren werden nach dem Stand der Technik in Acrylat basierten UV-härtbaren Beschichtungen eingesetzt. Sie lösen dabei in der vorliegenden Erfindung auch überraschenderweise die Reaktion von Isocyanaten mit Mercaptanen aus oder/und beschleunigen sie, wenn die Mischung B energiereicher aktinischer Strahlung ausgesetzt wird. Es war überraschend, dass ein Photoinitiator, der vergleichsweise geringe Mengen an tertiärem Amin-Radikal freisetzt, ausrelchende Mengen an tertiärer Amin-Verbindung mit katalytischer Aktivität für die Aushärtung von Grundmassen bereitstellt.

Überraschenderweise ist mit dem gefundenen Dichtmassen-System auch die Aushärtung größerer Schichtdicken möglich. Denn die Isocyanat-Mercaptan-Reaktion wird bereits durch sehr geringe Mengen eines Katalysators, insbesondere eines tertiären Amins, stark beschleunigt, so dass auch schon geringe Mengen an energiereicher aktinischer Strahlung zum Freisetzen eines Amin-Radikals und zum Bilden entsprechender Amin-Spuren ausreichen.

Hierbei kann die chemische Zusammensetzung der Grundmasse(n) A oder/und B sowie die chemische Zusammensetzung der aushärtenden Dichtmasse so gewählt werden, dass die energiereiche aktinische Strahlung wie z.B. ein UV-Licht hierin nur in geringem Maß absorbiert wird. Üblicherweise sind die Hauptkomponenten einer Grundmasse oder Dichtmasse für energiereiche aktinische Strahlung gut durchlässig. Insbesondere bei den Füllstoffen sollte vorzugsweise darauf geachtet werden, dass sie möglichst gut für die ausgewählte Strahlung durchlässig sind. Elektronenstrahlen dringen üblicherweise viel stärker als UV-Licht durch die Substanzen einer Grundmasse oder Dichtmasse durch. Daher ist es bevorzugt, beim Zusetzen von Füllstoffen und weiteren Additiven zu einer der Massen solche ausgewählt werden, die insbesondere die gewählte Art z.B. des UV-Lichts wenig oder nicht absorbieren oder die UV-Licht wenig oder nicht absorbieren, also für die gewählte Art der Strahlung möglichst durchlässig sind, mit der die Härtung eingeleitet werden soll. Sie weisen vorzugsweise keine oder kaum eine Absorption im Bereich des UV-Lichtspektrums oder des für die Einstrahlung genutzten UV-Lichts auf. Füllstoffe werden üblicherweise einer Mischung bzw. Dichtmasse zugesetzt, um bessere mechanische Eigenschaften zu erzielen. Insbesondere Füllstoffe auf Basis von Calciumcarbonat und von Mikrohohlkugeln aus Glas oder Kunststoff sollten bei Bedarf auf ihre Strahlendurchlässigkeit geprüft werden.

Daher ist es bevorzugt, dass keine Stoffe oder nur bis zu 1 Gew.-% oder nur bis zu 5 Gew.-% an Stoffen wie z.B. Füllstoffen der Grundmasse und dem Härter zugesetzt werden, die im Bereich der einzusetzenden energiereichen aktinischen Strahlung eine deutliche Absorption oder eine Absorption deutlich über der Absorption der Schwefel-haltigen Polymere der Grundmasse aufweisen.

Ein weiterer großer Vorteil der Erfindung besteht darin, dass nach dem Start des Aushärtens auch ohne Einstrahlung von UV-Licht eine zuverlässige und vollständige Aushärtung erreicht wird, wenn auch erst nach langer Zeit wie z.B. nach 1 bis 21 Tagen. Dies ist wichtig für Anwendungen, bei denen die Dichtmasse in Hohlräume oder/und in Spalte zwischen Komponenten eingebracht wird oder/und anderweitig z.B. gegen UV-Licht abgeschirmt ist. Insbesondere bei der Herstellung von Flugzeugen ist es wichtig, dass bei jeder Anwendung eine möglichst vollständige Aushärtung der gesamten eingebrachten Grundmasse mit dem Härter erreicht wird.

Besonders bevorzugt ist eine Grundmasse bzw. Dichtmasse auf Basis von schwefelhaltigen Basispolymeren wie z.B. mercaptoterminiertem Polyether, mercaptoterminiertem Polythioether, mercaptoterminiertem Polysulfid, deren Copolymeren oder/und deren Mischungen, die hier als Basispolymere elngesetzt werden. Vorzugsweise werden hierbei keine epoxidierten Basispolymere verwendet. Denn epoxidierte Polysulfide haben den Nachteil, dass sie oft in ihrer Reaktionsgeschwindigkeit wie z.B. lsocyanaten oder Aminen schwer steuerbar sind. Außerdem zeigen die ausgehärteten Dichtmassen auf Basis von epoxidierten Polysulfiden mechanische Eigenschaften wie Zugfestigkeit und Dehnung, die meistens nicht den Anforderungen der hochwertigen Flugzeugdichtmassen entsprechen.

Ganz besonders bevorzugt ist eine Grundmasse auf Basis von Polysulfid mit endständigen Mercaptogruppen, deren Copolymeren oder/und deren Mischungen, Die Copolymere können insbesondere Copolymere auf Basis von Polyether-Polythioether, Polyether-Polysulfid oder/und Polythioether-Polysulfid sein.

Als mercaptoterminierte Polysulfidpolymere werden in den erfindungsgemäßen Zusammensetzungen der Grundmasse A, der Mischung B und der daraus hergestellten Dichtmasse vorzugsweise langkettige Polymere mit einem Molekulargewicht insbesondere im Bereich von 2800 bis 9000 g/mol wie z.B. Thioplast^{®} G131 verwendet, besonders bevorzugt mit einem Molekulargewicht im Bereich von 3300 bis 5000 g/mol wie z.B. Thioplast^{®} G10, Thioplast^{®} G12, Thloplast^{®} G1, Thiokol^{®} LP 32 oder/und Thiokol^{®} LP 12.

Als mercaptoterminierte Polysulfidpolymere werden in den erfindungsgemäßen Zusammensetzungen der Grundmasse A, der Mischung B und der daraus hergestellten Dichtmasse - gegebenenfalls zusätzlich - kurzkettige Polymere mit einem Molekulargewicht Insbesondere im Bereich von 100 bis 3200 g/mol, von 400 bis 2800 g/mol oder/und von 500 bis 1200 g/mol wie z.B. Thiokol^{®} LP3, Thioplase^{®}G4, Thioplast^{®} G22 oder Thioplast^{®} G44 eingesetzt.

In einer bevorzugten Ausführungsform werden als mercaptoterminierte Polysulfidpolymere oder/und als mercaptoterminierte Polythioether in den erfindungsgemäßen Zusammensetzungen der Grundmasse A, der Mischung B und der daraus hergestellten Dichtmasse vorzugsweise einerseits langkettige Polymere mit einem Molekulargewicht insbesondere im Bereich von 2800 bis 9000 g/mol oder mit einem Molekulargewicht im Bereich von 3300 bis 5000 g/mol und andererseits kurzkettige Polymere mit einem Molekulargewicht im Bereich von 400 bis 2800 g/mol oder von 500 bis 1200 g/mol eingesetzt, wobei das Verhältnis der langkettigen Polymere zu den kurzkettigen Polymeren vorzugsweise im Bereich von 25 : 1 bis 0,5 : 1, von 10 : 1 bis 1 : 1 oder von 6 : 1 bis 2 : 1 liegt.

Als mercaptoterminierte Polyetherpolymere werden in den erfindungsgemäßen Zusammensetzungen der Grundmasse A, der Mischung B und der daraus hergestellten Dichtmasse vorzugsweise flüssige Polymere mit einem Molekulargewicht insbesondere im Bereich von 100 bis 7000 g/mol oder von 500 bis 6000 g/mol eingesetzt, besonders bevorzugt mit einem Molekulargewicht im Bereich von 1000 bis 3000 g/mol, die entsprechend auch in der daraus hergestellten Dichtmasse vorliegen.

Als mercaptoterminierte Polythioetherpolymere werden in den erfindungsgemäßen Zusammensetzungen der Grundmasse A, der Mischung B und der daraus hergestellten Dichtmasse vorzugsweise flüssige Polymere mit einem Molekulargewicht insbesondere im Bereich von 500 bis 6000 g/mol eingesetzt, besonders bevorzugt mit einem Molekulargewicht im Bereich von 1000 bis 3000 g/mol.

Die schwefelhaltigen Basispolymere weisen einen Mercaptangehalt bezogen auf die reaktiven SH-Gruppen zum gesamten Basispolymer im Bereich von 0,8 bis 8 Gew.-% oder von 1 bis 6 Gew.-% auf.

Die schwefelhaltigen Basispolymere weisen vorzugsweise einen Gesamt-Schwefelgehalt im Bereich von 1 bis 50 Gew.-%, von 2 bis 45 Gew.-% oder von 10 bis 38 Gew.-% auf.

Vorzugsweise weisen die schwefelhaltigen Basispolymere eine mittlere Funktionalität als reaktive Endgruppen von Mercaptogruppen pro Molekül im Bereich von 1,5 bis 2,5 oder von 1,9 bis 2,2 auf. Andererseits ist es in vielen Ausführungsformen bevorzugt, keine Hydroxy-funktionalisierten schwefelhaltigen Basispolymere zu verwenden. Besonders bevorzugt sind keine anderen Funktionalitäten als reaktive Endgruppen Im schwefelhaltigen Basispolymer als Mercaptogruppen enthalten.

Vorzugsweise weisen die schwefelhaltigen Basispolymere eine mittlere Glasübergangstemperatur T_{g} im Bereich von -80 bis -30 °C oder von -60 bis -40 °C auf, gemessen nach AITM 1-0003 Airbus Industrie Test Method Juni 1995.

Mit wachsendem Schwefelgehalt verbessert sich die Treibstoffbeständigkeit. Das Basispolymer oder/und die jeweilige Basispolymer enthaltende Zusammensetzung wie die Grundmasse A, die Grundmasse B oder/und die Dichtmasse können neben mercaptoterminierten Polymeren/Copolymeren gegebenenfalls auch 0 oder 0,001 bis 10 oder 0,01 bis 5 Gew.-% an deren Oligomeren oder/und Polymeren enthalten, insbesondere solche ausgewählt aus den kurzkettigen organischen Sulfiden oder/und aus den kurzkettigen organischen Thioethern. Diese kurzkettigen Moleküle können zu einer Quervernetzung oder/und Änderung der Viskosität des Basispolymers beitragen. Wenn ein Gehalt an Oligomeren im Basispolymere enthalten ist, hat das oft den Vorteil, dass die mechanischen Eigenschaften weiter verbessert sind bzw, hiermit eingestellt werden können.

Andererseits können einer Grundmasse bzw. Dichtmasse Alkohole ohne Doppelbindungen mit bis zu 12 C-Atomen pro Molekül oder/und Polyole ohne Doppelbindungen mit 4 bis zu 100 C-Atomen pro Molekül in einer Gesamtmenge von bis zu 10 Gew. % zugesetzt werden. Sie können z.B. helfen, um die mechanischen Eigenschaften der Dichtmassen zu modifizieren, Sie haben vorzugsweise ein Molekulargewicht im Bereich von 100 bis 3000 g/mol. Hierbei sind folgende Arten an Alkoholen und Polyolen besonders bevorzugt: Gesättigter Alkohol, Polyesterpolyol, Polyetherpolylol, Polycarbonatpolyol und Mischungen hieraus. Sie können ebenfalls wie Silane/Silanole/Siloxane, die vereinfacht hier als "Silane" bezeichnet werden, untergeordnet beim Aushärten der Dichtmasse als Vernetzungsmittel beteiligt sein. Silane sind Haftvermittler, aber nicht jedes Silan dient hierbei zusätzlich als Vernetzungsmittel.

Zum Einstellen insbesondere der mechanischen Eigenschaften der Dichtmasse können bei Bedarf der Grundmasse A, dem Härter oder/und der Mischung B mindestens ein Alkohol oder/und mindestens ein Polyol zugesetzt werden. Vorzugsweise kann auch mindestens ein Polyol wie z.B. jeweils mindestens ein Polyesterpolyol, Polyetherpolyol, oder/und Polycarbonatpolyol im Basispolymer enthalten sein, wobei gegebenenfalls im Basispolymer vorzugsweise 0,001 bis 15 oder 0,1 bis 8 Gew.-% bezogen auf das Basispolymer enthalten sein können. Ein solcher Gehalt an Polyol im Basispolymer bewirkt eine Änderung insbesondere der kinetischen und mechanischen Eigenschaften und eventuell auch der Viskosität.

Die erfindungsgemäße Zusammensetzung ist entweder eine Grundmasse A, bei der der Härter zum Einsatz noch zuzumischen ist, oder eine einkomponentige **Grundmasse B,** bei der der Grundmasse A ein **Härter** zugemischt ist, wobei die einkomponentige Zusammensetzung als Mischung B bezeichnet wird und zumindest für eine lange Aufbewahrungsdauer vorzugsweise eingefroren werden kann. Hauptbestandteil des **Dichtmassen-Systems** bzw. der Zusammensetzung ist ein aus mindestens zwei Komponenten bestehendes System aus einer ungehärteten Grundmasse A und einem Härter auf Isocyanat-Basis und die daraus durch Zusammenmischen hergestellte einkomponentige Mischung B bzw. Dichtmasse. Hierbei enthalten alle Grundmassen bzw. Dichtmassen mindestens eine Art eines mercaptoterminierten Basispolymers. Sie enthalten vorteilhafterweise jeweils mindestens ein mercaptoterminiertes Basispolymer auf Basis von Polysulfid, ein mercaptoterminiertes Basispolymer auf Basis von Polythioether oder/und ein mercaptoterminiertes Basispolymer auf Basis von Polysulfid und Polythioether, die auch als Polymermischung oder/und als Copolymer wie z.B. als Blockcopolymer vorliegen können. Das Dichtmassen-System, die ungehärtete Grundmasse A, der Härter oder/und die Mischung B zeichnen sich dadurch aus, dass es/sie/er mindestens einen Photoinitiator enthält, der tertiäres Amin freisetzt oder/und bildet und dass das freigesetzte oder/und gebildete Amin die Härtung mit einem Isocyanat enthaltenden Härter katalysiert.

Es ist bevorzugt, dass die Grundmasse oder/und Dichtmasse frei ist/sind:
- von (Meth)acrylat-basierten Verbindungen/Polymeren,
- von mehr als 10 Gew. % an, von mehr als 4 Gew. % an oder sogar gänzlich frei von allen Polyolen mit 4 bis 100 C-Atomen pro Molekül wie insbesondere an Polyesterpolyolen, Polyetherpolyolen, Polycarbonatpolyolen oder/und Polyurethanpolyolen mit Jeweils 4 bis 100 C-Atomen pro Molekül oder/und an kurzkettigen Alkoholen mit bis zu 5 C-Atomen,

- von Metall-baslerten Katalysatoren,
- von allen weiteren Arten von Polyenen, von organischen Polymeren und von organischen Copolymeren mit Doppelbindungen mit Ausnahme von Silanen wie z.B. Vinylsilanen, Acrylsilanen und Methacrylsilanen,
- von epoxidierten Basispolymeren,
- von Styrolen,
- von Vinyl-haltigen Polymeren/Copolymeren,
- von mehr als 5 Gew. % an Silan-/Siloxan-terminierten Basispolymeren,
- von Polyurethanen mit einem Gehalt an Polyol, die wie ein Weichmacher wirken, von mehr als 10 Gewichtsprozent,
- von UV-Licht stark absorbierenden Substanzen wie z.B. UV-Licht absorbierende Pigmente wie z.B. TiO_{2,}
- von Gehalten an Chromat,
- von mehr als 2 Gew.-% Carbonsäuren,
- von mehr als 2 Gew.-% Mineralsäuren oder/und
- von mehr als 0,5 Gew.-% Wasser.

Je nach Ausführungsform können die Grundmassen oder/und Dichtmassen frei von allen oder etlichen der oben genannten Gehalte und Zusätze sein. In vielen Ausführungsformen ist es bevorzugt, keine epoxidierten Basispolymere wie z.B. epoxidierte Polysulfide zuzusetzen. Ferner ist es in vielen Ausführungsformen bevorzugt, keine Harze mit einer Doppelbindung zuzusetzen.

Der **Härter** ist bei der vorliegenden Anmeldung immer Isocyanat-basiert. Der Härter ist üblicherweise frei von Manganoxid, frei von anorganischem Peroxid, frei von organischem Peroxid, frei oder praktisch frei von Wasser oder/und oft frei von Weichmachem. Das Isocyanat wird vorzugsweise nur dem Härter zugesetzt. Daher erfolgt die Härtung der Dichtmasse mit mindestens einer Isocyanat-basierten Verbindung.

Im Folgenden wird die mindestens eine Isocyanat-basierte Verbindung teilweise undifferenziert als **"Isocyanat,"** bezeichnet, unabhängig davon, ob es sich um Monomere, Oligomere, Polymere oder/und Copolymere handelt, Im Sinne der vorliegenden Anmeldung bedeutet der Begriff "isocyanat" jeweils mindestens ein aliphatisches, cycloaliphatisches oder/und aromatisches Isocyanat auf Basis von monofunktionellem, difunktionellem oder/und trifunktionellem monomerem Isocyanat, auf Basis von monofunktionellem, difunktionellem oder/und trifunktionellem oligomerem oder/und polymerem Isocyanat (alle als Polyisocyanat bezeichnet) oder/und auf Basis von monofunktionellen, difunktionellen oder/und trifunktionellen Isocyanat-Prepolymeren. Hierbei wird mindestens eine solche Isocyanat-basierte Verbindung aus dieser Gruppe ausgewählt. Der Begriff "Isocyanat" umfasst dabei auch Isocyanatgruppen ganz allgemein. Daher ist es bevorzugt, dass als Isocyanat-basierte Verbindung mindestens eine ausgewählt wird aus aliphatischem, cycloaliphatischem oder/und aromatischem Isocyanat auf Basis von monofunktionellem, difunktionellem oder/und trifunktionellem monomerem Isocyanat, auf Basis von monofunktionellem, difunktionellem oder/und trifunktionellem oligomerem oder/und polymerem Isocyanat oder/und auf Basis von monofunktionellen, difunktionellen oder/und trifunktionellen Isocyanat-Prepolymeren.

Alle diese Isocyanate sind vorzugsweise miteinander mischbar, da sie vorzugsweise alle flüssig vorliegen. Isocyanat dient als Reaktionspartner insbesondere für die Mercaptogruppen des Basispolymers. Durch die Auswahl des Isocyanats bzw. der Isocyanate werden die Aushärtungsbedingungen und die mechanischen Eigenschaften der Dichtmassen wesentlich beeinflusst. Vorzugsweise sind alle diese Isocyanate nicht geblockt und auch nicht teilgeblockt. Das Isocyanat ist vorzugsweise halogenfrei oder/und frei von blockierenden Gruppen wie z.B. Diethylmalonat, 3,5-Dimethylpyrozol oder Caprolactam.

Die Isocyanatgruppen können beispielsweise an mindestens eine Alkylgruppe wie z.B. an mindestens eine Alkylgruppe mit 6 bis 12 C-Atomen wie mindestens eine ausgewählt aus C₆H₁₂ bis C₁₂H₂₄, an mindestens eine Phenylgruppe, an mindestens eine Toluylgruppe, an mindestens eine Diphenylalkylgruppe, an mindestens eine Cyclohexylgruppe oder/und an mindestens ein Polymer/Copolymer gebunden sein.

Der Härter enthält mindestens eine Isocyanat-basierte Verbindung. Das Isocyanat wird als Härter eingesetzt. Der Härter enthält vorzugsweise mindestens ein Isocyanat mit einem Gesamtgehalt an Isocyanat-basierten Verbindungen im Bereich von 20 bis 100, von 30 bis 98, von 40 bis 95, von 50 bis 90 Gew.-%, von 60 bis 85 oder von 70 bis 80 Gew.-%. Hierbei Ist es möglich, die gesamte gewünschte Menge an Isocyanat in Form von Isocyanat-terminierten Prepolymeren einzusetzen.

Hierbei werden die Isocyanatgruppen des Isocyanats mit den Mercaptogruppen insbesondere des Basispolymers und gegebenenfalls auch mit einer kleinen Menge an anderen Verbindungen mit Mercaptan-Basis wie z.B. mit Mercaptopropyltrimethoxysilan chemisch reagieren. Eine solche Verbindung kann insbesondere in einem Gehalt von 0,1 bis 5 Gew.-% der Grundmasse oder der Mischung B zugesetzt sein, um die mechanischen Eigenschaften und die Haftung einzustellen. Außerdem können gegebenenfalls auch chemische Reaktionen zwischen Isocyanat und mindestens einem Alkohol auftreten.

Obwohl die Funktionalität des Isocyanats grundsätzlich im Bereich von 1 bis 4 liegen kann, liegt meist eine Mischung verschiedener Funktionalitäten vor. Die Funktionalität des als Härter verwendeten mindestens einen Isocyanats liegt durchschnittlich im Bereich von 1,5 bis 3,2. Das Isocyanat ist vorzugsweise jeweils mindestens ein aliphatisches, cycloaliphatisches oder/und aromatisches Isocyanat mit jeweils durchschnittlich ein bis vier Isocyanatgruppen pro Molekül unabhängig voneinander oder/und mindestens ein Prepolymer mit mindestens durchschnittlich 1,6 bis 4,0 Isocyanatgruppen pro Molekül.

Isocyanat wird besonders bevorzugt in Form von Monomeren, Oligomeren oder/und Prepolymeren auf Basis von Hexamethylendiisocyanat HDI = HMDI, Isophorondiisocyanat IPDI, Diphenylmethandiisocyanat MDI oder/und Toluoldiisocyanat TDI dem Härter zugesetzt.

Wenn das Isocyanat ein Polyisocyanat ist, wird/werden vorzugsweise mindestens ein Hexamethylenpolyisocyanat, mindestens ein Isophoronpolysocyanat, mindestens ein Toluolpolyisocyanat und/oder mindestens ein Diphenylmethanpolyisocyanat verwendet.

Besonders bevorzugt ist das Isocyanat insbesondere eines auf Basis von jeweils mindestens einem Isocyanat-terminierten Prepolymeren, vorzugsweise Prepolymer ren mit einem Rückgrat auf Basis von Polyol, Polyester, Polyether, Polysulfid oder/und Polythioether oder/und vorzugsweise in Form von deren Monomeren oder/und Oligomeren. Besonders bevorzugt sind die Isocyanat-terminierten Prepolymere Reaktionsprodukte von Monomeren, Oligomeren oder/und Polymeren von Isocyanaten und insbesondere von Diisocyanaten mit schwefelhaltigen Verbindungen, die gegebenenfalls noch polymerisiert werden. Sie sind vorzugsweise auf Basis von jeweils mindestens einem monomeren oder/und oligomeren Diphenylmethandiisocyanat, auf Basis von jeweils mindestens einem monomeren oder/und oligomeren Toluoldiisocyanat, auf Basis von jeweils Mindestens einem monomeren oder/und oligomeren Hexamethylendiisocyanat, auf Basis von jeweils mindestens einem HDI-Biuret, HDI-Dimerisat, HDI-Trimerisat oder/und Isophorondiisacyanat oder/und auf Basis von mindestens einem Polyisocyanat wie z.B. Diphenylmethanpolyisocyanat, TDI-Polyisocyanat oder/und HDI-Polyisocyanat.

In einer besonders bevorzugten Ausführungsform weisen die Grundmasse A, die Mischung B und die daraus hergestellten Dichtmasse als chemische Basis mindestens ein Isocyanat-terminiertes Polysulfid-Polymer ohne endständige Mercaptogruppen auf, das als Härter und nicht als Basispolymer dient. Dieses Polymer liegt vorzugsweise als flüssiges oder hochviskoses Polymer mit einem Molekulargewicht insbesondere im Bereich von 200 bis 6000 g/mol und besonders bevorzugt mit einem Molekulargewicht im Bereich von 1000 bis 3000 g/mol) vor.

Beispiele für Isocyanat-terminierte Prepolymere sind Reaktionsprodukte aus lsocyanat-basierten Monomeren oder/und Oligomeren mit mindestens einem Polyol oder/und mit mindestens einem mercaptoterminierten Polymer/Copolymer. Beispiele für bevorzugte Isocyanat-terminierte Prepolymere sind MDI-, TDI- oder HDIterminierte Polysulfide mit einem Molekulargewicht von 500 bis 7000 g/mol, MDIterminierte oder TDI-terminierte Monosulfide mit einem Molekulargewicht von 500 bis 7000 g/mol, MDI-terminierte, TDI-terminierte oder HDI-terminierte Polyester mit einem Molekulargewicht im Bereich von 500 bis 6000 g/mol oder/und MDI-terminierte, TDI-terminierte oder HDI-terminierte Polyether mit einem Molekulargewicht von 500 bis 6000 g/mol.

Insbesondere als Hauptbestandteil des erfindungemäßen Härters (Komponente B) wird vorzugsweise mindestens eine Isocyanat-basierte Verbindung ausgewählt aus Diphenylmethandiisocyanaten, aus Polyisocyanaten auf Basis von hexamethylendiisocyanaten wie z.B. HDI-Trimerisaten oder/und HDl-Biureten, auf Basis von Diphenylmethandiisocyanaten auf Basis von Isophorondiisocyanaten und auf Basis von Toluoldiisocyanaten sowie aus Isocyanat-terminierten Prepolymeren eingesetzt.

Hierbei wurde überraschenderweise festgestellt, dass insbesondere Isocyanate auf Basis von MDI wie z.B. 4,4'-Diphenyimethandiisocyanat, 2,4'-Diphenylmethandiisocyanat, 2,2'-Diphenylmethandiisocyanat, Prepolymere auf Basis von Toluoldiisocyanat und/oder auf Basis von Diphenylmethandiisocyanat jeweils in Kombination mit einem erfindungsgemäßen Photoinitiator für die Härtung insbesondere von mercaptoterminierten Prepolymeren und von mercaptoterminierten Polymeren unter der Wirkung von UV-Licht besonders geeignet sind.

Das eingesetzte Isocyanat ist besonders bevorzugt mindestens ein Diisocyanat, insbesondere mindestens eines ausgewählt aus der Gruppe bestehend aus 2.2'-Diphenylmethandiisocyanat wie nicht hydriertes MDI, 2,4'-Diphenylmethandiisocyanat wie nicht hydriertes MDI, 4,4'-Diphenylmethandiisocyanat wie nicht hydriertes MDI, Toluoldiisocyanat TDI, voll hydriertes MDI insbesondere als 4,4'Diisocyanatodicyclohexylmethan H12MDI, Hexamethylendiisocyanat HDI und Isophorondiisocyanat IPDI.

Vorzugsweise liegt das Molekulargewicht des als Härter verwendeten Isocyanats im Bereich von 120 bis 8000 g/mol, besonders bevorzugt im Bereich von 150 bis 4000 oder von 180 bis 1500 g/mol oder im Bereich von 240 bis 500 g/mol. Vorzugsweise liegt das Molekulargewicht der als Härter verwendeten Isocyanat-terminierten Prepolymere im Bereich von 400 bis 8000 g/mol, besonders bevorzugt im Bereich von 700 bis 4000 g/mol oder im Bereich von 1000 bis 3000 g/mol.

Ganz besonders bevorzugt sind Isocyanate auf Basis von Diphenylmethandiisocyanat MDI mit einem Molekulargewicht im Bereich von 250 bis 3000 g/mol, auf Basis von Toluoldiisocyanat TDI mit einem Molekulargewicht im Bereich von 174 bis 3000 g/mol, auf Basis von Hexamethylendiisocyanat HDI mit einem Molekulargewicht im Bereich von 168 bis 3000 g/mol oder/und auf Basis von Isophorondiisocyanat IPDI mit einem Molekulargewicht im Bereich von 222 bis 3000 g/mol. Sie bezeichnen hier niedermolekulare und hochmolekulare Verbindungen als Oligomere/Polymere oder/und als Prepolymere.

Besonders bevorzugt werden Isocyanat-terminierte Prepolymere dem Härter zugesetzt. Diese haben den Vorteil, dass sie aufgrund ihres niedrigeren Dampfdruckes eine anwenderfreundlichere Alternative zu Isocyanat in Form von Monomeren sind. Hierbei ist es vorteilhaft, die gesamte gewünschte Isocyanat-Menge in Form von oligomeren Isocyanat-terminierten Prepolymeren und nicht Isocyanat-Monomere einzusetzen. In einer besonderen Ausführungsform werden Isocyanat-terminierte Prepolymere verwendet, die zu mindestens 80 Gew.-%, zu mindestens 98 Gew.-% oder zu mindestens 99,8 Gew,-% aus Prepolymeren und mit dem Restgehalt auf 100 Gew.-% vorwiegend aus Restmonomergehalten der gleichen Isocyanat-Verbindung bestehen. Besonders bevorzugt ist bei den Isocyanat-terminierten Prepolymeren ein Restmonomergehalt entweder von kleiner als 20 Gew.-%, von kleiner als 1 Gew.-% oder von kleiner als 0,1 Gew.-%.

Ganz besonders bevorzugt sind folgende Isocyanate:
1.) Monofunktionelle Isocyanate wie z.B. Ethylisocyanat, Propylisacyanat, Cyclohexylisocyanat, Phenylisocyanat oder/und p-Toluolsulfonylisocyanat,
2.) Difunktionelle Isocyanate wie z.B. Hexamethylendiisocyanat, 2,2,4-Trimethylhexamethylendiisocyanat, Dodecamethylendiisocyanat, 1,2-Cyclohexandiisocyanat, 1,4-Cyclohexandiisocyanat, Isophorondiisocyanat, 4-Methyl-1,3-diisoeyanatocyclohexan, Dicyclohexylrnethan-4,4'-diisocyanat, Toluoldiisocyanat, Xylylendiisocyanat, 4,4'-Diisocyanato-diphenyl, 4,4'Diisocyanatodicyclohexylmethan, 3,3'-Diphenyl-4,4'-diisocyanatodiphenyl, 3,3'-dimethyl-4,4'-diisocyanatodiphenylmethan, 3,3'-dimethoxy-4,4'-diisocyanatodiphenyl, 4,4'-Diphenylniethandiisocyanat, 2,4'-Diphonylmethandiisocyanat oder/und 2.2'-Diphenylmethandiisacyanat,
3.) Trifunktionelle Isocyanate wie z.B. 1,3,5-Trilsocyanatobenzol, 2,4,6-Triisocyanatatoluol, oder/und 1,8-Diisocyanato-4-(isocyanatomethyl)octan,
4.) Polyisocyanate wie z.B. Trimere von Isopharondiisocyanat, Uretdion-Dimere von 1,6-Diisocyanatohexan, Biurete von Hexamethylendiisocyanat, Allophanate von 1,6-Diisocyanatohexan, Hexamethylenpolyisocyanat, Isophoronpolysocyanat, Toluolpolyisocyanat oder/und Diphenylmethanpolyisocyanat oder/und
5.) Isocyanat-terminierte Prepolymere wie z.B. Addukte aus Hexamethylendiisocyanat mit Polyetherpolyol, Polyesterpolyol, Polyether-Polyesterpolyol, Polysulfid oder/und Polythioether, Addukte aus Toluoldiisocyanat mit Polyetherpolyol, Polyesterpolyol, Polyether-Polyesterpolyol, Polysulfid oder/und Polythioether, Addukte aus isophorondiisocyanat mit Polyetherpolyol, Polyesterpolyol, Polyether-Polyesterpolyol, Polysulfid oder/und Polythioether oder/und Addukte aus Diphenylmethandiisocyanat mit Polyetherpolyol, Polyesterpolyol, Polyether-Polyesterpolyol, Polysulfid oder/und Polythioether.

Hierbei kann es bei der Herstellung und Verwendung eines Isocyanat-terminierten Prepolymers wichtig sein, dass ein molarer Überschuss an Isocyanat im Bereich von 1,2 bis 4 im Vergleich zu 1 Mol reaktiver OH- oder/und SH-Gruppen in Bezug auf den Gesamtgehalt an mercaptoterminiertem Basispolymer einschließlich des gegebenenfalls vorhandenen Polyesterpolyols oder/und Polyetherpolyols als weitere wichtige reaktive Bestandteile zugesetzt wird. Denn zur Herstellung eines Isocyanatterminierten Prepolymers wird vorzugsweise mindestens ein Polyol wie z.B. ein Polyether, ein Polyester, ein Polysulfid oder/und ein Polythioether verwendet.

Das Isocyanat kann einen NCO-Gehalt im Bereich von 1 bis 40 Gew.-% NCO, im Bereich von 4 bis 30 Gew.-% oder von 15 bis 25 Gew.-% bezogen auf das Molekulargewicht des Moleküls pro funktionelle Gruppe aufweisen. Die NCO-Gehalte liegen insbesondere im Bereich von 1,2 bis 35 oder von 2 bis 25 Gew.-% für die NCO-Gruppen in Bezug auf das gesamte Molekül.

Vorzugsweise liegen alle Bestandteile des Basispolymers, alle Isocyanat-basierten Verbindungen, alle Alkohole oder/und alle Polyole der Grundmasse A und der Mischung B bei Raumtemperatur flüssig vor, sind hochviskose Flüssigkeiten oder/und in einem organischen Lösemittel gelöste Substanzen. Dies verbessert die homogene Mischbarkeit dieser Bestandteile.

Vorzugsweise enthält/enthalten die Grundmasse A, die Mischung B oder/und die Dichtmasse mindestens ein Additiv ausgewählt aus der Gruppe bestehend aus Photosensibilisatoren, Füllstoffen, Leichtfüllstoffen, Thixotropiermitteln, Weichmachern, Haftvermittlern, Alterungsschutzmitteln, Wasserfängem, Flammschutzmitteln, Vernetzungsmitteln und organischen Lösemitteln.

Aufgrund der Reaktion(en) zwischen Isocyanat und den Mercaptogruppen des Basispolymers entsteht ein Netzwerk auf Basis von Thiourethanen, das die gehärtete Dichtmasse bildet, gegebenenfalls mit einem Anteil an Polyurethanen.

Die Aufgabe wird auch gelöst durch ein Dichtmassen-System oder/und eine Dichtmasse aus einer ungehärteten Grundmasse A auf Basis Schwefel enthaltender Polymere und aus einem Härter mit einem Gehalt an Isocyanat zur Herstellung und Aushärtung einer Dichtmasse, wobei die ungehärtete Grundmasse A ein mercaptoterminiertes Basispolymer auf Basis von Polyether, Polythioether, Polysulfid, deren Copolymeren oder/und deren Mischungen enthält, wobei die ungehärtete Grundmasse A, der Härter oder beide einen Photoinitiator enthalten, der beim Einwirken von energiereicher aktinischer Strahlung aktiviert werden kann und ein Amin-Radikal freisetzen kann, das nach Bildung einer Amin-Verbindung als Katalysator für die Härtung wirken kann oder wirkt, wobei das als Härter verwendete Isocyanat der Mischung aus Grundmasse A und Härter, die zusammen die Mischung B bilden, eine durchschnittliche Funktionalität im Bereich von 1,5 bis 3,2 aufweist, wobei das mercaptoterminierte Basispolymer in der Grundmasse A einen Mercaptangehalt bezogen auf die reaktiven SH-Gruppen zum gesamten Basispolymer im Bereich von 0,8 bis 8 Gew.-% aufweist, und wobei die Mischung aus Grundmasse A und Härter, die zusammen die Mischung B bilden, ab dem Einwirken von energiereicher aktinischer Strahlung, dem Freisetzen eines Amin-Radikals oder/und der Bildung einer Amin-Verbindung härten kann und ab Beginn des Härtens als Dichtmasse bezeichnet wird. Das Dichtmassen-System bezeichnet das System aus ungehärteter Grundmasse A, Härter, Mischung B und Dichtmasse. Die Zusammensetzungen, die Eigenschaften, die Verfahren und die Wirkungen des Dichtmassen-Systems sind daher die gleichen wie bei der ungehärteten Grundmasse A, wie beim Härter, wie bei der Mischung B und wie bei der Dichtmasse; sie werden daher nicht noch einmal erneut beschrieben.

Die Aufgabe wird ferner gelöst durch eine - insbesondere zur Aushärtung auf Befehl ("on demand") vorbereitete - ungehärtete Grundmasse A auf Basis Schwefel enthaltender Polymere zur Herstellung einer Dichtmasse, die dadurch gekennzeichnet ist, dass die ungehärtete Grundmasse A ein mercaptoterminiertes Basispolymer auf Basis von Polyether, Polythioether, Polysulfid, deren Copolymeren oder/und deren Mischungen sowie einen Photoinitiator enthält und dass der Photoinitiator beim Einwirken von energiereicher aktinischer Strahlung aktiviert wird, um nach Freisetzung eines Amin-Radikals eine tertiäre Amin-Verbindung als Katalysator zu bilden, die die Reaktion zwischen mercaptoterminiertem Basispolymer mit Isocyanat-basiertem Härter katalysiert.

Die zur Aushärtung auf Befehl ("on demand") vorbereitete ungehärtete Mischung B, zeichnet sich dadurch aus, dass sie eine Mischung aus einer ungehärteten Grundmasse A und aus einem Härter mit einem Gehalt an Isocyanat ist, dass die Mischung B einen Photoinitiator enthält, der beim Einwirken von energiereicher aktinischer Strahlung aktiviert werden kann und ein Amin-Radikal freisetzen kann, das nach Bildung einer Amin-Verbindung als Katalysator für die Härtung wirkt, und dass die Mischung B ab dem Einwirken von energiereicher aktinischer Strahlung, Freisetzen eines Amin-Radikals und Bilden einer Amin-Verbindung aushärtet. Ab dem Einwirken von energiereicher aktinischer Strahlung härtet die Mischung B stark beschleunigt aus. Ab dem Beginn des Aushärtens wird die Mischung B dann als Dichtmasse bezeichnet.

Die Aufgabe wird außerdem gelöst durch einen Härter zur Herstellung einer Dichtmasse auf Basis Schwefel enthaltender Polymere, der dadurch gekennzeichnet ist, dass der Härter einen Gehalt an Isocyanat sowie mindestens einen Photoinitiator aufweist und dass mindestens ein Photoinitiator beim Einwirken von energiereicher aktinischer Strahlung aktiviert werden kann und ein Amin freisetzen oder/und bilden kann, das als Katalysator für die Härtung eines mercaptoterminierten Basispolymers mit einem Isocyanat enthaltenden Härter wirken kann oder/und wirkt.

Bei dem erfindungsgemäßen Dichtmassen-System, bei der erfindungsgemäßen Mischung B oder/und bei der erfindungsgemäßen Dichtmasse ist/wird die Härtung der ungehärteten Mischung B durch Bestrahlen mit einer energiereichen aktinischen Strahlung gestartet oder/und beschleunigt.

Die Aufgabe wird auch gelöst mit einem Härter, der schwefelhaltige Prepolymere mit einem Rückgrat auf Basis von 1.) Polythioether, 2.) Polysulfid, 3.) Copolymeren mit einem Anteil an Polythioether oder/und mit einem Anteil an Polysulfid oder/und 4.) deren Mischungen enthält, wobei diese Prepolymere Isocyanat-terminiert sind.

In einer besonderen Ausführungsform enthält der Härter schwefelhaltige Prepolymere mit einem Polymerrückgrat auf Basis von 1.) Polythioether, 2.) Polysulfid, 3.) Copolymeren mit einem Anteil an Polythioether oder/und mit einem Anteil an Polysulfid oder/und 4.) deren Mischungen, wobei diese Prepolymere Isocyanat-terminiert sind. Besonders bevorzugt weisen diese isocyanat-terminierten Prepolymeren einen Restmonomergehalt an Isocyanat entweder von kleiner als 3 Gew.-%, von kleiner als 1 Gew.-% oder von kleiner als 0,1 Gew,-% auf.

Ganz besonders bevorzugt ist ein Härter, der schwefelhaltige Prepolymere mit einem Polymerrückgrat auf Basis von 1.) hydroxy- oder/und mercaptoterminiertem Polythioether, 2.) hydroxy- oder/und mercaptoterminiertem Polysulfid, 3.) Copolymeren mit einem Anteil an hydroxy- oder/und mercaptoterminiertem Polythioether oder/und mit einem Anteil an hydroxy- oder/und mercaptoterminiertem Polysulfid oder/und 4.) deren Mischungen enthält, wobei diese Prepolymere Isocyanat-terminiert sind und wobei diese schwefelhaltigen Isocyanat-terminierten Prepolymere einen Restrnonomergehalt an Isocyanat von kleiner als 3 Gew.-%, von kleiner als 1 Gew.-% oder von kleiner als 0,1 Gew.-% aufweisen. Denn es ist besonders schwierig, Härter mit einem so geringen Restmonomergehalt herzustellen. Denn Isocyanat-terminierte Prepolymere mit Polyester- oder/und Polyetherrückgrat mit einem Restmonomergehalt von kleiner 1 Gew.-% oder von kleiner 0,1 Gew.-% sind sehr aufwendig herzustellen, da zusätzlich ein Destillationsschritt notwendig ist, um das Restmonomer aus dem Prepolymer zu entfernen. Ferner sind nach Kenntnis des Anmelders keine isocyanatterminierten Prepolymere mit einem Polysulfid- oder/und Polythioetherrückgrat und einem Restmonomergehalt von kleiner 1 Gew.-% oder kleiner 0,1 Gew.-% bekannt.

Bei einem besonders bevorzugten Verfahren wird ein Härter mit einem Gehalt an schwefelhaltigem Prepolymer mit einem Polymerrückgrat auf Basis von 1.) Polythioether, 2.) Polysulfid, 3.) Copolymeren mit einem Anteil an Polythioether oder/und mit einem Anteil an Polysulfid oder/und 4.) deren Mischungen verwendet, wobei diese Prepolymere Isocyanat-terminiert sind.

Die Aufgabe wird außerdem gelöst durch ein Luftfahrzeug enthaltend Komponenten, die mit einem Dichtmassen-System oder/und mit einer erfindungsgemäßen Dichtmasse oder/und nach einem erfindungsgemäßen Verfahren beschichtet oder/und abgedichtet sind.

### Die erfindungsgemäßen Grundmassen A oder/und B sowie die Dichtmasse können bei Bedarf zusätzlich jeweils mindestens eines der folgenden Additive enthalten:

Photoinitiator auf Basis eines gehinderten tertiären Amins, der ein Radikal eines nicht gehinderten tertiären Amins freisetzen kann.

Welterhin können auch Mischungen aus Photosensibilisatoren oder/und Photoinitiatoren in vorteilhafter Weise verwendet werden, um die Absorptionswellenlänge(n) der Dichtmasse spezifisch einzustellen. Der Photosensibilisator kann die Absorptionskante oder/und den Absorptionsbereich des chemischen Systems verschieben.

Füllstoff insbesondere auf Basis von Magnesiumsilicathydrat wie z.B. Talkum, auf Basis von Aluminiumhydroxid wie z.B. Al(OH)₃, auf Basis eines Feldspats, auf Basis von Quarzmehl oder/und auf Basis eines Calcium- oder/und Aluminiumsilicats, besonders bevorzugt mindestens ein Füllstoff mit einer Teilchengröße vorwiegend im Bereich von 1 bis 20 µm. Ein Zusatz an Füllstoff dient zur Verbesserung der mechanischen Eigenschaften. Als für UV-Bestrahlung geeignete Füllstoffe haben sich Calciumsilicat, Magnesiumsilicathydrat, Aluminiumsilicat, Quarzmehl oder/und Aluminiumhydroxid wie z.B. Aluminiumtrihydrat bewährt. Als für die erfindungsgemäßen Grund- und Dichtmassen eher weniger geeignet haben sich Füllstoffe erwiesen auf Basis von CaCO₃, TiO₂, Ruß oder/und BaSO₄ sowie Füllstoffe mit einem merklichen Fe-Gehalt oder/und Gehalt an weiteren Schwermetallen.

Leichtfüllstoff insbesondere auf Basis von Polyurethan einschließlich deren Copolymeren, Polyamidwachs oder/und Polyolefinwachs. Leichtfüllstoff dient auch zur Verringerung der Dichte. Alternativ oder zusätzlich können auch Hohlfüllkörper zusätzlich verwendet werden.

Thixotropiermittel insbesondere auf Basis von Feldspat, Kieselsäure, Sepiolith oder/und Bentonit. Thixotropiermittel dient zur Einstellung der rheologischen Eigenschaften, insbesondere für ein thixotropes Verhalten, um eine Mischung B standfest auftragen zu können.

Weichmacher insbesondere auf Basis eines Adipats, eines Benzoats, eines Citrats, eines Phthalats oder/und eines Terphenyls. Weichmacher dient zur Flexibilisierung der Dichtmasse.

Haftvermittler insbesondere auf Basis von einem Phenolharz, von einem Resol oder/und von einem Silan/Silano/Siloxan- hier kurz "Silan" genannt wie z.B. auf Basis von organofunktionellem Alkoxysilan, wie z.B. Mercaptopropyltrimathoxysilan, Mercaptopropyltriethoxysilan, Glycidoxypropyltrimethoxysilan, Glycidoxypropyltriethoxysilan, Methacryloxymethyltrimethoxysilan oder/und (Methacryloxymethyl)methyldimethoxysilan, oder/und von einem Bis-silyl-Silan. Haftvermittler dient als Adhäsionspromotor zur Verbesserung der Haftung zwischen der Dichtmasse und dem Substrat.

Alterungsschutzmittel werden insbesondere auf Basis von sterisch gehindertem Phenol, auf Basis von Phenylenamin oder/und als sogenannte Hindered Amine Light Stabilisators wie Lichtstabilisatoren auf Basis von sterisch gehinderten Aminen HALS eingesetzt, beispielsweise 4,6-bis (dodecylthiomethyl)-o-crasol, Ethylen-bis(oxyethylen)bis-(3-(5-tert-butyl-4-hydroxy-m-tolyl)-propionat, Thiodiethylen-bis[3-(3,5-di-tert-butyl-4-hydroxyphenyl)propionat], Pentaerythritol tetrakis(3-(3,5-di-tert-butyl-4-hydroxyphenyl)propionat) oder/und Phenylenamine wie z.B. N-Isopopyl-N'-phenyl-p-phenylenediamin. Alterungsschutzmittel dient dazu, die durch Alterungsprozesse der Polymermatrix entstandenen Radikale oder/und andere Abspaltungsprodukte abzufangen und trägt zu einer Verzögerung oder Verhinderung einer Alterung wie z.B. Vergilbung oder Versprödung der Dichtmasse bei.

Wasserfänger insbesondere auf Basis eines organofunktionellen Alkoxysilans, auf Basis eines Zeoliths wie einem Alkali-Aluminium-Zeolith oder/und auf Basis eines monofunktionellen Isocyanats, wobei jenes monofunktionelle Isocyanat zuerst das Wasser chemisch bindet, aber nicht als Härter wirken kann. Wasserfänger dient zum Abfangen des in den Rohstoffen vorhandenen Wassers.

Vernetzungsmittel insbesondere auf Basis von Alkohol oder/und Polyol, das vorzugsweise hilft, die mechanischen Eigenschaften weiter zu verbessern.

Flammschutzmittel insbesondere auf Basis von Phosphorsäureester, auf Basis von Ammoniumpolyphosphat, auf Basis von Melamin, auf Basis von Aluminiumhydroxid oder/und auf Basis von Magnesiumhydroxyd. Die Flammschutzmittel dienen zur Verbesserung des Brandschutzverhaltens der Dichtmasse wie z,B. zum Verzögern des Brennbeginns der Dichtmasse, zum spontanen Beenden des Brennvorgangs oder/und zum Verringern der Rauchentwicklung.

Oder/und mindestens ein organisches Lösemittel insbesondere auf Basis eines Esters oder/und Ethers wie z.B. Ethylacetat oder/und Monopropylenglykolmonomethylether. Sie vereinfachen gegebenenfalls die Vergleichmäßigung des flüssigen oder hochviskosen Gemisches.

### Vorzugsweise enthält die erfindungsgemäße Zusammensetzung der Grundmasse A:

Ein Basispolymer mit einem Gehalt Im Bereich von 30 bis 98 Gew.-%, bevorzugt im Bereich von 40 bis 95 Gew.-%, von 45 bis 90 Gew.-%, von 50 bis 85 Gew.-%, von 55 bis 80 Gew.-% oder Im Bereich von 60 bis 75 Gew.% mindestens eines mercaptoterminierten Polymers/Copolymers oder/und eines mercaptoterminiertes Polythioethers, gegebenenfalls einschließlich eines Gehalts an Monomeren oder/und Oligomeren von 0 oder im Bereich von 0,001 bis 20 Gew.-%, der 0 oder 0,001 bis 10 Gew.-% des Basispolymers ausmachen kann.

Gegebenenfalls mindestens einen Weichmacher mit einem Gesamtgehalt von 0 Gew.-% oder im Bereich von 0,1 bis 30 Gew.-%, von 2 bis 20 Gew.-%, von 5 bis 15 Gew.-% oder von 6 bis 10 Gew.-%;
Gegebenenfalls mindestens einen Füllstoff mit einem Gesamtgehalt von 0 Gew.-% oder im Bereich von 0,1 bis 50 Gew.-%, von 2 bis 40 Gew.-%, von 5 bis 30 Gew.-%, von 10 bis 20 Gew.-% oder von 6 bis 15 Gew.-%;
Gegebenenfalls mindestens einen Leichtfüllstoff mit einem Gesamtgehalt von 0 Gew.-% oder im Bereich von 0,1 bis 30 Gew.-%, von 3 bis 25 Gew.-%, von 5 bis 20 Gew,-% oder von 8 bis 15 Gew.-%;
Gegebenenfalls mindestens ein Thixotropiermittel mit einem Gesamtgehalt von 0 Gew.-% oder im Bereich von 0,01 bis 30 Gew.-%, von 0,01 bis 10 Gew.-%, von 0,2 bis 25 Gew.-%, von 0,5 bis 20 Gew.-%, von 1 bis 15 Gew.-%, von 0,5 bis 8 Gew.-% oder von 1,5 bis 5 Gew.-%, wobei grundsätzlich auch größere Mengen als 10 Gew.-% möglich sind, insbesondere wenn das Thixotropiermittel gleichzeitig als Füllstoff dient und für die energiereiche aktinische Strahlung ausreichend durchlässig ist, wobei es in diesem Fall bezüglich seines Gehalts nur bei den Thixotropiermitteln gezählt wird;
Gegebenenfalls mindestens einen Photoinitiator, der ein Radikal auf Basis von tertiärem Amin freisetzen kann, mit einem Gesamtgehalt von 0 Gew.-% oder im Bereich von 0,05 bis 5 Gew.-%, von 0,1 bis 4 Gew.-%, von 0,3 bis 3 Gew.-% oder von 0,6 bis 2 Gew.-%;
Gegebenenfalls mindestens einen Photosensibilisator, der das Absorptionsspektrum der Dichtmassenformulierung verschieben kann, mit einem Gesamtgehalt von 0 Gew.-% oder im Bereich von 0,05 bis 5 Gew.%, von 0,1 bis 4 Gew.-%, von 0,3 bis 3 Gew.-% oder von 0,6 bis 2 Gew.-%;
Gegebenenfalls mindestens einen Haftvermittler mit einem Gesamtgehalt von 0 Gew.-% oder Im Bereich von 0,1 bis 10 Gew.%, von 0,3 bis 8 Gew.%, von 0,6 bis 6 Gew.-%, von 1 bis 5 Gew.-%, von 2 bis 4 Gew.-% oder von 1,5 bis 3 Gew.-%;
Gegebenenfalls mindestens einen Wasserfänger mit einem Gesamtgehalt von 0 Gew.-% oder im Bereich von 0,5 bis 2,5 Gew.-% oder von 0,5 bis 1,5 Gew.-%;
Gegebenenfalls mindestens ein Alterungsschutzmittel mit einem Gesamtgehalt von 0 Gew.-% oder im Bereich von 0,5 bis 2,5 Gew. % oder von 0,5 bis 1,5 Gew.-%.

Gegebenenfalls mindestens ein Flammschutzmittel mit einem Gesamtgehalt von 0 Gew.-% oder im Bereich von 0,5 bis 40 Gew.-% oder von 0,5 bis 10 Ges.-%.

Gegebenenfalls mindestens ein Vernetzungsmittel insbesondere auf Basis von Alkohol oder/und Polyol, das vorzugsweise hilft, die mechanischen Eigenschaften weiter zu verbessern, mit einem Gesamtgehalt von 0 Gew.-% oder im Bereich von 0,1 bis 10 Gew.-% oder von 0,5 bis 6 Gew.-%.

Und gegebenenfalls mindestens ein organisches Lösemittel auf Basis eines Esters oder/und Ethers, mit einem Gesamtgehalt von 0 Gew.-% oder im Bereich von 0,1 bis 15 Gew.-% oder von 2 bis 90 Gew.-%.

Eine homogene Mischung der Grundmasse A kann beispielsweise durch Verwendung eines Vakuum-Dissolvers erzielt werden.

### Vorzugsweise enthält der erfindungsgemäße Härter:

Mindestens ein Isocyanat mit einem Gesamtgehalt im Bereich von 20 bis 100, von 30 bis 98, von 40 bis 95, von 50 bis 90 Gew.-%, von 60 bis 85 oder von 70 bis 80 Gew.-%. Das Isocyanat weist hierbei vorzugsweise einen NCO-Gehalt im Bereich von 1 bis 55 Gew.-% NCO, im Bereich von 4 bis 40 Gew.-% oder von 15 bis 25 Gew.-% auf.

Gegebenenfalls mindestens einen Photoinitiator, der ein Radikal auf Basis von tertiärem Amin freisetzen kann, mit einem Gesamtgehalt von 0 Gew.% oder im Bereich von 1 bis 90 Gew.-%, im Bereich von 2 bis 50 Gew.-% oder Im Bereich von 3 bis 20 Gew.-%.

Gegebenenfalls mindestens einen Photosensibilisator mit einem Gesamtgehalt von 0 Gew.-% oder im Bereich von 1 bis 90 Gew.-% oder im Bereich von 2 bis 50 Gew.-% oder im Bereich von 3 bis 20 Gew.-%,

Gegebenenfalls mindestens ein Thixotropiermittel mit einem Gesamtgehalt von 0 Gew.-% oder im Bereich von 0,01 bis 10 Gew.-% oder von 0,5 bis 5 Gew.-%. Außerdem kann es vorteilhaft sein, wenn der Härter auch ein Thixotropiermittel wie z.B. auf Basis von pyrogener Kieselsäure enthält, da sich dieses als gutes Mittel für die Einstellung der Fließeigenschaften des Härters besonders bewährt hat.

Gegebenenfalls mindestens ein Vernetzungsmittel insbesondere auf Basis von Alkohol oder/und Polyol, das vorzugsweise hilft, die mechanischen Eigenschaften weiter zu verbessern, mit einem Gesamtgehalt von 0 Gew.-% oder im Bereich von 0,1 bis 10 Gew.-% oder von 0,5 bis 6 Gew.-%.

Und gegebenenfalls mindestens ein organisches Lösemittel auf Basis eines Esters oder/und Ethers, mit einem Gesamtgehalt von 0 Gew.-% oder im Bereich von 0,1 bis 15 Gew.-% oder von 2 bis 10 Gew.-%.

Eine homogene Mischung des Härters kann beispielsweise durch Verwendung eines Vakuum-Dissolvers erzielt werden.

### Vorzugsweise enthält die erfindungsgemäße Zusammensetzung der Mischung B oder/und die hieraus gebildete Dichtmasse:

Mindestens ein Basispolymer mit einem Gehalt im Bereich von 20 bis 97 Gew.-% vor der Vernetzungsreaktion mit dem Isocyanat-basierten Härter, bevorzugt im Bereich von 40 bis 95 Gew.-%. von 45 bis 90 Gew.-%, von 50 bis 85 Gew.-%, von 55 bis 80 Gew.-% oder im Bereich von 60 bis 75 Gew.-% mindestens eines mercaptoterminierten Polymers oder/und eines mercaptoterminiertes Polythioethers.

Mindestens ein Basispolymer mit einem Gehalt im Bereich von 20 bis 97 Gew.% nach der Vernetzungsreaktion mit dem Isocyanat-basierten Härter, bevorzugt im Bereich von 40 bis 95 Gew.%, von 45 bis 90 Gew.-%, von 50 bis 85 Gew.-%, von 55 bis 80 Gew.-% oder im Bereich von 60 bis 75 Gew.-%, das nach der Vernetzungsreaktion mit Isocyanat ein Polymer/Copolymer auf Basis von Thiourethan ist, wobei aus der Vernetzungsreaktion mit mindestens einem Polyol auch ein Polymer/Copolymer auf Basis von Polyurethan in einem geringen Anteil enthalten oder/und in das Netzwerk eingebunden sein kann.

Mindestens einen Photoinitiator, der ein Radikal auf Basis von tertiärem Amin freisetzen kann, mit einem Gesamtgehalt von 0 Gew.-% oder im Bereich von 0,05 bis 5 Gew.-%, von 0,1 bis 4 Gew.%, von 0,3 bis 3 Gew.-% oder von 0,6 bis 2 Gew.-% oder/und die Radikale oder/und die kurze Zeit danach hieraus entstehenden Verbindungen mit einem Gesamtgehalt von 0 Gew.-% oder im Bereich von 0,05 bis 5 Gew.-%, von 0,1 bis 4 Gew.-%, von 0,3 bis 3 Gew.-% oder von 0,6 bis 2 Gew.-%;

Gegebenenfalls mindestens einen Photosensibilisator mit einem Gesamtgehalt von 0 Gew.-% oder im Bereich von 0,05 bis 5 Gew.%, von 0,1 bis 4 Gew.-%, von 0,3 bis 3 Gew.-% oder von 0,6 bis 2 Gew.%;

Mindestens ein Isocyanat mit einem Gesamtgehalt im Bereich von 20 bis 100, von 30 bis 98, von 40 bis 95, von 50 bis 90 Gew.-%, von 60 bis 85 oder von 70 bis 80 Gew.-%.

Gegebenenfalls mindestens einen Füllstoff mit einem Gesamtgehalt von 0 Gew.-% oder im Bereich von 0,1 bis 50 Gew.-%, von 2 bis 40 Gew.-%, von 5 bis 30 Gew.-%, von 10 bis 20 Gew.-% oder von 6 bis 15 Gew.-%;
Gegebenenfalls mindestens einen Leichtfüllstoff mit einem Gesamtgehalt von 0 Gew.-% oder im Bereich von 0,1 bis 30 Gew.-%, von 3 bis 25 Gew.%, von 5 bis 20 Gew.-% oder von 8 bis 15 Gew.-%;
Gegebenenfalls mindestens ein Thixotropiermittel mit einem Gesamtgehalt von 0 Gew.-% oder im Bereich von 0,01 bis 30 Gew.-%, von 0,01 bis 10 Gew.-%, von 0,2 bis 25 Gew.-%, von 0,5 bis 20 Gew.-%, von 1 bis 15 Gew.-%, von 0,5 bis 8 Gew.-% oder von 1,5 bis 5 Gew.-%, wobei grundsätzlich auch größere Mengen als 10 Gew.-% möglich sind, insbesondere wenn das Thixotropiermittel gleichzeitig als Füllstoff dient und für die energiereiche aktinische Strahlung ausreichend durchlässig ist, wobei es in diesem Fall bezüglich seines Gehalts nur als Thixotropiermittel gezählt wird;
Gegebenenfalls mindestens einen Weichmacher mit einem Gesamtgehalt von 0 Gew.-% oder im Bereich von 0,1 bis 30 Gew.-%, von 2 bis 20 Gew.-%, von 5 bis 15 Gew.-% oder von 6 bis 10 Gew.-%;
Gegebenenfalls mindestens einen Haftvermittler mit einem Gesamtgehalt von 0 Gew.-% oder Im Bereich von 0,1 bis 10 Gew.-%, von 0,3 bis 8 Gew.-%, von 0,6 bis 6 Gew.-%, von 1 bis 5 Gew.-%, von 2 bis 4 Gew.-% oder von 1,5 bis 3 Gew.-%;
Gegebenenfalls mindestens einen Wasserfänger mit einem Gesamtgehalt von 0 Gew.-% oder Im Bereich von 0,5 bis 2,5 Gew.-% oder von 0,5 bis 1,5 Gew.-%;
Gegebenenfalls mindestens ein Alterungsschutzmittel mit einem Gesamtgehalt von 0 Gew.-% oder im Bereich von 0,5 bis 2,5 Gew. % oder von 0,5 bis 1,5 Gew.-%.

Und gegebenenfalls mindestens ein organisches Lösemittel auf Basis eines Esters oder/und Ethers, mit einem Gesamtgehalt von 0 Gew.-% oder im Bereich von 0,1 bis 15 Gew.% oder von 2 bis 10 Gew.%.

Eine homogene Mischung der Mischung B kann beispielsweise durch Verwendung eines Techkit-Kartuschenmischers oder eines Statikmischers ("Side by Side" oder als "bulk mixer") erzielt werden.

Das Gewichtsverhältnis von mercaptoterminiertem Basispolymer zu Isocyanat-basierten Verbindungen im Härter liegt ohne Berücksichtigung der Gehalte an weiteren Verbindungen der jeweiligen Zusammensetzungen vorzugsweise im Bereich von 100 : 3 bis 100 : 50, besonders bevorzugt im Bereich von 100 : 4 bis 100 : 25, von 100 : 5 bis 100: 15 oder von 100 : 6 bis 100 : 12.

Das Gewichtsverhältnis der Teilmischung(en) der Grundmasse A zu dem Isocyanatbasiertem Härter liegt bei Berücksichtigung der Gehalte der Gehalte an weiteren Verbindungen der jeweiligen Zusammensetzungen vorzugsweise im Bereich von 100 : 3 bis 100 : 30, besonders bevorzugt im Bereich von 100 : 4 bis 100 : 25, von 100 : 5 bis 100 : 15 oder von 100 : 6 bis 100 : 12.

Das Molgewichtsverhältnis der Teilmischung(en) der Grundmasse A zu dem Isocyanat-basiertem Härter liegt bei Berücksichtigung der weiteren Gehalte der jeweiligen Zusammensetzungen vorzugsweise Im Bereich von 0,6 : 1 bis 5 : 1, besonders bevorzugt im Bereich von 0,8 : 1 bis 4 : 1, von 0,9 : 1 bis 3 : 1 oder von 1 : 1 bis 2 : 1.

Das Gewichtsverhältnis von mercaptoterminiertem Basispolymer zu Photoinitiator liegt ohne Berücksichtigung weiterer Gehalte der jeweiligen Zusammensetzungen vorzugsweise im Bereich von 100 : 0,1 bis 100 : 5, besonders bevorzugt im Bereich von 100 : 0,5 bis 100 : 4, von 100 : 0,8 bis 100 : 3 oder von 100 : 1 bis 100 : 2.

Das Molgewichtsverhältnis von Mercapto-Gruppen zu Isocyanat-Gruppen liegt ohne Berücksichtigung weitere Gehalte und Gruppen der jeweiligen Zusammensetzungen vorzugsweise im Bereich von 1 : 0,8 bis 1 : 2, besonders bevorzugt im Bereich von 1 : 0,9 bis 1 : 1,5, von 1 : 0,95 bis 1 : 1,3 oder von 1 : 0,98 bis 1 : 1,2.

Vorzugsweise weisen die erfindungsgemäße Mischung B, die erfindungsgemäße Dichtmasse und das erfindungsgemäße Dichtmassen-System ein mercaptoterminiertes Basispolymer auf Basis von Polyether, Polythioether, Polysulfid, deren Copolymeren oder/und deren Mischungen, mindestens einen Photoinitiator auf Basis von sterisch gehindertem tertiären Amin und mindestens ein Isocyanat sowie gegebenenfalls mindestens ein Additiv auf. Das mindestens eine Additiv kann vorzugsweise jeweils mindestens eines sein, das ausgewählt wird aus der Gruppe bestehend aus Photosensibilisatoren, Füllstoffen, Leichtfüllstoffen, Thixotropiermitteln, Weichmachern, Haftvermittlern, Alterungsschutzmitteln, Wasserfängern, Flammschutzmitteln, Vernetzungsmitteln und organischen Lösemitteln. Vorzugsweise ist als Füllstoff Magnesiumsilicathydrat, Aluminiumsilicat, Aluminiumhydroxid wie z.B. Aluminium-trihydrat oder/und Calciumsilicat enthalten. Ein Teil dieser Hauptkomponenten und gegebenenfalls auch ein Teil dieser Additive können auch in der Grundmasse A oder/und im Härter enthalten sein.

### Die erfindungsgemäßen Massen weisen vorzugsweise folgende Eigenschaften auf:

Die erfindungsgemäßen Grundmassen, Mischungen B und Dichtmassen weisen üblicherweise die meisten, wenn nicht alle der im Folgenden genannten Eigenschaften auf:
Die dynamische Viskosität der erfindungsgemäßen Grundmassen A und Mischungen B liegt vorzugsweise zwischen 1 und 2500 Pa·s oder zwischen 10 bis 1800 Pa·s bestimmt nach DIN 65262-1, gemessen mit Brookfield-Viskosimeter bei 23 °C, mit Spindel 7 bei 2 bis 10 U/min.

Die UV-Bestrahlung erfolgt vorzugsweise je nach Schichtdicke oder/und UV-Quelle über einen Zeitraum von 1 s bis 5 min, vorzugsweise von 5 s bis 3 min oder von 10 s bis 1 min. Die klebfreie Zeit der Dichtmasse bestimmt nach DIN 65262-1 liegt vorzugsweise im Bereich von 1 s bis 5 min insbesondere je nach Schichtdicke und liegt oft im Bereich von 0,3 bis 3 min oder von 1 bis 2 min, ab Beginn der UV-Bestrahlung.

Eine Verarbeitungszeit der erfindungsgemäßen Mischungen B und Dichtmassen bestimmt nach DIN 65262-1 liegt vorzugsweise im Bereich von 0,5 bis 24 Stunden - unter anderem je nach Photoinitiator-Menge der zu bestrahlenden Grundmasse, besonders bevorzugt im Bereich von 1 bis 6 oder 1 bis 2 Stunden.

Die ungehärtete Mischung B zeichnet sich Insbesondere dadurch aus, dass sie - insbesondere je nach Photoinitiator-Konzentration - eine Verarbeitungszeit entsprechend DIN 65262-1 im Bereich von 0,5 bis 12 Stunden aufweist.

Eine Dichtmasse, die nach dem erfindungsgemäßen Verfahren hergestellt ist, weist/wies vorzugsweise eine klebfreie Zeit - insbesondere auch je nach Photoinitiator-Konzentration - entsprechend DIN 65262-1 auf im Bereich von 0,05 bis 5 Minuten nach Beginn der energiereichen aktinischen Bestrahlung.

Die Durchhärtezeit oder die Zeit zum Erreichen der Shore A-Härte von 30 bestimmt nach ISO 7619 liegt bei den erfindungsgemäßen Dichtmassen vorzugsweise - unter anderem je nach Photoinitiator-Menge oder/und Schichtdicke - im Bereich von 1 bis 960 min, bevorzugt im Bereich von 5 bis 300 min, besonders bevorzugt im Bereich von 10 bis 60 min.

Die Dichte der erfindungsgemäßen Grundmassen, Mischungen B und Dichtmassen bestimmt nach ISO 2781 liegt vorzugsweise im Bereich von im Bereich von 0,9 bis 1,6 g/cm³ und oft im Bereich von 1,2 bis 1,5 g/cm³.

Die erfindungsgemäßen Dichtmassen zeigen vorzugsweise eine Shore A-Härte bestimmt nach ISO 7619 und gemessen 2 Wochen nach UV-Bestrahlung bei Lagerung an Luft bei 23 ± 2 °C und 50 ± 5 % relative Luftfeuchtigkeit im Bereich von 20 bis 80, besonders bevorzugt im Bereich von 30 bis 60, besonders bevorzugt im Bereich von 40 bis 55.

Die Bruchdehnung der erfindungsgemäßen Dichtmassen bestimmt nach ISO 37 und gemessen 2 Wochen nach UV-Bestrahlung bei Lagerung an Luft bei 23 ± 2 °C und 50 ± 5 % relative Luftfeuchtigkeit liegt vorzugsweise im Bereich von 100 bis 1000 %, besonders bevorzugt im Bereich von 200 bis 800 % oder von 300 bis 600 %.

Die Bruchdehnung der erfindungsgemäßen Dichtmassen bestimmt nach ISO 37 und gemessen nach 168 Stunden 60 °C Treibstofflagerung mit dem Treibstofftyp Jet A1 liegt vorzugsweise im Bereich von 100 bis 800 %, besonders bevorzugt im Bereich von 200 bis 600 % oder von 300 bis 500 %.

Die Bruchdehnung der erfindungsgemäßen Dichtmassen bestimmt nach ISO 37 und gemessen nach 300 Stunden 100 °C Treibstofflagerung mit dem Treibstofftyp Jet A1 liegt vorzugsweise im Bereich von im Bereich von 100 bis 700 %, besonders bevorzugt im Bereich von 200 bis 600 % oder von 400 bis 500 %.

Die Bruchdehnung der erfindungsgemäßen Dichtmassen bestimmt nach ISO 37 und gemessen nach 1000 Stunden 35 °C Wasserlagerung liegt vorzugsweise im Bereich von 100 bis 700 %, besonders bevorzugt im Bereich von 200 bis 500 % oder von 250 bis 350 %.

Der Schälwiderstand der erfindungsgemäßen Dichtmassen auf Aluminiumlegierung 2024 T3 bestimmt nach DIN 65262-1 liegt vorzugsweise im Bereich von 60 bis 350 N/25mm, besonders bevorzugt im Bereich von 100 bis 250 N/25mm oder von 160 bis 200 N/25mm.

Der Schälwiderstand der erfindungsgemäßen Dichtmassen auf Lacken wie z.B. auf lösungsmittelhaltigen Grundlacken wie z.B. Epoxy-Grundlack 37035 A von Akzo Nobel Aerospace Coatings, auf wässerigen Grundlacken wie z.B. solchen auf Epoxidbasis wie Seevenax^{®} 313-01 und Seevenax^{®} 313-02 von Mankiewicz, auf Decklacken wie z.B. auf wässerigen Decklacken auf Epoxidbasis wie Seevenax^{®} 313-01 von Mankiewicz, auf Finish F 70-A von Mapaero oder/und auf lösungsmittelhaltigen Decklacken auf Polyurethanbasis wie Aerodur^{®} 21-100 von Akzo Nobel und Alexit^{®} 406-22 von Mankiewicz bestimmt nach DIN 65262-1 liegt vorzugsweise im Bereich von 50 bis 350 N/25mm, besonders bevorzugt im Bereich von 100 bis 300 N/25mm oder von 170 bis 210 N/25mm,

Die Zugfestigkeit der erfindungsgemäßen Dichtmassen bestimmt nach ISO 37 und gemessen 2 Wochen nach UV-Bestrahlung bei Lagerung an Luft bei 23 ± 2 °C und 50 ± 5 % relative Luftfeuchtigkeit liegt vorzugsweise im Bereich von 0,5 bis 3,5 MPa, besonders bevorzugt im Bereich von 1 bis 3 MPa oder von 1,8 bis 2.7 MPa.

Die Zugfestigkeit der erfindungsgemäßen Dichtmassen bestimmt nach ISO 37 und gemessen nach 168 Stunden 60 °C Treibstofflagerung Typ Jet A1 im Bereich von 0,5 bis 3 MPa, besonders bevorzugt im Bereich von 1 bis 2,5 oder von 1,5 bis 2 MPa.

Die Zugfestigkeit der erfindungsgemäßen Dichtmassen bestimmt nach ISO 37 und gemessen nach 300 Stunden 100 °C Treibstofflagerung Typ Jet A1 liegt vorzugsweise im Bereich von 0,5 bis 3 MPa, besonders bevorzugt im Bereich von 1 bis 2 MPa oder von 0,8 bis 1,1 MPa.

Die Zugfestigkeit der erfindungsgemäßen Dichtmassen bestimmt nach ISO 37 und gemessen nach 1000 Stunden 35 °C Wasserlagerung liegt vorzugsweise im Bereich von 0,5 bis 3 MPa, besonders bevorzugt im Bereich von 1 bis 2 MPa oder von 1,5 bis 1,7 MPa.

Das erfindungsgemäße Dichtmassen-System oder/und die erfindungsgemäße Dichtmasse weisen vorzugsweise eine Shore A-Härte von mindestens 10, gemessen 5 bis 600 Minuten nach energiereicher aktinischer Bestrahlung, und eine Shore A-Härte im Bereich von 30 bis 60, gemessen 2 Wochen nach energiereicher aktinischer Bestrahlung, auf.

Oder/und die Kälteflexibilität der erfindungsgemäßen Dichtmassen, für deren Bestimmung die Dichtmasse insbesondere in Form einer Folie nach der energiereichen aktinischen Bestrahlung 2 Wochen lang bei einer Umgebungstemperatur von 23 ± 2 °C und 50 ± 5 % relative Luftfeuchtigkeit gelagert wird, anschließend kurzzeitig auf eine Temperatur von -55 ± 2 °C abgekühlt wird, bei dieser tiefen Temperatur in einem Winkel von 30° gebogen wird und danach bei Raumtemperatur auf das Auftreten von Fehlstellen nach hausinterner Prüfvorschrift visuell untersucht wird. Hiernach zeigen die erfindungsgemäßen Dichtmassen vorzugsweise keine Risse und auch keine anderen Fehlstellen, die durch die Biegung bei tiefer Temperatur entstanden sind.

Das erfindungsgemäße Dichtmassen-System oder/und die erfindungsgemäße Dichtmasse weisen vorzugsweise nach vollständiger Aushärtung folgende Eigenschaften auf:
Keine Risse oder andere Fehlstellen in der Dichtmasse, die bei der Bestimmung der Tieftemperaturflexibilität durch ein Biegen in einem Winkel von 30° bei einer Temperatur von -55 ± 2 °C entstanden sind,
eine Zugfestigkeit im Bereich von 0,5 bis 2,8 MPa nach 168 Stunden Treibstofflagerung bei einer Temperatur von 60 °C, nach 300 Stunden Treibstofflagerung bei einer Temperatur von 100 °C und nach 1000 Stunden Wasserlagerung bei einer Temperatur von 35 °C.
eine Bruchdehnung im Bereich von 100 bis 800 % nach 168 Stunden Treibstofflagerung bei einer Temperatur von 60 °C, nach 300 Stunden Treibstofflagerung bei einer Temperatur von 100 °C und nach 1000 Stunden Wasserlagerung bei einer Temperatur von 35 °C oder/und
eine Dichte im Bereich von 1,00 bis 1,45 g/cm³.

Das erfindungsgemäße Dichtmassen-System oder/und die erfindungsgemäße Dichtmasse weisen vorzugsweise nach vollständiger Aushärtung folgende Eigenschaften auf:
Eine Zugfestigkeit im Bereich von 0,5 bis 3 MPa,
eine Bruchdehnung im Bereich von 100 bis 900 % oder/und
einen Schälwiderstand im Bereich von 50 bis 300 N/25mm.

Der Schälwiderstand wird hierbei insbesondere an Substraten von Aluminium oder Aluminiumlegierungen, von Titan oder Titanlegierungen, von Edelstählen, von Kompositwerkstoffen wie z.B. Carbon-faserverstärkter Kunststoff CFK oder/und an lackierten Substraten, die z.B. mit mindestens einem lösungsmittelhaltigen oder wässerigen Grundlack oder/und Decklack insbesondere auf Basis von Epoxy-, Polyester-oder Polyurethan-Lack lackiert sind, bestimmt.

### Weitere Überraschungseffekte und Vorteile:

Die Photoinitiatoren, die tertiäres Amin freisetzen, lösen bei energiereicher aktinischer Bestrahlung überraschenderweise auch die chemische Reaktion von Isocyanaten mit Mercaptanen aus oder/und beschleunigen sie, z.B. wenn die erfindungsgemäße Mischung der Mischung B UV-Licht ausgesetzt wird.

Es war überraschend, dass ein Photoinitiator, der nur geringe Mengen an tertiärem Amin-Radikal freisetzt, ausreichende Mengen katalytischer Aktivität für die Aushärtung von Grundmassen bereitstellt.

Es war überraschend, dass vielfach bereits eine so geringe Menge wie z.B. 0,1 Gew.% an Photoinitiator in der Mischung B auch für verdeckte Stellen, hintergriffige Stellen und Bohrungen für eine katalytische Aktivierung ausreichen.

Es war überraschend, dass mit dem gefundenen Dichtmassen-System sowohl die Aushärtung größerer Schichtdicken bis etwa 7 mm Schichtdicke möglich Ist, als auch die beschleunigte Aushärtung bis zu etwa dieser Schichtdicke.

Hierbei wurde überraschenderweise festgestellt, dass insbesondere MDI-basierte Isocyanate besonders effizient wirkten.

Offenbar erstmalig werden solche besonders schnell oberflächenhärtenden und lange verarbeitbaren Dichtmassen beschrieben.

Offenbar erstmalig werden solche besonders schnell oberflächenhärtenden und sogar auf Befehl ("on demand") arbeitenden Dichtmassen beschrieben.

Überraschenderweise werden bei vorgegebenen Verarbeitungszeiten äußerst kurze Klebfreizeiten und im Vergleich zum Stand der Technik auch äußerst kurze Durchhärtezeiten erzielt.

Überraschenderweise wurde festgestellt, dass die erfindungsgemäßen Dichtmassen für den Start der Härtung vielfach mit sehr geringen UV-Dosen auskommen, das heißt mit einer UV-Dosis ab etwa 500 mJ/cm².

Bei dem erfindungsgemäßen Verfahren können sowohl besonders dünne Schichten von Dichtmassen z.B. von 0,1 bis 0,5 µm und auch besonders dicke Schichten von 3 bis 7 mm mit UV-Licht ausgehärtet werden können, so dass ein Bereich etwa von 0,1 bis 7 mm ausgehärtet werden kann. Dabei können die Dichtmassen sowohl flächig, als auch raupenartig aufgetragen werden bzw. aufgetragen sein.

Das erfindungsgemäße Beschichtungsverfahren eignet sich insbesondere für die Luftfahrtindustrie, kann aber auch überall dort eingesetzt werden, wo eine schnelle Durchhärtung und vor allem eine sehr schnelle Oberflächenhärtung bei einer relativ langen Verarbeitungszeit der Dichtmasse erforderlich oder/und vorteilhaft sind.

Das erfindungsgemäße Beschichtungsverfahren eignet sich insbesondere zum Abdichten von Konstruktionselementen wie z.B. von Tanks und von abzudichtenden Bereichen wie z.B. Pflasterungen wie bei Tankstellen und Chemieanlagen, zum Verbinden von aufeinanderliegenden Konstruktionselementen wie z.B. Blechen, Folien und anderen Substraten, zum Verfüllen von Hohlräumen und Zwischenräumen, zum Beschichten insbesondere von metallischen Materialien und von Kompositen wie z.B. kohlenstofffaserverstärkten oder glasfaserverstärkten Kunststoffen, zum aerodynamischen Glätten und Verdichten sowie als Korrosionsschutz an Stellen, wo z.B. im Bereich von Bohrungen die Korrosionsschutzschichten der metallischen Elemente verletzt oder entfernt werden. Es kann auch eine tragende Funktion z.B. während des Transports erfüllen.

Die erfindungsgemäßen Verfahren eignen sich insbesondere zur Verwendung in der Transportindustrie wie z.B. im Automobilbau, im Schienenfahrzeugbau, im Schiffsbau, im Luftfahrzeugbau oder im Raumfahrzeugbau, im Apparate- und Maschinenbau, im Bauwesen oder für die Herstellung von Möbeln.

Das erfindungsgemäße Dichtmassen-System, die erfindungsgemäße Grundmasse A, der erfindungsgemäße Härter, die erfindungsgemäße Mischung B oder/und die erfindungsgemäße Dichtmasse eignen sich insbesondere zur Verwendung für den Bau und für die Instandhaltung von Luft- und Raumfahrzeugen, von Automobilien und Schienenfahrzeugen, im Schiffsbau, im Apparate- und Maschinenbau, im Bauwesen z.B. für die Abdichtung von Bodenplatten z.B. bei Tankstellen und chemischen Anlagen sowie als Gießharz oder für die Herstellung von Gießharzen für die Elektrotechnik und Elektronik.

### Beispiele und Vergleichsbeispiele

Der Gegenstand der Erfindung wird Im Folgenden anhand von Ausführungsbeispielen näher erläutert.

### Allgemeine Herstell- und Prüfvorschrift der erfindungsgemäßen Dichtmassen,

Die erfindungsgemäße Grundmasse A wurde hergestellt, indem zuerst Polysulfid-Polymere wie z.B. Thiokol^{®} LP 12, Thioplast^{®} G 10 oder/und Thioplast^{®} G131, Molekularsiebmaterial auf Basis von Zeolith Purmol 3ST, mindestens ein Photoinitiator auf Basis von α-Aminoketonen, mindestens ein Photosensibilisator wie z.B. Benzophenon oder/und Isopropylthioxanthon, ein Thixotropiermittel wie z.B. auf Basis von Sepiolith und ein Haftvermittler wie z.B. auf Basis von einem Phenolharz oder auf Basis von organofunktionellem Alkoxysilan für 10 Minuten unter Vakuum von < 50 mbar oder sogar von < 10 mbar und unter Kühlung eines Planetendissolvers mit Kühlwasser bei einer Drehzahl von ca. 2000 U/min vermischt wurden. Anschließend wurden die restlichen Füllstoffe wie z.B. auf Basis von Magnesiumsilicathydraten, Aluminiumsilicaten, Calciumsilicaten, Polyamiden oder/und Polyethylenwachsen und ein Alterungsschutzmittel wie z.B. auf Basis von Phosphorigsäuresester hinzugegeben und für weitere 10 bis 20 Minuten unter Vakuum von < 50 mbar oder sogar von < 10 mbar mittels Planetendissolver mit einer Drehzahl von ca. 2000 U/min dispergiert. Die verwendeten Polysulfide, Polythioether und ihre Copolymere waren immer mercaptoterminiert.

Für eine gute Dispergierung der Grundmasse sind insbesondere die Drehzahlbereiche von 500 bis 2200 U/min und Zeiten von 10 bis 60 Minuten je nach Zusammensetzung, rheologischen Eigenschaften und apparativer Ausstattung geeignet.

Der erfindungsgemäße Härter (Teilmischung II) wurde hergestellt, indem das monomere Diphenylmethandiisocyanat, das Polyisocyanat oder/und das Isocyanatterminierte Prepolymer mit dem Thixotropiermittel auf Basis von pyrogener Kieselsäure Aerosil^{®} R202 unter Vakuum von < 50 mbar oder sogar von < 10 mbar mittels Planetendissolver mit einer Drehzahl von ca. 2000 U/min vermischt wurde. Die Angaben zu Molekulargewichten sind ungefähre Werte.

Zum Verdichten, Verfüllen oder/und Beschichten von Konstruktionsteilen und zum Herstellen von Prüfkörpern wurden die Teilmischungen I und II in einem Mischungsverhältnis z.B. von 100 : 6 vermischt und anschließend mit energiereicher aktinischer Strahlung aktiviert Die erfindungsgemäßen Dichtmassen härteten auch ohne energiereiche aktinische Bestrahlung aus, wobei je nach Schichtdicke dann jedoch eine Zeit im Bereich von 24 bis 168 Stunden bei Schichtdicken im Bereich von 0,2 bis 6 mm für die Durchhärtung erforderlich war.

Die mechanischen Eigenschaften der Dichtmassen wie z.B. Shore A-Härte bestimmt nach ISO 7619, Zugfestigkeit und Bruchdehnung bestimmt nach ISO 37, Schälwiderstand bestimmt nach DIN 65262-1 wurden ermittelt, nachdem die Dichtmasse 14 Tage an Luft bei einer Umgebungslufttemperatur von 23 °C und 50 % Relativer Luftfeuchtigkeit gelagert wurde. Hierbei wurde nach dem Anmischen der Grundmasse A mit dem Härter an Luft die Mischung B sofort auf einem Substrat aufgetragen und unmittelbar danach mit energiereicher aktinischer Strahlung bestrahlt. Von da an wurde an Luft gelagert. Nach der Lagerung an Luft erfolgte hieran anschließend eine Lagerung in verschiedenen anderen Medien - siehe Tabellen 5, 7, 10, 12 und 14.

Zur Aktivierung der Dichtmasse wurde im Regelfall ein UV-Flächenstrahler mit einer Fe-dotierten Hg-Lampe bei einer Leistung von 400 W verwendet. Hierbei sind alle kommerziell erhältlichen UV-Lichtquellen einschließlich UV-Licht-emittierenden Dioden und Fluoreszenzlampen oder Elektronenstrahlquellen zur Härtung der aktinisch aktivierbaren Beschichtungen geeignet. Vorzugsweise lassen sich die Dichtmassen, die bei hohen Schichtdicken, insbesondere bei 1 bis 6 mm Schichtdicke, aufgetragen werden/sind, bei einer Wellenlänge im Bereich von 315 bis 600 nm wie UVA oder/und UVVIS aushärten, während die Dichtmassen mit geringen Schichtdickenaufträgen, insbesondere bei 0,1 bis 1 mm vorzugsweise bei einer Wellenlänge im Bereich von 100 bis 315 nm wie UVC oder/und UVB besser aushärtbar sind.

Bei der UV-Aktivierung der Dichtmasse wurden die in Tabelle 3 aufgeführten UV-Parameter gemessen. Eine vollständige Durchhärtung und schnelle klebfreie Zeit der Dichtmasse wurden sowohl bei hohen UV-Dosen der UV-Strahlung mittels eines Fe-dotierten Hg-Flächenstrahlers, als auch bei niedrigen UV-Dosen der UV-Strahlung mittels eines UV-LED - Strahlers erreicht.

**Tabelle 3: UV-Parameter für die Aktivierung der Dichtmasse und ihre Auswirkung**

| UV-Parameter / UV-Strahler | | 400 W Fe-Flächenstrahler | 200 W Ga-Punktstrahler | 100 W UV-LED-Strahler |
|---|---|---|---|---|
| | UV gesamt | 6098 | 1037 | 520 |
| UV-Dosis [mJ/cm²] | UVVS | 1965 | 497 | 250 |
| | UVA | 3256 | 540 | 270 |
| | UVB | 868 | 0 | 0 |
| | UVC | 9 | 0 | 0 |
| | UV gesamt | 235 | 41 | 23 |
| UV-Intensität [mW/cm²] | UVVIS | 75 | 23 | 14 |
| | UVA | 125 | 18 | 9 |
| | UVB | 35 | 0 | 0 |
| | UVC | 0 | 0 | 0 |
| Abstand zum Strahler 10 cm, Bestrahlungszeit 30 s, Schichtdicke 2 mm * | | | | |

| | | | | |
|---|---|---|---|---|
| * näherungsweise Angaben für die vorliegende Anmeldung | | | | |

Die in Tabelle 4 aufgeführten Rezepturen der erfindungsgemäßen Beispiele wurden hergestellt, um den Einfluss der Photoinitiator-Menge auf die Verarbeitungseigenschaften der Grundmasse A, der Mischung B sowie der härtenden Dichtmasse auf die mechanischen Eigenschaften der Dichtmasse zu ermitteln. Die erfindungsgemäßen Grundmassen A als Teilmischungen I und die Härter-Zusammensetzungen als Teilmischungen II wurden wie auch in allen anderen Beispielen und Vergleichsbeispielen entsprechend der oben genannten Vorschrift hergestellt. Die beiden Teilmischungen wurden in einem Massenverhältnis z.B. von 100 : 6 homogen vermischt, in einer Schichtdicke von 2 mm auf Blechen einer Aluminiumlegierung durch Extrudieren aus einer Mischerkartusche bei ca. 23 °C appliziert und anschließend mit einem Fe-dotierten UV-Flächenstrahler bei Wellenlängen im Bereich von 300 bis 600 nm, bei einer UV-Dosis von ca. 6.000 mJ/cm² und bei einer UV-Intensität von 200 mW/cm² im Abstand von 10 cm über 30 s bestrahlt. Hierbei erwärmte sich die aushärtende Beschichtung geringfügig, wobei keine 60 °C erreicht wurden.

Anschließend wurden die ausgehärteten Dichtmassen von der Prüfform entfernt und über 2 Wochen bei 23 ± 2 °C bei 50 ± 5 % relative Luftfeuchtigkeit an Luft gelagert, bevor die mechanischen Eigenschaften wie z.B. Dehnung, Schälwiderstand und Zugfestigkeit bestimmt wurden.

Als Photoinitiator 1 wurde 2-Dimethyiamino-2-(4-methyl-benzyl)-1-(4-morpholin-4-yl-phenyl)-butan-1-one eingesetzt. Als Photoinitiator 2 wurde 2-Benzyl-2-dimethyl-amino-1-(4-morpholinophenyl)-butanone-1 verwendet. Als Photoinitiator 3 wurde 2-Methyl-1[4-(methylthio)phenyl]-2-morpholinopropan-1-one eingesetzt. Während Photoinitiator 4 eine Basis von Alphahydroxyketon aufweist, ist Photoinitiator 5 auf Basis von Phosphinoxid und ist Photoinitiator 6 auf Basis von Methylbenzoylformiat. Als Haftvermittler 2 wurde Haftvermittler 2: Mercaptopropyltrimethoxysilan und als Haftvermittler 3 (Methacryloxymethyl)methyl-dimethoxysilan zugesetzt. Als Leichtfüllstoff 4 wurden Mikrohohlkugeln auf Basis von Vinylidenchlorid-Acrylnitril-Copolymeren verwendet. Als Isocyanat-terminiertes Prepolymer - siehe Beispiele B12, B21, B24 und B26 - wurde eines auf Basis HDI, MDI oder TDI mit einem Molekulargewicht etwa von 500 bis 3000 g/mol eingesetzt. Das MDI-terminierte Prepolymer von B12 hatte ein Rückgrat von Polysulfid und einen Restmonomergehalt an MDI etwa im Bereich von 0,8 und 5 Gew.%. Die Dichtmassen der Vergleichsbeispiele VB sind kommerziell erhältlich und wurden in angemischter Form erworben, jedoch nicht mit energiereicher aktinischer Strahlung ausgehärtet. Bei den Angaben zu den Polysulfiden werden die vorwiegenden Bereiche der Molekulargewichte angegeben. Die Zusammensetzungen der Vergleichsbeispiele VB1 bis VB3 enthalten keine Zusätze an einem Photoinitiator und an einem Härter auf Basis von Isocyanat.

**Tabelle 4: Zusammensetzung der Massen der Beispiele B1 bis B5 und der Vergleichsbeispiele VB1 bis VB3**

| Gehalt in Gew. -% / Beispiel - Vergleichsbsp. | B1 | B2 | B3 | B4 | B5 | VB1 | VB2 | VB3 |
|---|---|---|---|---|---|---|---|---|
| Teilmischung I = Grundmasse A | | | | | | | | |
| Grundmasse Naftoseal^{®} MC-... * | | | | | | 100 MC-780 B-1/2 | 100 MC-238 B-1/4 | 100 MC-780 C-60 . |
| Langkettiges Polysulfid (3900-4400 g/mol) | 71,5 | 70,8 | 70,4 | 69,6 | 70,4 | | | |
| Photoinitiator 1 | 0,1 | 0,8 | 1,2 | 2,0 | | | | |
| Phoioinitiator 2 | | | | | 1,2 | | | |
| Photosensibilisator 1: Benzophenon | 1,0 | 1,0 | 1,0 | 1,0 | | | | |
| Photosensibilisator 2: Isopropylthioxanthon | | | | | 1,0 | | | |
| Füllstoff Aluminiumsilicat | 20,0 | 20,0 | 20,0 | 20,0 | 20,0 | | | |
| Haftvermittler Phenolharz | 1,0 | 1,0 | 1,0 | 1,0 | 1,0 | | | |
| Thixotropiermittel Sepiolith | 3,0 | 3,0 | 3,0 | 3,0 | 3,0 | | | |
| Wasserfänger NaAl-basierter Zeolith | 1,0 | 1,0 | 1,0 | 1,0 | 1,0 | | | |
| Alterungsschutzmittel Phosphorigsäureester | 2,4 | 2,4 | 2,4 | 2,4 | 2,4 | | | |
| Summe | 100 | 100 | 100 | 100 | 100 | 100 | 100 | 100 |

| Teilmischung II = Härter | | | | | | | | |
|---|---|---|---|---|---|---|---|---|
| Mon. Isocyanat auf Basis MDI von 335 g/mol | 95 | 95 | 95 | 95 | 95 | | | |
| Thixotropiermittel pyrogene Kieselsäure | 5 | 5 | 5 | 5 | 5 | | | |
| Naftoseal^{®} MC-... Härter* | | | | | | 100 MC-780 B-1/2 | 100 MC-238 A-1/2 | 100 MC-780 C-60 |
| Summe | 100 | 100 | 100 | 100 | 100 | 100 | 100 | 100 |
| Mischungsverhältnis Grundmasse A: Härter | 100:6 | 100:6 | 100:6 | 100:6 | 100:6 | 100:10 | 100:12 | 100:10 |

| | | | | | | | | |
|---|---|---|---|---|---|---|---|---|
| * Produkte der Chemetall GmbH | | | | | | | | |

**Tabelle 5: Aushärtung und Eigenschaften der Dichtmassen der Beispiele B1 bis B5 und der Vergleichsbeispiele VB1 bis VB3; RT = Raumtemperatur**

| Eigenschaften / Beispiel - Vergleichsbeispiel | B1 | B2 | B3 | B4 | B5 | VB1 | VB2 | VB3 |
|---|---|---|---|---|---|---|---|---|
| Dichte [g/cm³] | 1,42 | 1,41 | 1,43 | 1,43 | 1,42 | 1,1 | 1,5 | 1,35 |
| Verarbeitungszeit [min] | 1440 | 180 | 60 | 30 | 60 | 30 | 15 | 3.600 |
| Klebfreie Zeit [min] | 2 | 2 | 2 | 2 | 2 | 240 | 50-120 | . 60.000 |
| Durchhärfezeit f. Anfangshärte Shore A 30 [min] | 720 | 60 | 40 | 20 | 40 | 480 | 90 - 240 | 86.400-100.800 |
| Shore A-Härte nach 14 Tagen RT | 45 | 44 | 43 | 45 | 44 | 50 | 60 | 50 |
| Zugfestigkeit [MPa] nach 14 Tagen RT | 1,90 | 2,10 | 2,52 | 2,65 | 2,45 | 1,5 - 2,2 | 2,2 | 1,5-2,2 |
| Dehnung [%] nach 14 Tagen RT | 266 | 300 | 400 | 466 | 388 | 300-400 | 430 | 300-400 |
| Peel [N/25 mm] nach 14 Tagen RT | 125 | 168 | 184 | 193 | 189 | 120-150 | 180 | 120-150 |
| Zugfestigkeit [MPa] nach 168 h 60 °C Treibstofflagerung | 1,23 | 1,54 | 2,20 | 2,31 | 2,26 | 1,5-2,0 | 1,8-2,0 | 1,5-2.0 |
| Dehnung [%] n. 168 h 60 °C Treibstofflagerung | 285 | 332 | 440 | 487 | 467 | 300-400 | 270- 300 | 300-400 |
| Zugfestigkeit [MPa] nach 300 h 100 °C Treibstofflagerung | 0,41 | 0,46 | 0,95 | 1,02 | 0,93 | 1,5-2,0 | 1,8-2,0 | 1,5-2 |
| Dehnung [%] n. 300 h 100 °C Treibstofflagerung | 750 | 732 | 467 | 496 | 453 | 300-400 | 270-400 | 300-400 |
| Zugfestigkt. [MPa] n. 1000 h 35 °C H₂O-Lagg. | 1,10 | 1,75 | 2,10 | 2,31 | 2,15 | 1,0-1,5 | 1,8-2,0 | 1,0-1,2 _{.} |
| Dehnung [%] nach 1000 h 35 °C H₂O-Lagerung | 230 | 287 | 303 | 315 | 310 | 300-400 | 400- 500 | 300-350 |
| Volumenänderung [%] nach DIN EN ISO 10563 | -1,8 | -1,9 | -2,0 | - 2,1 | -2,0 | -3,0 | -3,8 | -5,4 |

Überraschenderweise wurde festgestellt, dass die Photoinitiatoren auf Basis von α-Aminoketonen, die sonst konventionell für die radikalische Härtung von Acrylaten und Methacrylaten verwendet werden, zu einer Polyaddition zwischen dem Schwefel enthaltenden Polymer/Copolymer der Tellmischung I und dem Härter auf Basis von Isocyanat der Teilmischung II und dadurch zu Härtung der Dichtmasse auf Anforderung nach der UV-Bestrahlung führte. Außerdem bildete sich innerhalb von wenigen Sekunden oder spätestens innerhalb von 2 Minuten nach der UV-Bestrahlung eine klebfreie Schicht unmittelbar an der Dichtmassenoberfläche, wobei die klebfreie Schicht schnell in die Tiefe wuchs und dicker wurde. Auf diese Weise war eine sehr schnelle Oberflächenhärtung und eine beschleunigte Durchhärtung, d.h. der Zeit zum Erreichen von Shore A- 30, "auf Befehl" möglich, während die Verarbeitungszelt der erfindungsgemäßen Grundmassen B gleich lang oder deutlich länger als die Verarbeltungszelt einer schnell härtenden konventionellen Dichtmasse war (VB1 bis VB3).

Es war überraschend, dass die Photoinitiator-Menge keinen Einfluss auf die klebfreie Zeit, sondern nur auf die Durchhärtezeit hatte, was offenbar damit zu erklären ist, dass an der Dichtmassenoberfläche die UV-Strahlung zur Bildung von freiem tertiären Amin beiträgt als in der Tiefe und dass damit auch kleinere Mengen an Photoinitiator ausreichen, um eine klebfreie Schicht zu bilden.

Durch das Variieren der Photoinitiator-Konzentration konnte die Verarbeitungszeit der erfindungsgemäßen Grundmasse gut gesteuert werden, wobei die Durchhärtezeit proportional zu einer verlängerten Verarbeitungszeit anstieg.

Überraschenderweise zeigte die erfindungsgemäße Dichtmasse gute mechanische Eigenschaften auch nach Lagerung in verschiedenen Medien und bei erhöhter Temperatur wie z.B. Lagerung in Wasser bei 35 °C oder Lagerung in Treibstoff bei 60 °C oder 100 °C.

Eine Erhöhung der Photoinitiatorkonzentration führte zu besseren Zugfestigkeits- und Dehnungswerten sowohl bei Raumtemperatur, als auch nach Lagerung in verschiedenen Medien.

Die Auswahl des Photosensibilisators hatte keinen Einfluss auf die Verarbeitungseigenschaften und auf die mechanischen Eigenschaften der erfindungsgemäßen Grundmasse.

Die in Tabelle 6 aufgeführten Zusammensetzungen der erfindungsgemäßen Grundmassen wurden hergestellt, um den Einfluss der Kettenlänge der Polysulfidpolymere, den Einfluss des Haftvermittlers und den Einfluss der unterschiedlichen Härter auf die Verarbeitungseigenschaften und auf die mechanischen Eigenschaften zu ermitteln. Die erfindungsgemäßen Grundmassen als Teilmischungen I, die Härter-Zusammensetzungen als Teilmischungen II und die Zusammensetzungen der Vergleichsbeispiele wurden entsprechend der oben genannten Vorschrift hergestellt. Die beiden Teilmischungen wurden in einem Gewichtsverhältnis entsprechend Tabelle 4 gemischt, in einer Schichtdicke von 2 mm auf einem Prüfkörper appliziert und anschließend mit einem Fe-dotierten UV-Flächenstrahler bei Wellenlängen im Bereich von 300 bis 600 nm für 30 s bei 10 cm Abstand bestrahlt.

**Tabelle 6: Zusammensetzung der Massen der Beispiele B6 bis B12 und der Vergleichsbeispiele VB4 bis VB5. Die Vergleichsbeispiele VB4 und VB6 werden nicht mit Isocyanat, sondern mit Härtern einer anderen chemischen Basis gehärtet. Trotz der Einstrahlung mit UV-Licht härten diese Vergleichsbeispiele erst nach mehreren Wochen aus.**

| Gehalt in Gew.-% / Beispiel - Vergleichsbeispiel | B6 | B7 | B8 | B9 | B10 | B11 | B12 | VB4 | VB5 |
|---|---|---|---|---|---|---|---|---|---|
| Teilmischung I = Grundmasse A | | | | | | | | | |
| Langkettiges Polysulfid (5000-6500 g/mol) | | 70,4 | | | | | | | |
| Langkettiges Polysulfid (3900-4400 g/mol) | | | 58 | 70,4 | 70,4 | 70,4 | 70,4 | 70,4 | 70,4 |
| Mittelkettiges Polysulfid (2400-3100 g/mol) | 70,4 | | | | | | | | |
| Kurzkettiges Polysulfid (<1100 g/mol) | | | 12,4 | | | | | | |
| Photoinitiator 1 | 1,2 | 1,2 | 1,2 | 1,2 | 1,2 | 1,2 | 1,2 | 1,2 | 1,2 |
| Photosensibilisator 1: Benzophenon | 1,0 | 1,0 | 1,0 | 1,0 | 1,0 | 1,0 | 1,0 | 1,0 | 1,0 |
| Haftvermittler 1: Phenolharz | 1,0 | 1,0 | 1,0 | | | 1,0 | 1,0 | 1,0 | 1,0 |
| Haftvermittler 2 bzw. 3 | | | | 2: 1,0 | 3: 1,0 | | | | |
| Füllstoff: Aluminiumsilicat | 20,0 | 20,0 | 20,0 | 20,0 | 20,0 | 20,0 | 20,0 | 20,0 | 20,0 |
| Thixotropiermittel Sepiolith | 3,0 | 3,0 | 3,0 | 3,0 | 3,0 | 3,0 | 3,0 | 3,0 | 3,0 |
| Wasserfänger NaAl-basierterZeolith | 1,0 | 1,0 | 1,0 | 1,0 | 1,0 | 1,0 | 1,0 | 1,0 | 1,0 |
| Alterungsschutzmittel Phosphorigsäureester | 2,4 | 2,4 | 2,4 | 2,4 | 2,4 | 2,4 | 2,4 | 2,4 | 2,4 |
| Summe | 100 | 100 | 100 | 100 | 100 | 100 | 100 | 100 | 100 |

| Teilmischung II = Härter | | | | | | | | | |
|---|---|---|---|---|---|---|---|---|---|
| Mon. Isocyanat auf Basis von MDI 335 g/mol | 95 | 95 | 95 | 95 | 95 | | | | |
| Polyisocyanat 1 = auf Basis von MDI 800 g/mol | | | | | | 100 | | | |
| MDI-terminiertes Prepolymer von 2000 g/mol | | | | | | | 100 | | |
| Thixotropiermittel pyrogene Kieselsäure | 5 | 5 | 5 | 5 | 5 | | | | |
| Epoxidharz E bzw. Organisches Peroxid P | | | | | | | | 100 E | 100 P |
| Summe | 100 | 100 | 100 | 100 | 100 | 100 | 100 | 100 | 100 |
| Mischungsverhältnis Grundmasse A: Härter | 100:6 | 100:6 | 100:6 | 100:6 | 100:6 | 100:16 | 100:20 | 100:7,8 | 100:4,5 |

**Tabelle 7: Aushärtung und Eigenschaften der Dichtmassen der Beispiele B6 - B12 und der Vergleichsbeispiele VB3 - V84; nicht bestimmt = n.b.**

| Eigenschaften / Beispiel Vergleichsbeispiel | B6 | B7 | B8 | B9 | B10 | B11 | B12 | VB4 | VB5 |
|---|---|---|---|---|---|---|---|---|---|
| Dichte [g/cm³] | 1,42 | 1,42 | 1,42 | 1,42 | 1,42 | 1,42 | 1,42 | 1,42 | 1,42 |
| Verarbeitungszeit [min] | 60 | 100 | 50 | 180 | 70 | 480 | 60 | > 24 | > 24 |
| Klebfreie Zeit [min] | 2 | 2 | 2 | 2 | 2 | 2 | 1 | 180 | >7200 |
| Durchhärtezeit f. Anfangshärte Shore A 30 [min] | 40 | 50 | 30 | 120 | 40 | 240 | 15 | >14400 | >14400 |
| Shore A-Härte nach 14 Tagen RT | 45 | 38 | 45 | 32 | 43 | 35 | 50 | <10 | <10 |
| Zugfestigkeit [MPa] nach 14 Tagen RT | 1,4 | 2,2 | 1,2 | 1,12 | 1,94 | 1,2 | 2,2 | <0,2 | <0,2 |
| Dehnung [%] nach 14 Tagen RT | 216 | 450 | 198 | 830 | 456 | 420 | 220 | <100 | <100 |
| Peel [N/25 mm] nach 14 Tagen RT | 88 | 170 | 69 | 93 | 167 | 56 | 175 | <10 | <10 |
| Zugfestigkt [MPa] n. 168 h 60 °C Treibstofflagg. | 1,13 | 1,64 | 0,80 | 0,70 | 1,64 | 0,82 | 1,91 | <0,2 | <0,2 |
| Dehnung [%] n. 168 h 60 °C Treibstofflagerung | 247 | 476 | 256 | 870 | 473 | 497 | 235 | <100 | <100 |
| Zugfestigkeit [MPa] nach 300 h 100 °C Treibstofflagerung | 0,53 | 0,64 | 0,35 | n.b. | 0,73 | 0,56 | 1,13 | <0,2 | <0,2 |
| Dehnung [%] n. 300 h 100 °C Treibstofflagerung | 430 | 647 | 178 | n.b. | 515 | 570 | 303 | <100 | <100 |
| Zugfestigkt. [MPa] n. 1000 h 35 °C H₂O-Lagg. | 1,05 | 1,27 | 0,75 | 0,61 | 1,55 | 0,75 | 1,83 | <0,2 | <0,2 |
| Dehnung [%] nach 1000 h 35 °C H₂O-Lagerung | 218 | 357 | 212 | 892 | 560 | 436 | 255 | <100 | <100 |

Die Verwendung von Polymeren/Copolymeren von deutlich unterschiedlichen Kettenlängen führte zu unterschiedlichen mechanischen Eigenschaften, beeinflusste aber die klebfrele Zelt nicht.

Der Einsatz von Polyisocyanaten auf Basis von MDI/HDI-Trimerisaten, HDI-Biureten und Isophorondiisocyanaten sowie von MDI-terminierten Prepolymeren als Härter hat sich auch für die UV-Härtung als geeignet gezeigt, wobei das Isocyanat-terminierte Prepolymer überraschenderweise zu einer noch schnelleren Durchhärtung der erfindungsgemäßen Dichtmasse geführt hatte. Auf diese Weise wurden Dichtmassen mit einer Schichtdicke von 2 mm innerhalb von 10 bis 600 Minuten nach UV-Bestrahlung durchgehärtet, während die Verarbeitungszeit bei mindestens 60 Minuten gehalten werden konnte. Die klebfreie Zeit wurde weiterhin innerhalb von 1 bis 2 Minuten nach UV-Bestrahlung erreicht. Außerdem zeigte die Dichtmasse auch hervorragende mechanische Eigenschaften ohne und nach Lagerung in verschiedenen Medien bei erhöhter Temperatur.

Die Vergleichsbeispiele, bei denen ein kommerziell erhältliches Epoxidharz und ein kommerziell erhältliches Peroxid als Härter verwendet wurden, eigneten sich für eine UV-Härtung der Dichtmasse nicht, da weder eine schnelle Durchhärtung von z.B. weniger als 60 min bei 2 mm zu durchstrahlender Dicke, noch eine schnelle Klebfreiheit von z.B. weniger als 10 min bei 2 mm zu durchstrahlender Dicke der Dichtmasse beobachtet werden konnte.

Mit der in Tabelle 8 dargestellten Versuchsreihe wurde die Schnelligkeit unterschiedlicher UV-härtbarer Dichtmassen bei verschiedenen Schichtdicken (2 und 5 mm) untersucht.

**Tabelle 8: Verarbeitungseigenschaften einiger Rezepturen bei unterschiedlichen Schichtdicken**

| Eigenschaften / Beispiel | B4 | | B6 | | B12 | |
|---|---|---|---|---|---|---|
| Schichtdicke [mm] | 2 | 5 | 2 | 5 | 2 | 5 |
| Verarbeitungszeit [min] | 60 | 60 | 60 | 60 | 70 | 70 |
| Klebfreie Zeit [min] | 2 | 2 | 2 | 2 | 2 | 2 |
| Durchhärtezeit f. Anfangshärte Shore A 30 [min] | 40 | 300 | 40 | 360 | 15 | 60 |

Überraschenderweise ergab sich bei der Verwendung eines Isocyanat-terminierten Prepolymers als Härter - siehe B12 - sogar bei einer Schichtdicke der geformten Dichtmasse von z.B. 5 mm eine extrem schnelle Durchhärtung von 60 Minuten, während die klebfreie Zeit unbeeinflusst geblieben ist

Die in Tabelle 9 aufgeführten erfindungsgemäßen Grundmassen wurden entsprechend der oben genannten Vorschrift hergestellt und mit UV-Licht ausgehärtet. Dabei wurde der Einfluss der Füllstoffe, der Leichtfüllstoffe und der sehr hohen Mengen an Photoinitiator oder Photosensibilisator auf die mechanischen Eigenschaften und auf die Verarbeitungseigenschaften ermittelt.

**Tabelle 9: Zusammensetzung der Massen der Beispiele B13 bis B17 sowie der Vergleichsbeispiele VB6 bis VB8**

| Gehalt in Gew.-% / Beispiel - Vergleichsbeispiel | B13 | B14 | B15 | B16 | B17 | VB6 | VB7 | VB8 |
|---|---|---|---|---|---|---|---|---|
| Teilmischung I = Grundmasse A | | | | | | | | |
| Langkettiges Polysulfid (3900-4400 g/mol) | 70,4 | 70,4 | 70,4 | 70,4 | 70,4 | 57,6 | 41,6 | 51,4 |
| Photoinitiator 1 | 1,2 | 1,2 | 1,2 | 1,2 | 1,2 | 10 | 30 | 1,2 |
| Photosensibilisator 1: Benzophenon | 1,0 | 1,0 | 1,0 | 1,0 | 1,0 | 1,0 | 1,0 | 20 |
| Füllstoff 1: Magnesiumsilicathydrate | 20,0 | | | | | | | |
| Füllstoff 2: Aluminiumhydroxide | | 20,0 | 12,0 | 12,0 | 8,0 | 20 | 20,0 | 20,0 |
| Leichtfüllstoff 1: Polyamid | | | 8,0 | | 12,0 | | | |
| Leichtfüllstoff 2: Polyethylen | | | | 8,0 | | | | |
| Haftvermittler Phenolharz | 1,0 | 1,0 | 1,0 | 1,0 | 1,0 | 1,0 | 1,0 | 1,0 |
| Thixotropiermittel Sepiolith | 3,0 | 3,0 | 3,0 | 3,0 | 3,0 | 3,0 | 3,0 | 3,0 |
| Wasserfänger NaAl-basierter Zeolith | 1,0 | 1,0 | 1,0 | 1,0 | 1,0 | 1,0 | 1,0 | 1,0 |
| Alterungsschutzmittel Phospharigsäureester | 2,4 | 2,4 | 2,4 | 2,4 | 2,4 | 2,4 | 2,4 | 2,4 |
| Summe | 100 | 100 | 100 | 100 | 100 | 100 | 100 | 100 |

| Teilmischung II = Härter | | | | | | | | |
|---|---|---|---|---|---|---|---|---|
| Monomeres Isocyanat MDI von 335 g/mol | 95,0 | 95,0 | 95,0 | 95,0 | 95,0 | 95,0 | 95,0 | 95,0 |
| Thixotropiermittel pyrogene Kieselsäure | 5,0 | 5,0 | 5,0 | 5,0 | 5,0 | 5.0 | 5,0 | 5,0 |
| Summe | 100,0 | 100,0 | 100,0 | 100,0 | 100,0 | 100,0 | 100,0 | 100,0 |
| Mischungsverhältnis Grundmasse A : Härter | 100:6 | 100:6 | 100:6 | 100:6 | 100:6 | 100:6 | 100:6 | 100:6 |

**Tabelle 10: Aushärtung und Eigenschaften der Dichtmassen der Beispiele B13 bis B17 und Vergleichsbeispiele VB5 bis VB7**

| Eigenschaften / Beispief - Vergleichsbeispiel | B13 | B14 | B15 | B16 | B17 | VB6 | VB7 | VB8 |
|---|---|---|---|---|---|---|---|---|
| Dichte [g/cm³] | 1,41 | 1,42 | 1,38 | 1,39 | 1,29 | 1,43 | 1,08 | 1,27 |
| Verarbeitungszeit [min] | 60 | 60 | 70 | 90 | 100 | 20 | 10 | 40 |
| Klebfreie Zeit [min] | 2 | 2 | 2 | 2 | 2 | 2 | 2 | 2 |
| Durchhärtezeit für Anfangshärte Shore A 30 [min] | 40 | 50 | 50 | 60 | 70 | 48 | 56 | 90 |
| Shore A-Härte nach 14 Tagen RT | 46 | 42 | 41 | 38 | 37 | 35 | 32 | 33 |
| Zugfestigkeit [MPa] nach 14 Tagen RT | 2,3 | 2,05 | 1,84 | 1,92 | 1,45 | 0,6 | 0,4 | 1,6 |
| Dehnung [%] nach 14 Tagen RT | 443 | 560 | 578 | 610 | 430 | 900 | 1000 | 1500 |
| Peel [N/25 mm] nach 14 Tagen RT | 150 | 110 | 101 | 105 | 135 | <20 | <20 | <20 |
| Zugfestigkeit [MPa] nach 168 h 60 °C Treibstofflagerung | 1,82 | 1,71 | 1,63 | 1,73 | 0,92 | <0,2 | <0,2 | <0,2 |
| Dehnung [%] nach 168 h 60 °C Treibstofflagerung | 610 | 580 | 605 | 623 | 442 | 650 | 690 | 800 |
| Zugfestigkeit [MPa] nach 300 h 100 °C Treibstofflagerung | 0,87 | 0,67 | 0,41 | 0,54 | 0,77 | <0,2 | <0,2 | <0,2 |
| Dehnung [%] n. 300 h 100 °C Treibstofflagerung | 622 | 830 | 880 | 780 | 463 | 500 | 450 | 600 |
| Zugfestigkt. [MPa] n. 1000 h 35 °C H₂O-Lagerung Dehnung [%] nach 1000 h 35 °C H₂O-Lagerung | 1,94 | 1,73 | 1,41 | 1,65 | 0,88 | <0,2 | <0,2 | <0,2 |
| | 565 | 557 | 720 | 605 | 295 | 450 | 530 | 620 |

Die Beispiele B13 bis B17 zeigen, dass bestimmte Füllstoffe wie Aluminiumhydroxi-de, Polyamid und Polyethylen zu guten Ergebnissen bezüglich Verarbeitungseigenschaften und mechanischen Eigenschaften führen.

Überraschenderweise war eine Verringerung der Dichte der Dichtmasse wie bei B17 auf Werte unter 1,3 g/cm³ ohne negative Auswirkungen auf eine schnelle Oberflächenhärtung "auf Befehl" und auf die darauffolgende schnelle Durchhärtung. Außerdem besaßen die Dichtmassen sehr gute mechanische Eigenschaften ohne sowie nach Lagerung in unterschiedlichen Medien bei erhöhter Temperatur. Der Zusatz an sehr hohen Mengen an Photoinitiator oder Photosensibilisator führte zur sehr weichen und zu unvollständig ausgehärteten Dichtmassen - siehe VB6 bis VB8.

**Tabelle 11: Zusammensetzung der Massen der Beispiele B18 bis B26, wobei das Isocyanat von B21 ein Rückgrat auf Basis von Polysulfid und einen Restmonomergehalt an TDI von weniger als 0,1 Gew.-% aufweist, während das Isocyanat von B24 ein Rückgrat auf Basis von Polythioether aufweist und ebenfalls einen Restmonomergehalt an TDI von weniger als 0,1 Gew.-% enthält. Das Isocyanat von B26 weist ein Rückgrat auf Basis von Polysulfid und einen Restmonomergehalt an MDI von weniger als 1 Gew.-% auf.**

| Gehalt in Gew.-% / Beispiel - Vergleichsbeispiel | B18 | B19 | B20 | B21 | B22 | B23 | B24 | B25 | B26 |
|---|---|---|---|---|---|---|---|---|---|
| Teilmischung I = Grundmasse A | | | | | | | | | |
| Langkettiges Polysulfid (3900-4400 g/mol) | 70,4 | 70,4 | 70,4 | 70,4 | 70,4 | 70,4 | 70,4 | 55,4 | 70,4 |
| Photoinitiator 1 + Photosensib. 1 =Benzophenon | | | | | | | | 1,2+1,0 | |
| Füllstoff 2: Aluminiumhydroxide | 22,2 | 22,2 | 22,2 | 22,2 | 22,2 | 22,2 | 22,2 | 20,0 | 22,2 |
| Flammschutzmittel Basis Phosphorsäureester | | | | | | | | 15,0 | |
| Haftvermittler Phenolharz | 1,0 | 1,0 | 1,0 | 1,0 | 1,0 | 1,0 | 1,0 | 1,0 | 1,0 |
| Thixotropiermittel Sepiolith | 3,0 | 3,0 | 3,0 | 3,0 | 3,0 | 3,0 | 3,0 | 3,0 | 3,0 |
| Wasserfänger NaAl-basierter Zeolith | 1,0 | 1,0 | 1,0 | 1,0 | 1,0 | 1,0 | 1,0 | 1,0 | 1,0 |
| Alterungsschutzmittel B. Phosphorfgsäureester | 2,4 | 2,4 | 2,4 | 2,4 | 2,4 | 2,4 | 2,4 | 2,4 | 2,4 |
| Summe | 100 | 100 | 100 | 100 | 100 | 100 | 100 | 100 | 100 |

| Teilmischung II = Härter | | | | | | | | | |
|---|---|---|---|---|---|---|---|---|---|
| Monomeres Isocyanat Basis MDI von 335 g/mol | 72,0 | 72,0 | | | | | | 95,0 | |
| Mon. Isocyanat auf Basis von TDI von 175 g/mol | | | 72.0 | | | | | | |
| Isocyanatprepolymer Basis TDI von 1900 g/mol | | | | 77,0 | | | | | |
| Mon. Isocyanat auf Basis von HDI von 170 g/mol | | | | | 72,0 | | | | |
| Isocyanattrimer auf Basis von HDI von 360 g/mol | | | | | | 72,0 | | | |
| Isocyanatprepolymer Basis TDI von 3000 g/mol | | | | | | | 77,0 | | |
| Isocyanatprepolymer Basis MDI von 2500 g/mol | | | | | | | | | 77,0 |
| Thixotropiermittel pyrogene Kieselsäure | 5,0 | 5,0 | 5,0 | | 5,0 | 5,0 | | 5,0 | |
| Photoinitiator 1 | 13,0 | 13,0 | 13,0 | 13,0 | 13,0 | 13,0 | 13,0 | | 13,0 |
| Photosensibilisator 1: Benzophenon | 10,0 | 10,0 | 10,0 | 10,0 | 10,0 | 10,0 | 10,0 | | 10,0 |
| Summe | 100,0 | 100,0 | 100 | 100 | 100 | 100 | 100 | 100,0 | 100,0 |
| Mischungsverhältnis Grundmasse A: Härter | 100:9 | 100:9 | 100:5 | 100:56 | 100:5 | 100:11 | 100:83 | 100:5 | 100:60 |

**Tabelle 12: Aushärtung und Eigenschaften der Dichtmassen der Beispiele B18- B26**

| Eigenschaften / Beispiel - Vergleichsbeispiel | B18 | B19 | B20 | B21 | B22 | B23 | B24 | B25 | B26 |
|---|---|---|---|---|---|---|---|---|---|
| Dichte [g/cm³] | 1,39 | 1,30 | 1,40 | 1,40 | 1,39 | 1,41 | 1,41 | 1,42 | 1,39 |
| Verarbeitungszeit [min] | 80 | 160 | 300 | 800 | 1000 | 1000 | 1200 | 80 | 500 |
| Klebfreie Zeit [min] | 2 | 2 | 2 | 2 | 2 | 2 | 2 | 2 | 2 |
| Durchhärtezeit für Anfangshärte Shore A 30 [min] | 60 | 90 | 180 | 300 | 500 | 600 | 700 | 45 | 180 |
| Shore A-Härte nach 14 Tagen RT | 45 | 45 | 40 | 45 | 30 | 33 | 50 | 40 | 46 |
| Zugfestigkeit [MPa] nach 14 Tagen RT | 2,1 | 2,3 | 2,0 | 1,6 | 1,3 | 1,4 | 2,7 | 1,7 | 2,5 |
| Dehnung [%] nach 14 Tagen RT | 540 | 420 | 620 | 340 | 440 | 450 | 410 | 630 | 400 |
| Peel [N/25mm] nach 14 Tagen RT | 115 | 140 | 100 | 150 | 80 | 85 | 146 | 120 | 138 |
| Zugfestigkeit [MPa] nach 168 h 60 °C Treibstofflagerung | 1,8 | 1,7 | 1,4 | 1,3 | 1,1 | 1,0 | 1,1 | 1,5 | 1,8 |
| Dehnung [%] nach 168 h 60 °C Treibstofflagerung | 570 | 530 | 430 | 320 | 300 | 250 | 200 | 450 | 320 |
| Zugfestigkeit [MPa] nach 300 h 100 °C Treibstofflagerung | 0,8 | 0,7 | 0,5 | 0,8 | 0,4 | 0,5 | 0,9 | 0,6 | 1,0 |
| Dehnung [%] n. 300 h 100 °C Treibstofflagerung | 790 | 400 | 490 | 280 | 200 | 250 | 230 | 450 | 410 |
| Zugfestigkt. [MPa] n. 1000 h 35 °C H₂O-Lagerung | 1,69 | 1,2 | 1,3 | 0,8 | 0,7 | 0,6 | 0,9 | 1,2 | 1,3 |
| Dehnung [%] nach 1000 h 35 °C H₂O-Lagerung | 545 | 300 | 330 | 220 | 230 | 270 | 200 | 367 | 270 |

Beim Beispiel B18 wurden eine Zusammensetzung und ein Verfahren entsprechend B14 gewählt, bei dem die entsprechenden Gehalte in ähnlicher Weise gewählt wurden, aber bei dem der Photoinitiator 1 nicht der Grundmasse A, sondern dem Härter zugesetzt wurde. Dabei ergaben sich beim Beispiel B18 auch gute Eigenschaften.

Die Dichtmassen der Beispiele B20 bis B24 und B26 wurden entsprechend der Allgemeinen Herstell- und Prüfvorschrift hergestellt, mit UV-Licht ausgehärtet und geprüft. Dabei wurde der Einfluss unterschiedlicher Isocyanathärter wie z.B. Toluoldiisocyanat, Hexamethylendiisocyanat und deren Prepolymere bzw. Trimere auf die Verarbeitungseigenschaften und auf die mechanischen Eigenschaften ermittelt.

Die Beispiele B25 und B31 zeigen, dass die Zugabe von flüssigem Flammschutzmittel auf Basis von Phosphorsäureester oder Phosphonat überraschenderweise zu vergleichbaren Ergebnissen der erfindungsgemäßen Dichtmassen wie bei den übrigen erfindungsgemäßen Dichtmassen führt und sogar eine besonders schnelle Härtung ermöglicht. Flüssiges Flammschutzmittel auf Basis von Phosphorsäureester oder Phosphonat vermag das mercaptoterminierte Basispolymer teilweise zu ersetzen, insbesondere als Zusatz im Bereich von 0,1 bis 30 Gew.-%. Beispielsweise sind hierfür Polyphosphate, Tris-(2-ethylhexyl)-phosphat, Triethylphosphate, Triarylphosphate, Triarylpolyphosphate und Dimethylpropanphosphonat gut geeignet. Hierdurch ergibt sich ein deutlich verbessertes Brandschutzverhalten.

Die in Tabelle 13 aufgeführten Grundmassen wurden entsprechend der oben genannten Vorschrift hergestellt und mit UV-Licht ausgehärtet. Dabei wurden Prepolymere unterschiedlicher Grundgerüste und Molekulargewichte - siehe B27 bis B29 und unterschiedliche Photoinitiatoren, die keine tertiären Amine freisetzen - siehe VB9 bis VB11, in Bezug auf die mechanischen Eigenschaften und auf die Verarbeitungseigenschaften der Dichtmassen untersucht.

**Tabelle 13: Zusammensetzung der Massen der der Beispiele B27- B31 und Vergleichsbeispiele VB9 - VB11**

| Gehalt in Gew.-% / Beispiele-Vergleichsbeisp. | B27 | B28 | B29 | B30 | B31 | VB9 | VB10 | VB11 |
|---|---|---|---|---|---|---|---|---|
| Teilmischung I = Grundmasse A | | | | | | | | |
| Polythioether (3900-4100 g/mol) | 70,4 | | | 70,4 | 57,6 | 70,4 | 70,4 | 70,4 |
| Polythioether (2000-2200 g/mol) | | 70,4 | | | | | | |
| Polythioether-Polysulfid (1800-2000 g/mol) | | | 70,4 | | | | | |
| Photoinitiator Nr. | 1: 1,2 | 1: 1,2 | 1: 1,2 | 3: 1,2 | | 4: 1,2 | 5: 1,2 | 6: 1,2 |
| Photosensibilisator auf Basis Benzophenon | 1 | 1 | 1 | 1 | | 1 | 1 | 1 |
| Flammschutzm. auf Basis Phosphorsäureester Füllstoff Aluminiumsilicat | | | | | 15,0 | | | |
| | 22,2 | 22,2 | 22,2 | 22,2 | 20,0 | 22,2 | 22,2 | 22,2 |
| Haftvermittler Phenolharz | 1,0 | 1,0 | 1,0 | 1,0 | 1,0 | 1,0 | 1,0 | 1,0 |
| Thixotropiermittel Sepiolith | 3,0 | 3,0 | 3,0 | 3,0 | 3,0 | 3,0 | 3,0 | 3,0 |
| Wasserfänger NaAl-basierter Zeolith | 1,0 | 1,0 | 1,0 | 1,0 | 1,0 | 1,0 | 1,0 | 1,0 |
| Alterungsschutzmittel B. Phosphorigsäureester | 2,4 | 2,4 | 2,4 | 2,4 | 2,4 | 2,4 | 2,4 | 2,4 |
| Summe | 100 | 100 | 100 | 100 | 100 | 100 | 100 | 100 |

| Teilmischung II = Härter | | | | | | | | |
|---|---|---|---|---|---|---|---|---|
| Monomeres Isocyanat Basis MDI von 335 g/mol | 95,0 | 95,0 | 95,0 | 95,0 | 72,0 | 95,0 | 95,0 | 95,0 |
| Photoinitiator 1 | | | | | 13,0 | | | |
| Photosensibilisator auf Basis Benzophenon Thixotropiermittel pyrogene Kieselsäure | | | | | 10,0 | | | |
| | 5,0 | 5,0 | 5,0 | 5,0 | 5,0 | 5,0 | 5,0 | 5,0 |
| Summe | 100 | 100 | 100 | 100 | 100 | 100 | 100 | 100 |
| Mischungsverhältnis Grundmasse A : Härter | 100:6 | 100:9 | 100:5 | 100:6 | 100:9 | 100:6 | 100:6 | 100:6 |

**Tabelle 14: Aushärtung und Eigenschaften der Dichtmassen der Beispiele B27- B31 und Vergleichsbeispiele VB9 - VB11**

| Eigenschaften / Beispiel - Vorgleichsbeispiel | B27 | B28 | B29 | B30 | B31 | VB9 | VB10 | VB11 |
|---|---|---|---|---|---|---|---|---|
| Dichte [g/cm³] | 1,31 | 1,31 | 1,34 | 1,31 | 1,35 | 1,31 | 1,31 | 1,31 |
| Verarbeitungszeit [min] | 120 | 110 | 115 | 120 | 90 | >1440 | >1440 | z1440 |
| Klebfreie Zeit [min] | 2 | 2 | 2 | 2 | 2 | >1440 | >1440 | >1440 |
| Durchhärtezeit für Anfangshärte Shore A 30 [min] | 80 | 70 | 60 | 90 | 45 | >14400 | >14400 | >14400 |
| Shore A-Härte nach 14 Tagen RT | 48 | 52 | 55 | 47 | 42 | <1 | <1 | <1 |
| Zugfestigkeit [MPa] nach 14 Tagen RT | 2,0 | 2,2 | 2,3 | 2,0 | 1,6 | <0,1 | <0,1 | <0,1 |
| Dehnung [%] nach 14 Tagen RT | 350 | 250 | 200 | 300 | 640 | <1 | <1 | <1 |
| Peel [N/25 mm] nach 14 Tagen RT | 180 | 175 | 160 | 190 | 130 | <1 | <1 | <1 |
| Zugfestigkeit [MPa] n. 168 h 60 °C Treibstofflagg. | 1,7 | 2,0 | 2,0 | 1,8 | 1,5 | <1 | <1 | <1 |
| Dehnung [%] nach 168 h 60 °C Treibstofffagerung | 220 | 200 | 170 | 220 | 440 | <1 | <1 | <1 |
| Zugfestigkeit [MPa] n. 300 h 100 °C Treibstofflagg. | 1,3 | 1,2 | 1,4 | 1,2 | 0,7 | <1 | <1 | <1 |
| Dehnung [%] n. 300 h 100 °C Treibstofflagerung | 250 | 230 | 240 | 260 | 450 | <1 | <1 | <1 |
| Zugfestigkt. [MPa] n. 1000 h 35°C H₂O-Lagerung | 1,0 | 0,9 | 1,1 | 1,0 | 1,2 | <1 | <1 | <1 |
| Dehnung [%] nach 1000 h 35 °C H₂O-Lagerung | 280 | 240 | 260 | 290 | 369 | 1 | 1 | 1 |

Die Photoinitiatoren 4 bis 6 sind speziell für Acrylat-haltige Polymersysteme geeignet, aber nicht für mercaptoterminierte Basispolymere der vorliegenden Anmeldung-siehe VB9 bis VB11. Sie setzen keine Radikale auf Basis von tertiärem Amin frei und sind daher für die erfindungsgemäße Verwendung ungeeignet.

Neben dem Geschwindigkeitsrekord für das außergewöhnlich schnelle Aushärten von hochwertigen Dichtmassen gibt es auch einen Eigenschaftsrekord, der mit der außergewöhnlichen Verringerung des sogenannten Schrumpfes bei der Aushärtung verbunden ist.

Bei konventionellen Flugzeugdichtmassen auf Basis von mercaptoterminierten Polymeren beträgt der Schrumpf des Volumens der ausgehärteten Dichtmasse in Bezug auf das Volumen der ursprünglichen Mischung B zu Beginn des Aushärtens üblicherweise -4 bis -9 Vol.-%. Bei den Dichtmassen der vorliegenden Anmeldung beträgt der Schrumpf jedoch üblicherweise nur -1 bis -2,5 Vol.-%. Der geringere Schrumpf scheint hierbei mit dem fehlenden Gehalt an Weichmacher und mit der Art der Vernetzung verbunden zu sein. Im Vergleich hierzu haben die (Meth)acrylatbasierten Dichtmassen dagegen sogar einen Volumenschrumpf etwa im Bereich von -8 bis -15 Vol.-%. Zur Bestimmung des Schrumpfes der Dichtmasse wird die Methode der Volumenänderung nach DIN EN ISO10563 verwendet.

Mangandioxid-basierte Härter benötigen immer einen Gehalt an Weichmachern von ca. 5 bis 10 Gew.-% auf die gesamte Zusammensetzung der Dichtmasse. Diese Weichmacher führen häufig zu einem Volumenschrumpf etwa von -2 bis -10 %. Die Weichmacher können an die Umgebung entweichen und können ausgewaschen werden, insbesondere bei erhöhter Temperatur.

Eine weitere vorteilhafte Eigenschaft betrifft die Beständigkeit der Dichtmassen bei Lagerung in Wasser. Die Wasserlagerung einer konventionellen ausgehärteten Dichtmasse z.B. über 1.000 h bei 35 °C beeinflusst die mechanischen Eigenschaften einer Mangandioxid-gehärteten Dichtmasse typischerweise stark - siehe VB1 und VB2, während die mechanischen Eigenschaften der erfindungsgemäßen Dichtmassen deutlich weniger abnehmen.

Insgesamt können die hochwertigen Eigenschaften der konventionellen Flugzeugdichtmassen wie die hohe Beständigkeit gegen verschiedene Medien wie z.B, Treibstoffbeständlgkelt bel 60 °C z.B. gemessen nach 168 Stunden und 100 °C z.B. Wasserbeständigkeit bei 35 °C gemessen nach 1000 Stunden, Hydraulikflüssigkeit, Kondenswasser und Enteisungsflüssigkeit, hohe Temperaturbeständigkeit, hohe Kälfeflexibilität, hohe Witterungsbeständigkeit, hoher Schälwiderstand auf unterschiedlichen Substraten, hohe Bruchdehnung und hohe Zugfestigkeit konnten hierbei trotz der stark verkürzten Aushärtung weitgehend oder in vollem Umfang erreicht werden.

## Patentansprüche

1. Verfahren zum Beschichten eines Substrats mit einer Mischung B oder mit der hieraus gebildeten aushärtenden Dichtmasse, wobei die Mischung B und die Dichtmasse Schwefel-haltige Polymere enthält, **dadurch gekennzeichnet,**
**dass** die Mischung B eine ungehärtete Mischung ist aus einer Grundmasse A und einem Härter mit einem Gehalt an Isocyanat,
**dass** die Grundmasse A ungehärtet ist und ein mercaptoterminiertes Basispolymer auf Basis von Polythioether, Polysulfid, deren Copolymeren oder/und deren Mischungen enthält,
**dass** die ungehärtete Grundmasse A, der Härter oder beide mindestens einen Photoinitiator auf Basis von α-Aminoketon enthalten,
**dass** das als Härter verwendete Isocyanat der Mischung B eine durchschnittliche Funktionalität im Bereich von 1,5 bis 3,2 aufweist,
**dass** das mercaptoterminierte Basispolymer in der Grundmasse A einen Mercaptangehalt bezogen auf die reaktiven SH-Gruppen zum gesamten Basispolymer im Bereich von 0,8 bis 8 Gew.-% aufweist,
**dass** mindestens ein Photoinitiator beim Einwirken von energiereicher aktinischer Strahlung mindestens ein Radikal pro Molekül auf Basis von tertiärem Amin abspaltet, aus dem insbesondere durch H-Aufnahme ein aktiver Katalysator gebildet wird, der als Katalysator für die Härtung der Dichtmasse wirkt, und
**dass** die Mischung B ab dem Einwirken von energiereicher aktinischer Strahlung im Temperaturbereich von -10 bis +70 °C aushärtet, wobei sie ab Aushärtungsbeginn als Dichtmasse bezeichnet wird.

2. Verfahren nach Anspruch 1, **dadurch gekennzeichnet, dass** die Aushärtung auf Befehl erfolgt, dass die Mischung B erst auf Befehl durch energiereiche aktinische Bestrahlung stärker zu härten beginnt, und dass sie so schnell erfolgt, dass eine klebfreie Oberfläche der Dichtmasse ab Aushärtungsbeginn in einer klebfreien Zeit von 0,05 bis 5 Minuten erreicht wird.

3. Verfahren nach Anspruch 1 oder 2, **dadurch gekennzeichnet, dass** mindestens ein Photoinitiator ein α-Aminoketon mit ein, zwei oder drei tertiären Aminogruppen ist.

4. Verfahren nach mindestens einem der vorstehenden Ansprüche, **dadurch gekennzeichnet, dass** die Härtung der Dichtmasse mit mindestens einer Isocyanat-basierten Verbindung erfolgt.

5. Verfahren nach Anspruch 4, **dadurch gekennzeichnet, dass** als Isocyanatbasierte Verbindung mindestens eine ausgewählt wird aus aliphatischem, cycloaliphatischem oder/und aromatischem Isocyanat auf Basis von monofunktionellem, difunktionellem oder/und trifunktionellem monomerem Isocyanat, auf Basis von monofunktionellem, difunktionellem oder/und trifunktionellem oligomerem oder/und polymerem Isocyanat oder/und auf Basis von monofunktionellen, difunktionellen oder/und trifunktionellen Isocyanat-Prepolymeren.

6. Verfahren nach mindestens einem der vorstehenden Ansprüche, **dadurch gekennzeichnet, dass** der Photoinitiator beim Einwirken von energiereicher aktinischer Strahlung ein Amin freisetzt oder/und bildet und dass das freigesetzte oder/und gebildete Amin die Reaktion zwischen mercaptoterminiertem Basispolymer mit Isocyanat-basiertem Härter katalysiert.

7. Verfahren nach mindestens einem der vorstehenden Ansprüche, **dadurch gekennzeichnet, dass** der Photoinitiator die Reaktion von Isocyanat mit Mercaptan auslöst oder/und beschleunigt, wenn die Mischung B einer energiereichen aktinischen Strahlung ausgesetzt wird.

8. Verfahren nach mindestens einem der vorstehenden Ansprüche, **dadurch gekennzeichnet, dass** die Grundmasse A, der Härter, die Mischung B oder/und die Dichtmasse mindestens ein Additiv ausgewählt aus der Gruppe bestehend aus Photosensibilisatoren, Füllstoffen, Leichtfüllstoffen, Thixotropiermitteln, Weichmachern, Haftvermittlern, Alterungsschutzmitteln, Wasserfängern, Flammschutzmitteln, Vernetzungsmitteln und organischen Lösemitteln enthält/enthalten.

9. Verfahren nach mindestens einem der vorstehenden Ansprüche, **dadurch gekennzeichnet, dass** beim Zusetzen von Füllstoffen und weiteren Additiven zu einer der Massen solche ausgewählt werden, die UV-Licht wenig oder nicht absorbieren.

10. Verfahren nach mindestens einem der vorstehenden Ansprüche, **dadurch gekennzeichnet, dass** eine katalytische Nachhärtung erfolgt.

11. Verfahren nach mindestens einem der vorstehenden Ansprüche, **dadurch gekennzeichnet, dass** ein Härter mit einem Gehalt an schwefelhaltigem Prepolymer mit einem Polymerrückgrat auf Basis von Polythioether, Polysulfid, Copolymeren mit einem Anteil von Polythioether oder/und Polysulfid oder/und deren Mischungen verwendet wird, wobei diese Prepolymere Isocyanat-terminiert sind.

12. Dichtmassen-System oder/und Dichtmasse aus einer ungehärteten Grundmasse A auf Basis Schwefel enthaltender Polymere und aus einem Härter mit einem Gehalt an Isocyanat zur Herstellung und Aushärtung einer Dichtmasse, **dadurch gekennzeichnet,**
**dass** die ungehärtete Grundmasse A ein mercaptoterminiertes Basispolymer auf Basis von Polyether, Polythioether, Polysulfid, deren Copolymeren oder/und deren Mischungen enthält,
**dass** die ungehärtete Grundmasse A, der Härter oder beide einen Photoinitiator enthalten, der beim Einwirken von energiereicher aktinischer Strahlung aktiviert wird und ein Amin-Radikal freisetzt, das nach Bildung einer Amin-Verbindung als Katalysator für die Härtung wirkt,
**dass** das als Härter verwendete Isocyanat der Mischung aus Grundmasse A und Härter, die zusammen die Mischung B bilden, eine durchschnittliche Funktionalität im Bereich von 1,5 bis 3,2 aufweist,
**dass** das mercaptoterminierte Basispolymer in der Grundmasse A einen Mercaptangehalt bezogen auf die reaktiven SH-Gruppen zum gesamten Basispolymer im Bereich von 0,8 bis 8 Gew.-% aufweist und
**dass** die Mischung B aus Grundmasse A und Härter, die zusammen die Mischung B bilden, ab dem Einwirken von energiereicher aktinischer Strahlung, dem Freisetzen eines Amin-Radikals und der Bildung einer Amin-Verbindung härten kann und ab Beginn des Härtens als Dichtmasse bezeichnet wird.

13. Dichtmassen-System, Grundmasse A, Mischung B oder/und Dichtmasse nach mindestens einem der vorstehenden Ansprüche, **dadurch gekennzeichnet, dass** sie als chemische Basis mindestens ein mercaptoterminiertes Polysulfid-Polymer aufweist.

14. Dichtmassen-System, Grundmasse A, Mischung B oder/und Dichtmasse nach mindestens einem der vorstehenden Ansprüche, **dadurch gekennzeichnet, dass** die Grundmasse A, die Mischung B oder/und die Dichtmasse mindestens ein Additiv ausgewählt aus der Gruppe bestehend aus Photosensibilisatoren, Füllstoffen, Leichtfüllstoffen, Thixotropiermitteln, Weichmachern, Haftvermittlern, Alterungsschutzmitteln, Wasserfängern, Flammschutzmitteln, Vernetzungsmitteln und organischen Lösemitteln enthält/enthalten.

15. Dichtmassen-System, ungehärtete Grundmasse A, Mischung B oder/und Dichtmasse nach mindestens einem der vorstehenden Ansprüche 12 bis 14, **dadurch gekennzeichnet, dass** sie als Füllstoff Magnesiumsilicathydrat, Aluminiumsilicat, Aluminiumhydroxid oder/und Calciumsilicat enthält.

16. Dichtmassen-System, ungehärtete Mischung B oder/und Dichtmasse nach mindestens einem der Ansprüche 12 bis 15, **dadurch gekennzeichnet, dass** sie eine Verarbeitungszeit entsprechend DIN 65262-1 im Bereich von 0,5 bis 12 Stunden aufweist.

17. Dichtmassen-System, ungehärtete Grundmasse A oder/und Mischung B nach mindestens einem der Ansprüche 12 bis 16, **dadurch gekennzeichnet, dass** es/sie/er mindestens einen Photoinitiator enthält, der tertiäres Amin freisetzt oder/und bildet und dass das freigesetzte oder/und gebildete Amin die Härtung mit einem Isocyanat enthaltenden Härter katalysiert.

18. Dichtmassen-System, ungehärtete Grundmasse A oder/und Mischung B nach Anspruch 17, **dadurch gekennzeichnet, dass** es/sie/er mindestens einen Photoinitiator aus der Gruppe der α-Aminoketone enthält.

19. Dichtmassen-System, Mischung B oder/und Dichtmasse nach mindestens einem der Ansprüche 12 bis 18 oder/und ausgehärtet oder/und hergestellt nach einem Verfahren nach mindestens einem der Ansprüche 1 bis 11, **dadurch gekennzeichnet, dass** die Härtung der ungehärteten Mischung B durch Bestrahlen mit einer energiereichen aktinischen Strahlung gestartet oder/und beschleunigt ist/wurde.

20. Dichtmassen-System oder/und Dichtmasse nach mindestens einem der Ansprüche 12 bis 19 oder/und ausgehärtet oder/und hergestellt nach einem Verfahren nach mindestens einem der Ansprüche 1 bis 11, **dadurch gekennzeichnet, dass** sie eine klebfreie Zeit entsprechend DIN 65262-1 im Bereich von 0,05 bis 5 Minuten nach Beginn der energiereichen aktinischen Bestrahlung aufweist/aufwies.

21. Dichtmassen-System oder/und Dichtmasse nach mindestens einem der Ansprüche 12 bis 20 oder/und ausgehärtet oder/und hergestellt nach einem Verfahren nach mindestens einem der Ansprüche 1 bis 11, **dadurch gekennzeichnet, dass** sie eine Shore A-Härte von mindestens 10, gemessen 5 bis 600 Minuten nach Beginn der energiereichen aktinischen Bestrahlung, und eine Shore A-Härte im Bereich von 30 bis 60, gemessen 2 Wochen nach Beginn der energiereichen aktinischen Bestrahlung, aufweist.

22. Dichtmassen-System oder/und Dichtmasse nach mindestens einem der Ansprüche 12 bis 21 oder/und ausgehärtet oder/und hergestellt nach einem Verfahren nach mindestens einem der Ansprüche 1 bis 11, **dadurch gekennzeichnet, dass** sie nach vollständiger Aushärtung folgende Eigenschaften aufweist:
Keine Risse oder andere Fehlstellen in der Dichtmasse, die bei der Bestimmung der Tieftemperaturflexibilität durch ein Biegen in einem Winkel von 30° bei einer Temperatur von -55 ± 2 °C entstanden sind,
eine Zugfestigkeit im Bereich von 0,5 bis 2,8 MPa nach 168 Stunden Treibstofflagerung bei einer Temperatur von 60 °C, nach 300 Stunden Treibstofflagerung bei einer Temperatur von 100 °C oder/und nach 1000 Stunden Wasserlagerung bei einer Temperatur von 35°C,
eine Bruchdehnung im Bereich von 100 bis 800 % nach 168 Stunden Treibstofflagerung bei einer Temperatur von 60 °C, nach 300 Stunden Treibstofflagerung bei einer Temperatur von 100 °C und nach 1000 Stunden Wasserlagerung bei einer Temperatur von 35 °C oder/und
eine Dichte im Bereich von 1,00 bis 1,45 g/cm³.

23. Dichtmassen-System oder/und Dichtmasse nach mindestens einem der Ansprüche 12 bis 22 oder/und ausgehärtet oder/und hergestellt nach einem Verfahren nach mindestens einem der Ansprüche 1 bis 11, **dadurch gekennzeichnet, dass** sie nach vollständiger Aushärtung folgende Eigenschaften aufweisen:
Eine Zugfestigkeit im Bereich von 0,5 bis 3 MPa,
eine Bruchdehnung im Bereich von 100 bis 900 % oder/und einen Schälwiderstand im Bereich von 50 bis 300 N/25mm.

24. Luftfahrzeug enthaltend Komponenten, die mit einem Dichtmassen-System oder/und mit einer Dichtmasse nach mindestens einem der Ansprüche 12 bis 23 oder/und nach einem Verfahren nach mindestens einem der Ansprüche 1 bis 11 beschichtet oder/und abgedichtet sind.

25. Verwendung eines Dichtmassen-Systems, einer Grundmasse A, einer Mischung B oder/und einer Dichtmasse nach mindestens einem der Ansprüche 12 bis 24 oder/und ausgehärtet oder/und hergestellt nach mindestens einem der Ansprüche 1 bis 11 für den Bau und für die Instandhaltung von Luft- und Raumfahrzeugen, von Automobilien und Schienenfahrzeugen, im Schiffsbau, im Apparate- und Maschinenbau, im Bauwesen sowie als Gießharz oder für die Herstellung von Gießharzen für die Elektrotechnik und Elektronik.

26. Verwendung des Verfahrens nach einem der Ansprüche 1 bis 11 in der Transportindustrie wie z.B. im Automobilbau, im Schienenfahrzeugbau, im Schiffsbau, im Luftfahrzeugbau oder im Raumfahrzeugbau, im Apparate- und Maschinenbau, im Bauwesen oder für die Herstellung von Möbeln.

## Claims

1. A method for coating a substrate with a mixture B or with the curing sealant formed therefrom, wherein the mixture B and the sealant contain sulphur-containing polymers, **characterised**
**in that** the mixture B is an uncured mixture consisting of a matrix A and a curing agent having a content of isocyanate,
**in that** the matrix A is uncured and contains a mercapto-terminated base polymer based on polythioether, polysulphide, the copolymers thereof or/and the mixtures thereof,
**in that** the uncured matrix A, the curing agent or both contain at least one photoinitiator based on α-aminoketone,
**in that** the isocyanate of mixture B that is used as the curing agent has an average functionality in the range of 1.5 to 3.2,
**in that** the mercapto-terminated base polymer in the matrix A has a mercaptan content, relative to the reactive SH-groups with respect to the total base polymer, in the range of 0.8 to 8 % by weight,
**in that** at least one photoinitiator in the event of action by high-energy actinic radiation splits off at least one radical per molecule based on tertiary amine, from which in particular as a result of H-absorption an active catalyst is formed that acts as a catalyst for curing the sealant, and
**in that** the mixture B cures with effect from the action by high-energy actinic radiation in the temperature range of -10 to +70°C, wherein it is referred to as a sealant with effect from the start of curing.

2. A method according to claim 1, **characterised in that** the curing takes place on command, **in that** the mixture B starts to cure to a greater extent as a result of high-energy actinic radiation only on command, and **in that** the curing takes place so quickly that a tack-free surface of the sealant is achieved in a tack-free time of 0.05 to 5 minutes with effect from the start of curing.

3. A method according to claim 1 or 2, **characterised in that** at least one photoinitiator is an α-aminoketone with one, two or three tertiary amino groups.

4. A method according to at least one of the preceding claims, **characterised in that** the curing of the sealant takes place with at least one isocyanate-based compound.

5. A method according to claim 4, **characterised in that** as the isocyanate-based compound at least one is selected from aliphatic, cycloaliphatic or/and aromatic isocyanate based on monofunctional, difunctional or/and trifunctional monomeric isocyanate, based on monofunctional, difunctional or/and trifunctional oligomeric or/and polymeric isocyanate or/and based on monofunctional, difunctional or/and trifunctional isocyanate prepolymers.

6. A method according to at least one of the preceding claims, **characterised in that** the Photoinitiator releases or/and forms an amine in the event of action by high-energy actinic radiation, and **in that** the amine that is released or/and formed catalyses the reaction between mercapto-terminated base polymer and isocyanate-based curing agent.

7. A method according to at least one of the preceding claims, **characterised in that** the photoinitiator triggers or/and accelerates the reaction of isocyanate with mercaptan when the mixture B is exposed to high-energy actinic radiation.

8. A method according to at least one of the preceding claims, **characterised in that** the matrix A, the curing agent, the mixture B or/and the sealant contains/contain at least one additive selected from the group consisting of photosensitizers, fillers, lightweight fillers, thixotropic agents, plasticizers, adhesion-promoters, anti-ageing agents, water-scavengers, flame-retardants, cross-linking agents and organic solvents.

9. A method according to at least one of the preceding claims, **characterised in that** when adding fillers and further additives to one of the compositions those that absorb little or no UV light are selected.

10. A method according to at least one of the preceding claims, **characterised in that** catalytic secondary curing takes place.

11. A method according to at least one of the preceding claims, **characterised in that** a curing agent having a content of sulphur-containing prepolymer with a polymer backbone based on polythioether, polysulphide, copolymers with a content of polythioether or/and polysulphide or/and mixtures thereof is used, wherein these prepolymers are isocyanate-terminated.

12. A sealant system or/and sealant consisting of an uncured matrix A based on sulphur-containing polymers and of a curing agent having an amount of isocyanate for the production and curing of a sealant, **characterised**
**in that** the uncured matrix A contains a mercapto-terminated base polymer based on polyether, polythioether, polysulphide, the copolymers thereof or/and the mixtures thereof,
**in that** the uncured matrix A, the curing agent or both contain a photoinitiator which is activated in the event of action by high-energy actinic radiation and releases an amine radical which, after formation of an amine compound, acts as a catalyst for the curing,
**in that** the isocyanate used as the curing agent of the mixture of matrix A and curing agent, which together form the mixture B, has an average functionality in the range of 1.5 to 3.2,
**in that** the mercapto-terminated base polymer in the matrix A has a mercaptan content, relative to the reactive SH-groups with respect to the total base polymer, in the range of 0.8 to 8 % by weight, and
**in that** the mixture B of matrix A and curing agent, which together form the mixture B, can cure with effect from the action of high-energy actinic radiation, the release of an amine radical and the formation of an amine compound, and is referred to as a sealant with effect from the start of the curing.

13. A sealant system, matrix A, mixture B or/and sealant according to at least one of the preceding claims, **characterised in that** it has at least one mercapto-terminated polysulphide polymer as the chemical basis.

14. A sealant system, matrix A, mixture B or/and sealant according to at least one of the preceding claims, **characterised in that** the matrix A, the mixture B or/and the sealant contains/contain at least one additive selected from the group consisting of photosensitizers, fillers, lightweight fillers, thixotropic agents, plasticizers, adhesion-promoters, anti-ageing agents, water-scavengers, flame-retardants, cross-linking agents and organic solvents.

15. A sealant system, uncured matrix A, mixture B or/and sealant according to at least one of the preceding claims 12 to 14, **characterised in that** it contains as a filler magnesium silicate hydrate, aluminium silicate, aluminium hydroxide or/and calcium silicate.

16. A sealant system, uncured mixture B or/and sealant according to at least one of claims 12 to 15, **characterised in that** it has a processing time in accordance with DIN 65262-1 in the range of 0.5 to 12 hours.

17. A sealant system, uncured matrix A or/and mixture B according to at least one of claims 12 to 16, **characterised in that** it contains at least one photoinitiator which releases or/and forms tertiary amine, and **in that** the released or/and formed amine catalyses the curing with a curing agent that contains isocyanate.

18. A sealant system, uncured matrix A or/and mixture B according to claim 17, **characterised in that** it contains at least one photoinitiator from the group of α-aminoketones.

19. A sealant system, mixture B or/and sealant according to at least one of claims 12 to 18 or/and cured or/and produced according to a method according to at least one of claims 1 to 11, **characterised in that** the curing of the uncured mixture B is/was started or/and accelerated by irradiation with high-energy actinic radiation.

20. A sealant system or/and sealant according to at least one of claims 12 to 19 or/and cured or/and produced according to a method according to at least one of claims 1 to 11, **characterised in that** it has/had a tack-free time in accordance with DIN 65262-1 in the range of 0.05 to 5 minutes after the start of the high-energy actinic irradiation.

21. A sealant system or/and sealant according to at least one of claims 12 to 20 or/and cured or/and produced according to a method according to at least one of claims 1 to 11, **characterised in that** it has a Shore A hardness of at least 10 measured 5 to 600 minutes after the start of the high-energy actinic irradiation and a Shore A hardness in the range of 30 to 60 measured 2 weeks after the start of the high-energy actinic irradiation.

22. A sealant system or/and sealant according to at least one of claims 12 to 21 or/and cured or/and produced according to a method according to at least one of claims 1 to 11, **characterised in that** after complete curing it has the following properties:
no cracks or other defects in the sealant that have arisen during determination of the low-temperature flexibility by bending at an angle of 30° at a temperature of -55 ± 2°C,
a tensile strength in the range of 0.5 to 2.8 MPa after 168 hours of storage in a fuel at a temperature of 60°C, after 300 hours of storage in a fuel at a temperature of 100°C or/and after 1000 hours of storage in water at a temperature of 35°C,
an elongation at break in the range of 100 to 800 % after 168 hours of storage in a fuel at a temperature of 60°C, after 300 hours of storage in a fuel at a temperature of 100°C and after 1000 hours of storage in water at a temperature of 35°C, or/and
a density in the range of 1.00 to 1.45 g/cm³.

23. A sealant system or/and sealant according to at least one of claims 12 to 22 or/and cured or/and produced according to a method according to at least one of claims 1 to 11, **characterised in that** after complete curing they have the following properties:
a tensile strength in the range of 0.5 to 3 MPa,
an elongation at break in the range of 100 to 900 %, or/and
a resistance to peeling in the range of 50 to 300 N/25mm.

24. An aircraft containing components that are coated or/and sealed with a sealant system or/and with a sealant according to at least one of claims 12 to 23 or/and according to a method according to at least one of claims 1 to 11.

25. Use of a sealant system, a matrix A, a mixture B or/and a sealant according to at least one of claims 12 to 24 or/and cured or/and produced according to at least one of claims 1 to 11 for the construction and for the maintenance of aircraft and spacecraft, of automobiles and rail vehicles, in shipbuilding, in apparatus and machine construction, in the building industry and also as a casting resin or for the production of casting resins for electrotechnology and electronics.

26. Use of the method according to one of claims 1 to 11 in the transport industry, such as, for example, in automobile construction, in rail-vehicle construction, in shipbuilding, in aircraft construction or in spacecraft construction, in apparatus and machine construction, in the building industry or for the production of furniture.

## Revendications

1. Procédé de revêtement d'un substrat avec un mélange B, ou avec une masse à étancher en train de durcir, formée à partir d'un tel mélange, dans lequel le mélange B ou la masse à étancher contient des polymères soufrés, **caractérisé en ce que** :
- le mélange B est un mélange non durci, formé d'une masse de base A et d'un durcisseur qui contient un isocyanate,
- la masse de base A n'est pas durcie et contient un polymère de base à groupes terminaux sulfhydryle et à base de polythioéther, de polysulfure, de leurs copolymères et/ou de leurs mélanges,
- la masse de base A non durcie ou le durcisseur, ou les deux, contient ou contiennent au moins un photo-amorceur à base d'α-amino-cétone,
- l'isocyanate utilisé comme durcisseur dans le mélange B présente une fonctionnalité moyenne de 1,5 à 3,2,
- le polymère de base à groupes terminaux sulfhydryle de la masse de base A présente une teneur en mercaptan, exprimée en groupes sulfhydryle (SH) réactifs et rapportée au polymère de base entier, de 0,8 à 8 % en poids,
- au moins un photo-amorceur, sous l'influence d'un rayonnement actinique de haute énergie, émet par scission au moins un radical libre par molécule à fonction amine tertiaire, à partir duquel se forme, en particulier par capture d'un atome d'hydrogène, un catalyseur actif qui agit comme catalyseur dans le durcissement de la masse à étancher,
- et le mélange B, du fait de l'influence du rayonnement actinique de haute énergie, durcit dans la plage de températures allant de -10 à +70 °C, étant entendu qu'il est qualifié de masse à étancher dès qu'il commence à durcir.

2. Procédé conforme à la revendication 1, **caractérisé en ce que** le durcissement se produit sur commande, à savoir que ce n'est que sur commandement donné au moyen du rayonnement actinique de haute énergie. que le mélange B commence à durcir relativement fortement, et **en ce qu'**il se produit si vite que l'on obtient une masse à étancher dont la surface n'est plus collante au bout d'un laps de temps (temps hors poisse) de 0,05 à 5 minutes à compter du début du durcissement.

3. Procédé conforme à la revendication 1 ou 2, **caractérisé en ce qu'**au moins un photo-amorceur est une α-amino-cétone comportant un, deux ou trois groupes amino tertiaires.

4. Procédé conforme à l'une au moins des revendications précédentes, **caractérisé en ce que** le durcissement de la masse à étancher s'effectue avec au moins un composé à base d'isocyanate.

5. Procédé conforme à la revendication 4, **caractérisé en ce que** l'on choisit, comme composé à base d'isocyanate, au moins l'un des isocyanates aliphatiques, cycloaliphatiques et/ou aromatiques à base d'isocyanates monomères mono fonctionnels, difonctionnels et/ou trifonctionnels, à base d'isocyanates oligomères et/ou polymères mono-fonctionnels, difonctionnels et/ou trifonctionnels, et/ou à base de prépolymères d'isocyanates monofonctionnels, difonctionnels et/ou trifonctionnels.

6. Procédé conforme à l'une au moins des revendications précédentes, **caractérisé en ce que** le photo-amorceur, sous l'influence du rayonnement actinique de haute énergie, libère et/ou forme une amine, et **en ce que** cette amine libérée et/ou formée catalyse la réaction entre le polymère de base à groupes terminaux sulfhydryle et le durcisseur à base d'isocyanate.

7. Procédé conforme à l'une au moins des revendications précédentes, **caractérisé en ce que** le photo-amorceur déclenche et/ou accélère la réaction entre isocyanate et thiol quand le mélange B est exposé à un rayonnement actinique de haute énergie.

8. Procédé conforme à l'une au moins des revendications précédentes, **caractérisé en ce que** la masse de base A, le durcisseur, le mélange B et/ou la masse à étancher contient ou contiennent au moins un adjuvant choisi dans l'ensemble formé par les photosensibilisateurs, charges, charges légères, agents de thixotropie, plastifiants, agents d'adhérence, agents de protection contre le vieillissement, agents hydro-absorbants, agents ignifugeants, agents de réticulation et solvants organiques.

9. Procédé conforme à l'une au moins des revendications précédentes, **caractérisé en ce que**, lorsqu'on ajoute des charges et autres adjuvants à l'une des masses, on choisit de ceux qui absorbent peu le rayonnement UV ou qui ne l'absorbent pas.

10. Procédé conforme à l'une au moins des revendications précédentes, **caractérisé en ce qu'**a lieu un post-durcissement catalytique.

11. Procédé conforme à l'une au moins des revendications précédentes, **caractérisé en ce que** l'on utilise un durcisseur contenant une certaine quantité de prépolymère soufré dont le squelette de polymère est à base de polythioéther ou de polysulfure, à base de copolymère comportant une partie polythioéther et/ou polysulfure, et/ou à base de mélanges de tels polymères, étant entendu que ces prépolymères portent des groupes terminaux isocyanate.

12. Système de masses à étancher et/ou masse à étancher, constituée(s) d'une masse de base A non durcie, à base de polymères soufrés, et d'un durcisseur, contenant une certaine quantité d'isocyanate, pour préparation et durcissement d'une masse à étancher, caractérisé(e) en ce que :
- la masse de base A non durcie contient un polymère de base à groupes terminaux sulfhydryle et à base de polythioéther, de polysulfure, de leurs copolymères et/ou de leurs mélanges,
- la masse de base A non durcie ou le durcisseur, ou les deux, contient ou contiennent au moins un photo-amorceur qui, sous l'influence d'un rayonnement actinique de haute énergie, est activé et libère un radical libre d'amine qui, après formation d'un composé de type amine, agit comme catalyseur de durcissement,
- l'isocyanate utilisé comme durcisseur dans le mélange de la masse de base A et du durcisseur, lesquels forment ensemble le mélange B, présente une fonctionnalité moyenne de 1,5 à 3,2,
- le polymère de base à groupes terminaux sulfhydryle de la masse de base A présente une teneur en mercaptan, exprimée en groupes sulfhydryle (SH) réactifs et rapportée au polymère de base entier, de 0,8 à 8 % en poids,
- et le mélange B de la masse de base A et du durcisseur, qui forment ensemble le mélange B, peut durcir, du fait de l'influence du rayonnement actinique de haute énergie, de la libération d'un radical libre d'amine et de la formation d'un composé de type amine, et il est qualifié de masse à étancher dès qu'il commence à durcir.

13. Système de masses à étancher, masse de base A, mélange B et/ou masse à étancher, conforme à l'une au moins des revendications précédentes, **caractérisé en ce qu'**il ou elle comporte, en tant que base chimique, au moins un polymère de type polysulfure à groupes terminaux sulfhydryle.

14. Système de masses à étancher, masse de base A, mélange B et/ou masse à étancher, conforme à l'une au moins des revendications précédentes, **caractérisé en ce que** la masse de base A, le mélange B et/ou la masse à étancher contient ou contiennent au moins un adjuvant choisi dans l'ensemble formé par les photosensibilisateurs, charges, charges légères, agents de thixotropie, plastifiants, agents d'adhérence, agents de protection contre le vieillissement, agents hydro-absorbants, agents ignifugeants, agents de réticulation et solvants organiques.

15. Système de masses à étancher, masse de base A non durcie, mélange B et/ou masse à étancher, conforme à l'une au moins des revendications 12 à 14 précédentes, **caractérisé en ce qu'**il ou elle contient, en tant que charge, un silicate de magnésium hydraté, un silicate d'aluminium, un hydroxyde d'aluminium et/ou un silicate de calcium.

16. Système de masses à étancher, mélange B non durci et/ou masse à étancher, conforme à l'une au moins des revendications 12 à 15, **caractérisé en ce qu'**il ou elle offre un temps de façonnage, mesuré selon la norme DIN 65262-1, de 0,5 à 12 heures.

17. Système de masses à étancher, masse de base A non durcie et/ou mélange B, conforme à l'une au moins des revendications 12 à 16, **caractérisé en ce qu'**il ou elle contient au moins un photo-amorceur qui libère et/ou forme une amine tertiaire, et **en ce que** cette amine libérée et/ou formée catalyse le durcissement réalisé avec un durcisseur contenant un isocyanate.

18. Système de masses à étancher, masse de base A non durcie et/ou mélange B, conforme à la revendication 17, **caractérisé en ce qu'**il ou elle contient au moins un photo-amorceur issu du groupe des α-amino-cétones.

19. Système de masses à étancher, mélange B et/ou masse à étancher, conforme à l'une au moins des revendications 12 à 18, et/ou durci et/ou préparé selon un procédé conforme à l'une au moins des revendications 1 à 11, **caractérisé en ce que** le durcissement du mélange B non durci est ou a été déclenche et/ou accéléré par irradiation avec un rayonnement actinique de haute énergie.

20. Système de masses à étancher et/ou masse à étancher, conforme à l'une au moins des revendications 12 à 19, et/ou durci et/ou préparé selon un procédé conforme à l'une au moins des revendications 1 à 11, **caractérisé en ce qu'**il ou elle présente ou présentait un temps hors poisse, mesuré selon la norme DIN 65262-1, de 0,05 à 5 minutes à compter du début de l'irradiation avec un rayonnement actinique de haute énergie.

21. Système de masses à étancher, et/ou masse à étancher, conforme à l'une au moins des revendications 12 à 20, et/ou durci et/ou préparé selon un procédé conforme à l'une au moins des revendications 1 à 11, **caractérisé en ce qu'**il ou elle présente, 5 à 600 minutes après le début de l'irradiation avec un rayonnement actinique de haute énergie, une dureté Shore A d'au moins 10, et deux semaines après le début de l'irradiation avec un rayonnement actinique de haute énergie, une dureté Shore A de 30 à 60.

22. Système de masses à étancher et/ou masse à étancher, conforme à l'une au moins des revendications 12 à 21, et/ou durci et/ou préparé selon un procédé conforme à l'une au moins des revendications 1 à 11, **caractérisé en ce qu'**il ou elle présente, après durcissement complet, les propriétés suivantes :
- lors de la détermination de la flexibilité à basse température par flexion à 30° d'angle à une température de -55 ± 2 °C, il ne se forme pas de fissures ou d'autres défauts dans la masse à étancher ;
- une résistance à la traction de 0,5 à 2,8 MPa après 168 heures de stockage de carburant à la température de 60 °C, après 300 heures de stockage de carburant à la température de 100 °C, et/ou après 1000 heures de stockage d'eau à la température de 35 °C ;
- un allongement à la rupture de 100 à 800 % après 168 heures de stockage de carburant à la température de 60 °C, après 300 heures de stockage de carburant à la température de 100 °C, et/ou après 1000 heures de stockage d'eau à la température de 35 °C ;
- et une masse volumique de 1,00 à 1,45 g/cm³.

23. Système de masses à étancher et/ou masse à étancher, conforme à l'une au moins des revendications 12 à 22, et/ou durci et/ou préparé selon un procédé conforme à l'une au moins des revendications 1 à 11, **caractérisé en ce qu'**il ou elle présente, après durcissement complet, les propriétés suivantes :
- une résistance à la traction de 0,5 à 3 MPa,
- un allongement à la rupture de 100 à 900 %,
- et une résistance au pelage de 50 à 300 N/25 mm.

24. Véhicule aérien comportant des composants qui sont revêtus et/ou étanchés avec un système de masses à étancher et/ou une masse à étancher, conforme à l'une au moins des revendications 12 à 23, et/ou selon un procédé conforme à l'une au moins des revendications 1 à 11.

25. Utilisation d'un système de masses à étancher, d'une masse de base A, d'un mélange B et/ou d'une masse à étancher, conforme à l'une au moins des revendications 12 à 24, et/ou durci et/ou préparé conformément à l'une au moins des revendications 1 à 11, pour la construction et pour l'entretien de véhicules aériens ou spatiaux, d'automobiles ou de véhicules circulant sur rails, dans la construction de navires, dans la fabrication d'appareils ou de machines, dans la construction de bâtiments, ainsi qu'en tant que résine de coulée ou pour la préparation de résines de coulée pour l'électrotechnique ou l'électronique.

26. Utilisation d'un procédé conforme à l'une des revendicatrions 1 à 11 dans l'industrie des transports, par exemple dans la construction d'automobiles, dans la construction de véhicules circulant sur rails, dans la construction de navires, dans la construction de véhicules aériens ou dans la construction de véhicules spatiaux, dans la fabrication d'appareils ou de machines, dans la construction de bâtiments, ou dans la fabrication de meubles.
